# EUROPÄISCHE PATENTSCHRIFT

(11) **EP 1 504 202 B1**
(45) Veröffentlichungstag und Bekanntmachung des Hinweises auf die Patenterteilung: **26.10.2005**
(21) Anmeldenummer: 03732308.6
(22) Anmeldetag: 02.05.2003
(51) Int. Cl.: F16H 3/66

(54) **MEHRSTUFENGETRIEBE**
MULTI-STAGE TRANSMISSION
BOITE DE VITESSES MULTI-ETAGEE

(30) Priorität: 11.05.2002 DE 10221095
(43) Veröffentlichungstag der Anmeldung: 09.02.2005
(73) Patentinhaber: ZF FRIEDRICHSHAFEN AG, 88038 Friedrichshafen (DE)
(72) Erfinder: ZIEMER, Peter, 88069 Tettnang (DE); TIESLER, Peter, 88074 Meckenbeuren (DE); GIERLING, Armin, 88085 Langenargen (DE)
(86) Internationale Anmeldenummer: PCT/EP2003/004649
(87) Internationale Veröffentlichungsnummer: WO 2003/095865

(56) Entgegenhaltungen:
- DE-A- 10 115 983
- DE-A- 10 115 987
- US-A- 3 941 013
- US-A- 5 106 352
- TENBERGE P: "E-AUTOMAT AUTOMATIKGETRIEBE MIT ESPRIT" VDI BERICHTE, DUESSELDORF, DE, Nr. 1610, 2001, Seiten 455-479, XP008010754 ISSN: 0083-5560 in der Anmeldung erwähnt

## Beschreibung

Die vorliegende Erfindung betrifft ein Mehrstufengetriebe nach dem Oberbegriff des Patentanspruchs 1.

In der US 5,106,352 A sind mehrere Getriebeschemata für Automatgetriebe mit einem nicht schaltbaren Vorschalt-Radsatz und einem schaltbaren Haupt-Radsatz bekannt, bei dem durch selektives Schließen von fünf Schaltelementen insgesamt sechs Vorwärtsgänge ohne Gruppenschaltung schaltbar sind. Der Haupt-Radsatz ist dabei als schaltbares Zweisteg-Vierwellen-Getriebe mit zwei gekoppelten Planetenradsätzen ausgebildet. Der nicht schaltbare Vorschalt-Radsatz kann als Einsteg-Planetengetriebe oder als Vorgelege-Getriebe mit zwei Stirnradpaaren unterschiedlicher fester Übersetzung ausgebildet sein und arbeitet stets als Reduziergetriebe. Ein Element des Vorschalt-Radsatzes ist fest mit dem Getriebegehäuse verbunden. Der Vorschalt-Radsatz wird mit der Eingangsdrehzahl des Getriebes angetrieben und erzeugt eine reduzierte Ausgangsdrehzahl, die über zwei Schaltelemente auf zwei verschiedene Elemente des Haupt-Radsatzes übertragbar ist. Zusätzlich ist ein drittes Element des Hauptradsatzes über eine weitere Kupplung direkt mit der Getriebeeingangsdrehzahl antreibbar.

Ein nach dem Planetenradsatzkonzept der US 5,106,352 A ausgeführtes 6-Gang-Automatgetriebe 6HP26 der Anmelderin ist in der gattungsgemäßen T. Tenberge: Tenberge: E-Automat - Automatgetriebe mit Esprit, VDI-Berichte Nr. 1610, 2001, S.455-479 beschrieben. Auf Basis dieses Getriebes schlägt Tenberge vor, das Sonnenrad des ursprünglich nicht schaltbaren Vorschalt-Planetenradsatzes über eine zusätzliche Bremse schaltbar auszubilden. Dabei ist der nunmehr schaltbare Vorschalt-Planetenradsatz unverändert als sogenanntes Minus-Getriebe ausgebildet, dessen Hohlrad mit der Getriebe-Eingangsdrehzahl angetrieben wird und dessen Steg sein Ausgangselement bildet. Unter Minus-Getriebe ist dabei ein einfaches Planetengetriebe mit negativer Standgetriebe-Übersetzung zu verstehen; das Verhältnis der Drehzahlen von Hohlrad und Sonnenrad ist bei stillstehend gedachtem Steg also negativ. Die zusätzliche Bremse ist auch als im Getriebe integriertes Anfahr-Schaltelement nutzbar. Bei entsprechender Verzahnungsauslegung können auch sieben Vorwärtsgänge vorgesehen sein mit zum Basisgetriebe vergleichbarer Spreizung, jedoch ungünstigerer Gangabstufung.

Aus der US 3,941,013 A schließlich ist ein Getriebeschema eines Automatgetriebes mit sechs Vorwärtsgängen bekannt, welches einen als Einsteg-Planetengetriebe ausgebildeten schaltbaren Vorschalt-Radsatz und einen aus zwei gekoppelten Einsteg-Planetengetrieben bestehenden schaltbaren Haupt-Radsatz aufweist. Zwei der drei Eingangs-Elemente des Hauptradsatzes sind dabei fest miteinander verbunden. Der Vorschalt-Radsatz ist als sogenanntes Plus-Getriebe ausgebildet mit Doppelplaneten, deren Stege miteinander verbunden sind, und arbeitet bis auf den Betrieb im sechsten Gang, in dem er als Block umläuft, als Reduziergetriebe. Unter Plus-Getriebe ist dabei ein einfaches Planetengetriebe mit positiver Standgetriebe-Übersetzung zu verstehen; das Verhältnis der Drehzahlen von Hohlrad und Sonnenrad ist bei stillstehend gedachtem Steg also positiv. Das Sonnenrad des Vorschalt-Radsatzes ist über eine Bremse am Getriebegehäuse festsetzbar. Diese Bremse ist räumlich zwischen dem Vorschalt-Radsatz und dem Haupt-Radsatz angeordnet. Angetrieben wird der Vorschalt-Radsatz mit der Getriebe-Eingangsdrehzahl über seine gekoppelten Stege, sein Abtrieb erfolgt über sein Hohlrad. Die Ausgangsdrehzahl des Vorschalt-Radsatzes ist über zwei Kupplungen auf zwei verschiedene Eingangs-Elemente der Haupt-Radsatzes übertragbar, wobei eines dieser beiden Eingangs-Elemente des Haupt-Radsatzes zusätzlich über eine weitere Kupplung direkt mit der Getriebe-Eingangsdrehzahl beaufschlagbar ist. Diese weitere Kupplung ist auf der dem Haupt-Radsatz abgewandten Seite des Vorschalt-Radsatzes angeordnet. Aufgrund der räumlichen Anordnung der Bremse, über welche das Sonnenrad des Vorschalt-Radsatzes festsetzbar ist, und der räumlichen Anordnung der Kupplung, über welche die Getriebe-Eingangsdrehzahl auf den Haupt-Radsatz übertragbar ist, ergibt sich eine konstruktiv aufwendige Führung von Antrieb und Abtrieb des Vorschalt-Radsatzes. So muß der Antrieb des Vorschalt-Radsatzes radial außen über dessen Hohlrad geführt werden, d.h. der Antrieb des Vorschalt-Radsatzes umgreift den Vorschalt-Radsatz komplett. Weiterhin muß der Abtrieb des Vorschalt-Radsatzes zentrisch durch das Sonnenrad des Vorschalt-Radsatzes hindurch zu den als Außenlamellenträger ausgebildeten Eingangselementen der beiden Kupplungen geführt werden. Das Radsatzkonzept der US 3,941,013 A bedingt zudem mehrere Gruppenschaltungen für die Schaltung der sechs Vorwärtsgänge.

Die Aufgabe der Erfindung besteht nun darin, ausgehend vom genannten Stand der Technik ein Mehrstufengetriebe mit mindestens sechs ohne Gruppenschaltung schaltbaren Vorwärtsgängen weiter zu entwickeln, wobei ein Schaltelement des Mehrstufengetriebes als integriertes Anfahr-Schaltelement einsetzbar sein soll, bei geringem Bauaufwand, günstiger Gangabstufung und vergrößerter Spreizung.

Diese Aufgabe wird durch ein Mehrstufengetriebe mit den Merkmalen des Hauptanspruchs gelöst. Vorteilhafte Ausgestaltungen und Weiterbildungen ergeben sich aus den Unteransprüchen.

Ausgehend vom gattungsgemäßen Stand der Technik der Veröffentlichung von Tenberge, weist das Mehrstufengetriebe einen schaltbaren Vorschalt-Planetenradsatz auf sowie einen mehrgliedrigen schaltbaren Haupt-Planetenradsatz, der beispielsweise als Zweisteg-Vierwellen-Planetengetriebe ausgebildet ist. Der Haupt-Planetenradsatz umfaßt mindestens drei voneinander unabhängige Eingangs-Elemente. Ein Eingangselement des Haupt-Planetenradsatzes ist dabei über ein Schaltelement mit einer Getriebe-Eingangswelle verbindbar. Die anderen beiden Eingangselemente des Haupt-Planetenradsatzes sind über jeweils ein weiteres Schaltelement mit einem Ausgangselement des Vorschalt-Planetenradsatzes verbindbar.

Im Unterschied zum Stand der Technik der US 3,941,013 kann also das Eingangselement des Haupt-Planetenradsatzes, welches mit der Getriebe-Eingangswelle verbindbar ist, nie mit dem Ausgangselement des Vorschalt-Planetenradsatzes verbunden werden.

Im Unterschied zu dem von Tenberge vorgeschlagenen gattungsgemäßen Getriebeschema ist der Vorschalt-Planetenradsatz erfindungsgemäß als schaltbares Plus-Getriebe mit positiver Standgetriebe-Übersetzung ausgebildet, mit Doppelplaneten, deren Stege miteinander verbunden sind. Ein Element des Vorschalt-Planetenradsatzes ist über eine Bremse am Getriebegehäuse oder an einer fest mit dem Getriebegehäuse verbundenen Welle bzw. Nabe festsetzbar. Diese Bremse ist vorzugsweise auf der dem Haupt-Planetenradsatz abgewandten Seite des Vorschalt-Planetenradsatzes angeordnet.

Durch eine entsprechende Schaltungslogik von insgesamt sechs Schaltelementen sind mindestens sechs Vorwärtsgänge ohne Gruppenschaltung schaltbar. Bei einer Umschaltung von einem Gang in den nächstfolgend höheren oder nächstfolgend niedrigeren Gang wird also von den gerade betätigten Schaltelementen jeweils nur ein Schaltelement geöffnet und ein weiteres Schaltelement geschlossen.

Die Bremse, über die ein Element des Vorschalt-Planetenradsatzes festsetzbar ist, kann als Anfahr-Schaltelement des Getriebes vorgesehen sein, wodurch ein zusätzliches Anfahrelement, beispielsweise ein hydrodynamischer Drehmomentwandler, nicht mehr erforderlich ist. Eine Anordnung der Bremse auf großem Durchmesser ermöglicht in vorteilhafter Weise eine hohe Drehmoment-Übertragungsfähigkeit trotz geringem axialen Bauraumbedarf. Selbstverständlich kann das erfindungsgemäße Mehrstufengetriebe aber auch mit anderen separaten Anfahrelementen beliebiger Ausführung kombiniert werden.

Die Ausbildung des Vorschalt-Planetenradsatzes als schaltbares Plus-Getriebe ermöglicht in vorteilhafter Weise eine gegenüber dem gattungsgemäßen Stand der Technik vergrößerte Spreizung, bei unverändert günstiger Gangabstufung.

Die räumliche Anordnung der Bremse, über die ein Element des Vorschalt-Planetenradsatzes festsetzbar ist, auf der dem Haupt-Planetenradsatz abgewandten Seite des Vorschalt-Planetenradsatzes ermöglicht eine konstruktiv einfache und bauraumsparende Verschachtelung der Bauteile. So kann beispielsweise der rotierende Lamellenträger dieser Bremse unmittelbar auf einem Vorsprung einer bereits vorhandene Getriebegehäusewand bzw. auf einer mit der bereits vorhandenen Getriebegehäusewand verbundenen Nabe gelagert werden. Die Druckmittelzufuhr der Bremse kann in einfacher Weise in diesem Vorsprung bzw. dieser Nabe oder auch unmittelbar in der Getriebegehäusewand integriert werden.

Ein weiterer wesentlicher wirtschaftlicher Vorteil ist die Möglichkeit, viele der bereits vorhandenen Fertigungseinrichtungen des Basisgetriebes, dem die erfindungsgemäße Weiterentwicklung zugrunde liegt, weiterhin verwenden zu können, da die erfindungsgemäßen Änderungen nur antriebsseitige Bauelemente des Getriebes betreffen.

In einer bevorzugten Ausgestaltung der Erfindung wird vorgeschlagen, den schaltbaren Vorschalt-Planetenradsatz über seine gekoppelten Stege mit der Getriebe-Eingangsdrehzahl anzutreiben und das Hohlrad des Vorschalt-Planetenradsatzes als Ausgangselement des Vorschalt-Planetenradsatzes mit den Eingangselementen der beiden Kupplungen, über welche die Ausgangsdrehzahlen des Vorschalt-Planetenradsatz auf den Haupt-Planetenradsatz übertragen werden können, zu verbinden. Bei dieser Ausgestaltung ist das Sonnenrad des Vorschalt-Planetenradsatzes festsetzbar.

In einer anderen Ausgestaltung der Erfindung wird vorgeschlagen, den schaltbaren Vorschalt-Planetenradsatz über sein Sonnenrad mit der Getriebe-Eingangsdrehzahl anzutreiben und sein Hohlrad als Ausgangselement des Vorschalt-Planetenradsatzes mit den Eingangselementen der beiden Kupplungen, über welche die Ausgangsdrehzahlen des Vorschalt-Planetenradsatz auf den Haupt-Planetenradsatz übertragen werden können, zu verbinden. Bei dieser Ausgestaltung sind die gekoppelten Stege des Vorschalt-Planetenradsatzes festsetzbar.

Der Haupt-Planetenradsatz kann beispielsweise als Ravigneaux-Radsatz ausgebildet sein, eine bekanntlich sehr kompakte Bauform eines Zweisteg-Vierwellen-Getriebes. Selbstverständlich kann der als Plus-Getriebe ausgebildete schaltbare Vorschalt-Planetenradsatz auch mit konstruktiv anderen Planetenradsatz-Kombinationen, die mindestens drei nicht miteinander gekoppelte Eingangs-Elemente aufweisen, kombiniert werden.

Im folgenden wird die Erfindung anhand der Zeichnungen Fig. 1 bis Fig. 34 näher erläutert.
Es zeigen:
- Fig. 1: ein beispielhaftes Getriebeschema einer ersten Vorschalt-Planetenradsatz-Variante;
- Fig. 2A, 2B: zwei Schaltschemata des Getriebes gemäß Fig. 1;
- Fig. 3: eine erste Bauteil-Anordnungs-Variante des Getriebes gemäß Fig. 1 (An- und Abtrieb koaxial);
- Fig. 4: eine Detailkonstruktion der Bauteilanordnung gemäß Fig. 3;
- Fig. 5: eine Ausführungs-Variante zur Detailkonstruktion gemäß Fig. 4;
- Fig. 6: eine zweite Bauteil-Anordnungs-Variante des Getriebes gemäß Fig. 1 (An- und Abtrieb koaxial);
- Fig. 7: eine Ausgestaltung der zweiten Bauteil-Anordnungs-Variante gemäß Fig. 6;
- Fig. 8: eine dritte Bauteil-Anordnungs-Variante des Getriebes gemäß Fig. 1 (An- und Abtrieb koaxial);
- Fig. 9: eine vierte Bauteil-Anordnungs-Variante des Getriebes gemäß Fig. 1 (An- und Abtrieb achsparallel);
- Fig. 10: eine fünfte Bauteil-Anordnungs-Variante des Getriebes gemäß Fig. 1 (An- und Abtrieb achsparallel);
- Fig. 11 + 12: eine erste und eine zweite Ausgestaltung der fünften Bauteil-Anordnungs-Variante gemäß Fig. 10;
- Fig. 13: eine sechste Bauteil-Anordnungs-Variante des Getriebes gemäß Fig. 1 (An- und Abtrieb achsparallel);
- Fig. 14 + 15: eine erste und eine zweite Ausgestaltung der sechsten Bauteil-Anordnungs-Variante gemäß Fig. 13;
- Fig. 16 - 33: eine siebte bis eine vierundzwanzigste Bauteil-Anordnungs-Variante des Getriebes gemäß Fig. 1 (An- und Abtrieb achsparallel);
- Fig. 34: ein beispielhaftes Getriebeschema einer zweiten Vorschalt-Planetenradsatz-Variante; und
- Fig. 35: ein Schaltschema des Getriebes gemäß Fig. 34.

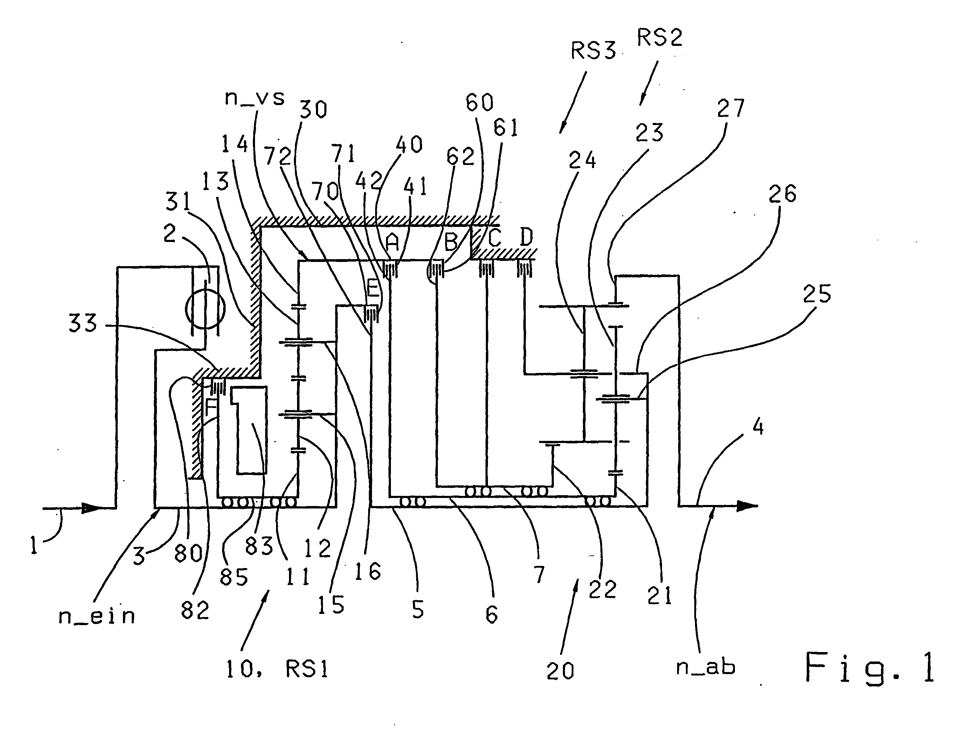

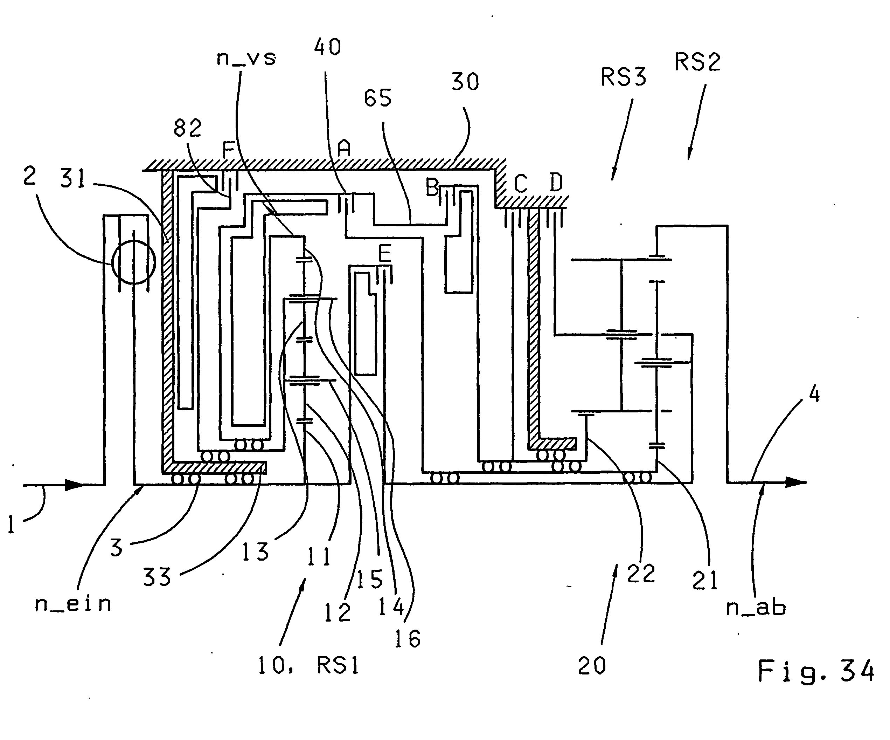

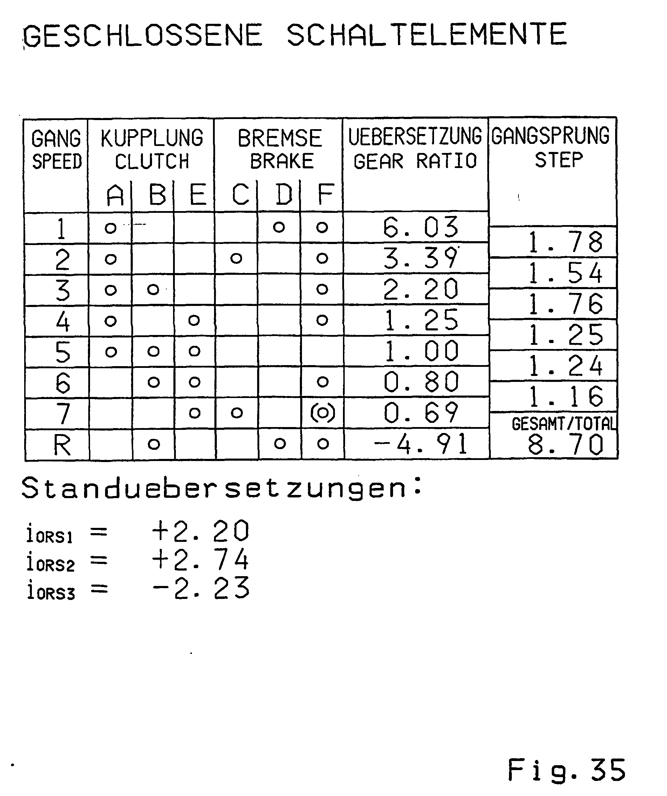

In allen Figuren sind die Bezugszeichen vergleichbarer Bauelemente auch gleichartig bezeichnet. Fig. 1 bis Fig. 33 behandeln eine erste erfindungsgemäße Vorschalt-Planetenradsatz-Variante, bei welcher der Vorschalt-Planetenradsatz über seine gekoppelten Stege angetrieben wird, sein Hohlrad mit dem Haupt-Planetenradsatz verbindbar ist und sein Sonnenrad festsetzbar ist. Fig. 34 und Fig. 35 behandeln eine zweite erfindungsgemäße Vorschalt-Planetenradsatz-Variante, bei welcher der Vorschalt-Planetenradsatz über sein Sonnenrad angetrieben wird, sein Hohlrad mit dem Haupt-Planetenradsatz verbindbar ist und seine gekoppelten Stege festsetzbar sind.

Fig. 1 zeigt nun ein beispielhaftes Getriebeschema der ersten erfindungsgemäßen Vorschalt-Planetenradsätz-Variante. Mit 1 ist eine Motorwelle beispielsweise eines Verbrennungsmotors bezeichnet, über die das Mehrstufengetriebe angetrieben wird. Zur schwingungstechnischen Entkoppelung ist zwischen der Motorwelle 1 und einer mit Getriebe-Eingangsdrehzahl n_ein rotierenden Antriebswelle 3 des Getriebes ein üblicher Torsionsdämpfer 2 vorgesehen, der beispielsweise auch als Zweimassen-Schwungrad ausgebildet sein kann. Eine mit Getriebe-Abtriebsdrehzahl n_ab rotierende Abtriebswelle des Getriebes ist mit 4 bezeichnet. Das Getriebe umfaßt einen schaltbaren Vorschalt-Planetenradsatz 10, der erfindungsgemäß als Plus-Getriebe mit positiver Standgetriebe-Übersetzung ausgebildet ist, sowie einen schaltbaren Haupt-Planetenradsatz 20, der beispielsweise als Zweisteg-Vierwellen-Getriebe in Ravigneaux-Bauart ausgebildet ist. Es sind insgesamt sechs Schaltelemente A bis F vorgesehen.

Der Vorschalt-Planetenradsatz 10, auch als RS1 bezeichnet, umfaßt ein Sonnenrad 11, innere und äußere Planetenräder 12 und 13, sowie ein Hohlrad 14. Ein Steg 15 der inneren Planetenräder 12 und ein Steg 16 der äußeren Planetenräder 13 sind fest miteinander verbunden. Die Antriebswelle 3 ist mit diesen gekoppelten Stegen 15, 16 verbunden, räumlich gesehen auf der Seite des Vorschalt-Planetenradsatzes 10, die der Motorwelle 1 und damit dem Antriebsmotor abgewandt ist. Das Hohlrad 14 bildet das Ausgangselement der Vorschalt-Planetenradsatzes 10. Das Sonnenrad 11 ist über ein als Bremse ausgebildetes sechstes Schaltelement F an einem Getriebegehäuse 30 festsetzbar.

Der Haupt-Planetenradsatz 20 umfaßt zwei Radsätze RS2 und RS3. Dem Radsatz RS2 sind ein kleines Sonnenrad 21 und erste Planetenräder 23 zugeordnet. Dem Radsatz RS3 sind ein großes Sonnenrad 22 und zweite Planetenräder 24 zugeordnet. Mit 27 ist ein gemeinsames Hohlrad bezeichnet. Ein Steg 25 der ersten Planetenräder 23 und ein Steg 26 der zweiten Planetenräder 24 sind fest miteinander verbunden. Das Hohlrad 27 ist mit der Abtriebswelle 4 verbunden. Die gekoppelten Stege 25, 26 sind einerseits mit einer dritten Welle 5 verbunden und über diese dritte Welle 5 und das als Kupplung ausgebildete fünfte Schaltelement E mit der Antriebswelle 3 verbindbar, andererseits über das als Bremse ausgebildete vierte Schaltelement D an dem Getriebegehäuse 30 festsetzbar. Das kleine Sonnenrad 21 des Haupt-Planetenradsatzes 20 ist mit einer ersten Sonnenwelle 6 verbunden und über diese erste Sonnenwelle 6 und das als Kupplung ausgebildete erste Schaltelement A mit dem Hohlrad 14 des Vorschalt-Planetenradsatzes 10 verbindbar. Das große Sonnenrad 22 des Haupt-Planetenradsatzes 20 ist einerseits mit einer zweiten Sonnenwelle 7 verbunden und über diese zweite Sonnenwelle 7 und das als Kupplung ausgebildete zweite Schaltelement B mit dem Hohlrad 14 des Vorschalt-Planetenradsatzes 10 verbindbar, andererseits über das als Bremse ausgebildetes drittes Schaltelement C an dem Getriebegehäuse 30 festsetzbar.

Die in Fig. 1 dargestellte Ausbildung des Haupt-Planetenradsatzes 20 als Ravigneaux-Radsatz ist als beispielhaft anzusehen. Der Haupt-Planetenradsatz kann auch aus anderen Kombinationen einzelner Planetenradsätze gebildet sein. Wesentlich ist dabei nur, daß eine Ausgangsdrehzahl n_vs des Vorschalt-Planetenradsatzes 10 über zwei Schaltelemente (hier die Kupplungen A und B) auf zwei verschiedene, nicht fest miteinander verbundene Eingangselemente des Haupt-Planetenradsatzes übertragbar ist, und daß die Getriebe-Eingangsdrehzahl n_ein über ein weiteres Schaltelement (hier die Kupplung E) auf ein drittes freies Eingangselement des Haupt-Planetenradsatzes übertragbar ist. Die koaxialer Anordnung von Antrieb, Vorschalt-Planetenradsatz und Haupt-Planetenradsatz ist ebenfalls als beispielhaft anzusehen. Selbstverständlich kann das erfindungsgemäße Mehrstufengetriebe auch einen Stirntrieb zwischen dem Ausgangselement des Haupt-Planetenradsatzes und der Abtriebswelle 4 aufweisen, und/oder oder eine winklige oder auch achs-parallele Anbindung zwischen Vorschalt-und Haupt-Planetenradsatz vorgesehen sein.

Ebenso beispielhaft anzusehen ist die in Fig. 1 und in den folgenden Figuren dargestellte Ausbildung der Bremsen C und D als Lamellenbremsen. Selbstverständlich kann die Bremse C und/oder die Bremse D auch als Bandbremse ausgeführt sein, mit dem bekannten Vorteil eines sehr geringen radialen Bauraumbedarfs.

In dem in Fig. 1 vorgeschlagenen Ausführungsbeispiel ist das sechste Schaltelement F räumlich zwischen einem nicht dargestellten Motor und dem Vorschalt-Planetenradsatz 10 angeordnet, motorseitig angrenzend an den Torsionsdämpfer 2, getriebeseitig unmittelbar angrenzend an den Vorschalt-Planetenradsatz 10. Die Schaltelemente A bis E sind räumlich zwischen Vorschalt-Planetenradsatz 10 und Haupt-Planetenradsatz 20 angeordnet. Dabei grenzt die Kupplung E unmittelbar an den Vorschalt-Planetenradsatz 10 an. Die gekoppelten Stege 15, 16 des Vorschalt-Planetenradsatzes 10 sind mit einem Außenlamellenträger 70 der Kupplung E verbunden. Die Lamellen 71 der Kupplung E sind im ausgeführten Beispiel einerseits auf ähnlich großem Durchmesser angeordnet wie das Hohlrad 14 des Vorschalt-Planetenradsatzes 10, andererseits auf kleinerem Durchmesser als die in Richtung des Haupt-Planetenradsatzes 20 an die Kupplung E angrenzenden Lamellen 41 der Kupplung A. Der Abtrieb des Vorschalt-Planetenradsatzes 10 wird radial betrachtet oberhalb der Kupplung E zu einem Außenlamellenträger 40 der Kupplung A geführt. Der Außenlamellenträger 40 der Kupplung A wiederum ist mit einem Außenlamellenträger 60 der Kupplung B verbunden, deren Lamellen 61 sich in Richtung der Haupt-Planetenradsatzes 20 betrachtet unmittelbar an die Lamellen 41 der Kupplung A anschließen.

Die Anordnung der Kupplung E radial unterhalb der Kupplungen A, B ermöglicht sowohl eine baulängensparende Ausführung der Kupplung E mit möglichst geringer Lamellenanzahl bei sichergestellter Übertragungsfähigkeit des über die Motorwelle 1 eingeleiteten Antriebsmomentes, als auch eine baulängensparende Ausführung der Kupplungen A, B mit möglichst geringer Lamellenanzahl bei sichergestellter Übertragungsfähigkeit des über den Vorschalt-Planetenradsatz 10 in den meisten Betriebszuständen verstärkten Antriebsmomentes. Die Ausbildung der Eingangselemente beider Kupplungen A und B als Außenlamellenträger 40, 60 ermöglicht eine konstruktiv einfache Ausführung als ein gemeinsames Bauelement. Die Anordnung der sich in axialer Richtung an die Kupplung B anschließenden Bremsen C und D ergibt in Verbindung mit der zuvor beschriebenen Anordnung der Kupplungen A, B und E insgesamt einen sehr kompakten und baulängensparenden Getriebeaufbau.

Innenlamellenträger 72, 42 und 62 der Kupplungen E, A und B sind jeweils zentrisch nach innen geführt, wobei der Innenlamellenträger 72 der Kupplung E mit der zentrisch in Getriebemitte verlaufenden dritten Welle 5 verbunden ist, der Innenlamellenträger 42 der Kupplung A mit der radial oberhalb der dritten Welle 5 verlaufenden ersten Sonnenwelle 6, und der Innenlamellenträger 62 der Kupplung B mit der radial oberhalb der ersten Sonnenwelle 6 verlaufenden dritten Sonnenwelle 7. Die dritte Welle 5 und die beiden Sonnenwellen 6, 7 sind also koaxial unmittelbar übereinander angeordnet, im ausgeführten Beispiel koaxial zur Antriebswelle 3 und koaxial zu Abtriebswelle 4. Die dritte Welle 5 ist mit den gekoppelten Stegen 25, 26 des als Ravigneaux-Radsatz ausgeführten Haupt-Planetenradsatzes 20 als dessen dritten Eingangselement verbunden, auf der dem Vorschalt-Planetenradsatz 10 abgewandten Seite des Haupt-Planetenradsatzes 20. Hierzu ist die dritte Welle 5 zentral durch den Haupt-Planetenradsatz 20 hindurch geführt. Das große Sonnenrad 22 des Haupt-Planetenradsatzes 20 ist auf der dem Vorschalt-Planetenradsatz 10 zugewandten Seite des Haupt-Planetenradsatzes 20 angeordnet und - als zweites Eingangselement des Haupt-Planetenradsatzes 20 - mit der zweiten Sonnenwelle 7 verbunden. Die erste Sonnenwelle 6 ist koaxial oberhalb der dritten Welle 5 zentrisch innerhalb des Haupt-Planetenradsatzes 20 bis zu dessen kleinem Sonnenrad 21 geführt und mit diesem - als erstes Eingangselement des Haupt-Planetenradsatzes 20 - verbunden.

Die räumliche Anordnung der Bremse F auf der dem Haupt-Planetenradsatz 20 abgewandten Seite des Vorschalt-Planetenradsatzes 10 ermöglicht in vorteilhafter Weise eine konstruktiv einfache und bauraumsparende Verschachtelung der gegenüber dem Basisgetriebe, das nur fünf Schaltelemente aufweist, zusätzlichen Bauelemente des sechsten Schaltelementes. Im dargestellten Ausführungsbeispiel ist ein Außenlamellenträger 80 der Bremse F in einen sich axial erstreckenden Vorsprung 33 einer Getriebegehäusewand 31 integriert, kann aber auch als separates Bauelement ausgeführt sein, welches dann mit der Getriebegehäusewand 31 bzw. dem Getriebegehäuse 30 fest verbunden ist. Ein Innenlamellenträger 82 der Bremse F erstreckt sich radial in Richtung Antriebswelle 3 bis zu einer Sonnenwelle 85 des Vorschalt-Planetenradsatzes 10, die auf der Antriebswelle 3 gelagert ist und über die der Innenlamellenträger 82 mit dem Sonnenrad 11 des Vorschalt-Planetenradsatzes 10 verbunden ist. In einer anderen Ausbildung der Lagerung des rotierenden Innenlamellenträgers 82 kann aber auch vorgesehen sein, daß dieser unmittelbar auf dem Vorsprung 33 der Getriebegehäusewand 31 bzw. auf einer mit der Getriebegehäusewand 31 verbundenen Nabe gelagert ist. Im dargestellten Beispiel ist eine Servo-Einrichtung 83 zur Betätigung der Bremse F räumlich zwischen Innenlamellenträger 82 und Sonnenrad 11 bzw. innerem Planetenrad 12 des Vorschalt-Planetenradsatzes 10 angeordnet. Die Druckmittelzufuhr zur Servo-Einrichtung 83 der Bremse F kann in einfacher Weise in diesem Vorsprung 33 bzw. dieser Nabe oder auch unmittelbar in der Getriebegehäusewand 31 integriert werden.

Diese Anordnung der Bremse F auf relativ kleinem Durchmesser erfordert zur Drehmoment-Übertragungsfähigkeit zwar eine relativ große Lamellenanzahl und damit eine relativ große Baulänge der Bremse F, jedoch kann in vorteilhafter Weise der Torsionsdämpfer 2 oberhalb des zylindrischen Vorsprungs 33 der Gehäusewand 31, also oberhalb der Bremse F angeordnet und somit der Bauraum radial unterhalb des Torsionsdämpfers 2 gut genutzt werden.

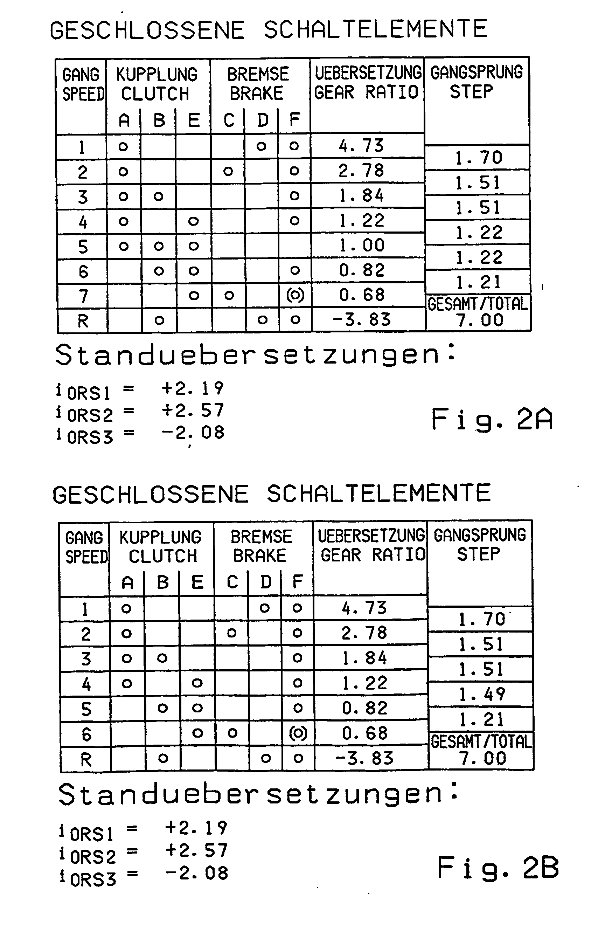

Eine Eingangsdrehzahl n_ein der Antriebswelle 3 wird durch selektives Schließen der Schaltelemente A bis F derart auf die mit einer Abtriebsdrehzahl n_ab rotierende Abtriebswelle 4 übertragen, daß mindestens sechs Vorwärtsgänge ohne Gruppenschaltung schaltbar sind, d.h. bei einer Umschaltung von einem Gang in den nächstfolgend höheren oder nächstfolgend niedrigeren Gang wird also von den gerade betätigten Schaltelementen jeweils nur ein Schaltelement geöffnet und ein weiteres Schaltelement geschlossen. In Fig. 2A ist eine erste Schaltlogik des Mehrstufengetriebes gemäß Fig. 1 mit insgesamt sieben Vorwärtsgängen dargestellt, sowie die dazu gehörigen Übersetzungen, Gang-Stufungen und Gesamtspreizung. Ebenso dargestellt sind die Stand-Übersetzungen der einzelnen Radsätze RS1, RS2, RS3. Gegenüber dem von Tenberge vorgeschlagenen Sieben-Gang-Getriebe ist insbesondere die Spreizung in vorteilhafter Weise deutlich vergrößert. Dabei ist die erzielte Gangabstufung harmonisch. Der Gangsprung vom ersten in den zweiten Gang ist gegenüber dem von Tenberge vorgeschlagenen Sieben-Gang-Getriebe nicht so groß und damit günstiger. Der fünfte Gang ist wirkungsgradoptimal als Direktgang ausgelegt.

Durch ein einfaches Weglassen des Direktganges kann das Mehrstufengetriebes gemäß Fig. 1 auch als günstig abgestuftes Sechs-Gang-Getriebe betrieben werden. In Fig. 2B ist die entsprechende zweite Schaltlogik dargestellt, sowie die dazu gehörigen Übersetzungen und Gang-Stufungen und die - gegenüber der ersten Schaltlogik gemäß Fig. 2A unveränderte - Spreizung.

Wie in der Schaltlogik in Fig. 2A bzw. Fig. 2B ersichtlich, kann die Bremse F als Anfahrelement des Mehrstufengetriebes vorgesehen sein, da sie in den zum Anfahren relevanten Gängen in beiden Fahrtrichtungen - Vorwärtsgänge eins bis vier, sowie Rückwärtsgang - im Eingriff ist. Hierdurch kann ein zusätzliches Anfahrelement, beispielsweise ein Drehmomentwandler, entfallen.

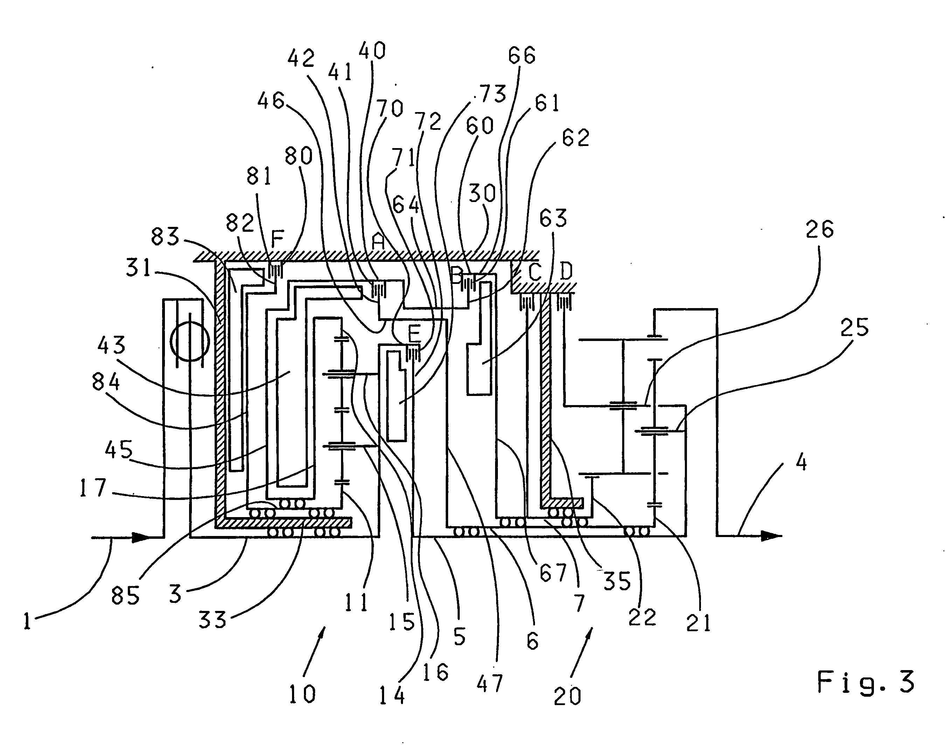

Fig. 3 zeigt eine erste Bauteil-Anordnungs-Variante des Mehrstufengetriebes gemäß Fig. 1 mit koaxialem An- und Abtrieb. Gegenüber der in Fig. 1 vorgeschlagenen Bauteile-Anordnung sind insbesondere die Anordnung der Schaltelemente F, A und B modifiziert, sowie die Ausführung der Ein-und Ausgangselemente der Schaltelemente A und B, über welche die Ausgangsdrehzahl n_vs des Vorschalt-Planetenradsatzes 10 auf das erste und zweite Eingangselement - im ausgeführten Beispiel unverändert das kleine und das große Sonnenrad 21, 22 - des Haupt-Planetenradsatzes 20 übertragbar ist. Die Ausführungen von Antrieb und Abtrieb des Mehrstufengetriebes entsprechen denen der Fig. 1.

Wie in Fig. 3 ersichtlich, ist die Bremse F unverändert auf der dem Haupt-Planetenradsatz 20 abgewandten Seite des Vorschalt-Planetenradsatzes 10 angeordnet, angrenzend an die Getriebegehäusewand 31, nunmehr aber auf möglichst großem Durchmesser unmittelbar am Außendurchmesser des Getriebegehäuses 30, in radialer Richtung zumindest teilweise oberhalb eines zylindrischen Vorsprungs 33 der Getriebegehäusewand 31, welcher sich axial in Richtung des Vorschalt-Planetenradsatzes 10 erstreckt. In einfacher Weise kann der Außenlamellenträger 80 der Bremse F in das Getriebegehäuse 30 integriert sein, wobei in dem axialen Raum zwischen der Getriebegehäusewand 31 und dem Innenlamellenträger 82 eine Servo-Einrichtung 83 zur Betätigung der Bremse F vorgesehen ist. Selbstverständlich kann dabei die Getriebegehäusewand 31 als Teil des Getriebegehäuses 30 oder als separate, fest mit dem Getriebegehäuse 30 verbundene Zwischenplatte ausgebildet sein. Der Innenlamellenträger 82 der Bremse F weist einen scheibenförmigen Abschnitt 84 auf, der zentrisch nach innen geführt ist und mit der Sonnenwelle 85 des Vorschalt-Planetenradsatzes 10 verbunden ist. Diese Sonnenwelle 85 ist mit dem Sonnenrad 11 verbunden und auf dem zylindrischen Vorsprung 33 der Getriebegehäusewand 31, der sich axial in Richtung des Vorschalt-Planetenradsatzes 10 erstreckt, gelagert. In dem axialen Raum zwischen der Getriebegehäusewand 31 und dem scheibenförmigen Abschnitt 84 des Innenlamellenträgers 82 der Bremse F können in einfacher Weise einzelne Bauelemente der Servo-Einrichtung 83 der Bremse F angeordnet sein, beispielsweise eine Rückstellfeder eines Kolbens der Bremse F. In vorteilhaft einfacher Weise kann die Druckmittelzufuhr zur Betätigung der Bremse F über entsprechend ausgebildete Kanäle erfolgen, die innerhalb der Getriebegehäusewand 31 und/oder innerhalb des zylindrischen Vorsprungs 33 der Getriebegehäusewand 31 verlaufen. Die Antriebswelle 3 des Mehrstufengetriebes kann in dem zylindrischen Vorsprung 33 der Getriebegehäusewand 31 gelagert sein.

Das Eingangselement des ersten Schaltelementes A ist als Außenlamellenträger 40 ausgebildet und im Unterschied zur Anordnung gemäß Fig. 1 nunmehr mit einem Innenlamellenträger 62 der Kupplung B, der das Eingangselement des zweiten Schaltelementes B bildet, verbunden. Die Kupplung A grenzt in axialer Richtung an die Bremse F an, wobei die Lamellen 41 der Kupplung A zumindest teilweise oberhalb des Vorschalt-Planetenrädsatzes 10 angeordnet sind und einen nur geringfügig geringeren Durchmesser aufweisen als die Lamellen 81 der Bremse F. Die Lamellen 61 der Kupplung B sind in axialer Richtung zwischen den Lamellen 41 der Kupplung A und dem Haupt-Planetenradsatz 20 angeordnet und weisen einen zumindest annähernd gleichen Durchmesser auf wie die Lamellen 41 der Kupplung A.

Das fünfte Schaltelement E grenzt an die gekoppelten Stege 15, 16 des Vorschalt-Planetenradsatzes 10 an, in axialer Richtung zwischen Vorschalt-Planetenradsatz 10 und Haupt-Planetenradsatz 20. Das Eingangselement der Kupplung E ist als Außenlamellenträger 70 ausgebildet. Der Innenlamellenträger 72 der Kupplung E ist zentrisch zur Getriebemitte hin geführt und mit der dritten Welle 5 verbunden. Die dritte Welle 5 wiederum ist - wie in der Anordnung gemäß Fig. 1 - zentral durch den Haupt-Planetenradsatz 20 hindurch geführt und auf der dem Vorschalt-Planetenradsatz 10 abgewandten Seite des Haupt-Planetenradsatzes 20 mit dessen gekoppelten Stegen 25, 26 verbunden. Entsprechend der kraftflußmäßigen Anbindung der drei Kupplungen A, B und E an den Haupt-Planetenradsatz 20 ist die Kupplung E räumlich unterhalb der Kupplungen A und B angeordnet. Um trotzdem einen möglichst großen Durchmesser der Lamellen 71 der Kupplung E zu ermöglichen, verläuft ein zylindrischer Abschnitt 46 des als Innenlamellenträger 42 ausgebildeten Ausgangselementes der Kupplung A einerseits zumindest abschnittsweise in axialer Richtung radial oberhalb der Kupplung E und übergreift dabei Außenlamellenträger 70, Lamellen 71 und Innenlamellenträger 72 der Kupplung E. Andererseits verläuft der zylindrische Abschnitt 46 des Ausgangselementes der Kupplung A zumindest abschnittsweise in axialer Richtung radial unterhalb der Kupplung B, insbesondere in axialer Richtung radial unterhalb eines zylinderförmigen Abschnitts 64 des als Innenlamellenträger 62 ausgebildete Eingangselementes der Kupplung B, und wird anschließend über einen scheibenförmigen Abschnitt 47 zentral zur Getriebemitte hin geführt bis zur ersten Sonnenwelle 6, welche die Verbindung zwischen dem Ausgangselement der Kupplung A und dem ersten Eingangselement des Haupt-Planetenradsatz 20 herstellt und koaxial oberhalb der dritten Welle 5 verläuft. Somit durchdringt das Abtriebselement des ersten Schaltelementes A einen Kupplungsraum radial unterhalb der Lamellen 61 des zweiten Schaltelementes B zumindest teilweise.

Eine Servo-Einrichtung 43 zur Betätigung der Kupplung A ist in günstiger Weise zwischen Vorschalt-Planetenradsatz 10 und Getriebegehäusewand 31 angeordnet, insbesondere zwischen dem Vorschalt-Planetenradsatz 10 und dem scheibenförmigen Abschnitt 84 des Innenlamellenträgers 82 der Kupplung F. Hierbei weist das im dargestellten Beispiel als Außenlamellenträger 40 ausgebildete Eingangselement der Kupplung A einen scheibenförmigen Abschnitt 45 auf, welcher unmittelbar angrenzend an den scheibenförmigen Abschnitt 84 des Innenlamellenträgers 82 der Bremse F zentrisch zur Getriebemitte hin verläuft bis zu einem Lagerabschnitt, der auf der Sonnenwelle 85 des Vorschalt-Planetenradsatzes 10 gelagert ist. Der scheibenförmige Abschnitt 84 des Innenlamellenträgers 82 ist über ein scheibenförmiges Abtriebselement 17 des Hohlrades 11 mit dem Ausgang des Vorschalt-Planetenradsatzes 10 verbunden ist. Die Servo-Einrichtung 43 der Kupplung A ist dabei vorzugsweise zumindest teilweise räumlich zwischen diesem scheibenförmigen Abschnitt 45 des Eingangselementes der Kupplung A und diesem scheibenförmigen Abtriebselement 17 des Hohlrades 14 angeordnet. Diese Anordnung der Servo-Einrichtung 43, die auch einen dynamischen Druckausgleich der Kupplung A aufweisen kann, verhindert in vorteilhafter Weise ein Leerlaufen eines Kolbenraums bzw. auch eines Druckausgleichsraums der Kupplung A in derem nichtgeschalteten Zustand, da die Servo-Einrichtung 43 stets mit der Ausgangsdrehzahl n_vs der Vorschalt-Planetenradsatzes 10 rotiert. Hierdurch,wird der Schaltkomfort beim Wiederzuschalten der Kupplung A verbessert, insbesondere nach längerer Verweilzeit im nichtgeschalteten Zustand.

Das Ausgangselement der Kupplung B ist als Außenlamellenträger 60 ausgebildet. Ein zylinderförmiger Abschnitt 66 dieses Ausgangselementes der Kupplung B erstreckt sich in Richtung des Haupt-Planetenradsatzes 20. Ein sich an diesen zylinderförmigen Abschnitt 66 anschließender zumindest teilweise scheibenförmiger Abschnitt 67 des Ausgangselementes der Kupplung B ist mit einem Innenlamellenträger der Bremse C verbunden und erstreckt sich radial in Richtung Getriebemitte bis zu der zweiten Sonnenwelle 7, die auf der ersten Sonnenwelle 6 gelagert ist, und ist über diese zweite Sonnenwelle 7 mit dem großen Sonnenrad 22 des Haupt-Planetenradsatzes 20 verbunden. Zusätzlich ist die zweite Sonnenwelle 7 über eine räumlich zwischen den Bremsen C und D angeordnete Lagerplatte 35 an dem Getriebegehäuse 30 gelagert. Im dargestellten Beispiel ist die Lagerplatte 35 als separates Bauteil ausgeführt, das mit dem Getriebegehäuse 30 verbunden ist. Selbstverständlich kann auch eine einstückige Ausbildung von Lagerplatte 35 und Getriebegehäuse 30 vorgesehen sein.

Eine Servo-Einrichtung 63 zur Betätigung der Kupplung B ist beispielhaft axial zwischen den Lamellen 61 der Kupplung B und dem Haupt-Planetenradsatz 20 angeordnet, vorzugsweise unmittelbar angrenzend an den scheibenförmigen Abschnitt 47 des hier beispielhaft als Innenlamellenträger 42 ausgebildeten Ausgangselementes der Kupplung A.

Eine Servo-Einrichtung 73 zur Betätigung der Kupplung E ist beispielhaft axial zwischen dem Vorschalt-Planetenradsatz 10 und den Lamellen 71 der Kupplung E angeordnet, insbesondere unmittelbar angrenzend an die gekoppelten Stege 15, 16 des Vorschalt-Planetenradsatzes 10 auf dessen dem Haupt-Planetenradsatz 20 zugewandten Seite. In vorteilhafter Weise rotiert ein Kolbenraum der Servo-Einrichtung 73 und ein eventuell vorhandener Druckausgleichsraum der Kupplung E stets mit Getriebe-Eingangsdrehzahl n_ein, wodurch ein ungewolltes Leerlaufen des Kolbenraums bzw. auch des Druckausgleichsraums der Kupplung E im nichtgeschalteten Zustand verhindert und der Schaltkomfort verbessert wird. In einer anderen Ausgestaltung kann aber auch vorgesehen sein, daß die Servo-Einrichtung der Kupplung E auf der dem Haupt-Planetenradsatz 20 zugewandten Seite der Lamellen 71 der Kupplung E angeordnet ist, axial zwischen dem Innenlamellenträger 72 der Kupplung E und dem scheibenförmigen Abschnitt 47 des Ausgangselementes der Kupplung A.

Durch diese in Fig. 3 beschriebene Anordnung der Schaltelemente F, A, B und E wird in vorteilhafter Weise eine sehr geringe Baulänge - insbesondere eine geringstmögliche Lamellenanzahl - der vier Schaltelemente F, A, B und E erzielt. Die Ausbildung des Eingangselementes der Kupplung A als Außenlamellenträger 40 und des Eingangselementes der Kupplung B als Innenlamellenträger 62 ermöglicht eine konstruktiv einfache Ausführung der drehmomentführenden Verbindungsstelle zwischen diesen beiden Eingangselementen, indem beispielsweise ein entsprechend ausgebildetes Element des Innenlamellenträgers 62 in eine Lamellen-Mitnahmeverzahnung des Außenlamellenträgers 40 eingehängt und im Außenlamellenträger 56 axial gesichert wird.

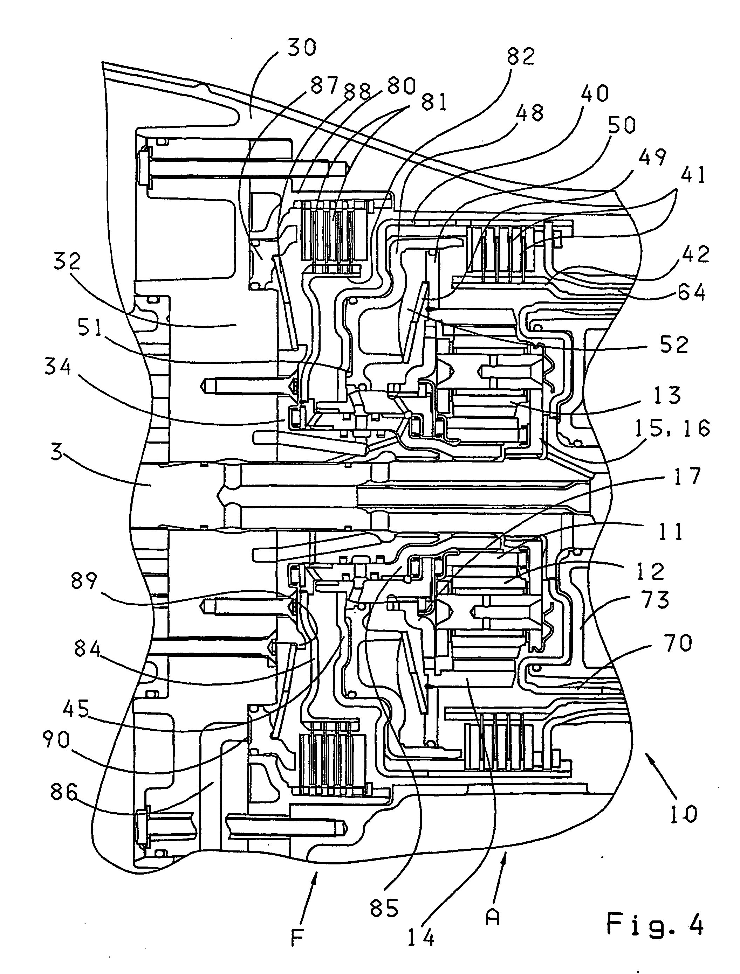

Anhand Fig. 4, die eine Sektion eines Getriebeschnitts als beispielhafte Detailkonstruktion zeigt, wird die Bauteilanordnung des sechsten Schaltelementes F gemäß Fig. 3 nun näher erläutert. In dem einem - nicht dargestellten - Antriebsmotor zugewandten Bereich des Getriebegehäuses 30 ist eine mit dem Getriebegehäuse 30 verschraubte Zwischenplatte 32 angeordnet, als eine Außenwand des Getriebegehäuses. Im zentralen Bereich der Zwischenplatte 32 schließt sich eine zylinderförmige Nabe 34 an, die sich axial in den Innenraum des Getriebegehäuses 30 erstreckt und mit der Zwischenplatte 32 verschraubt ist. Die mit dem nicht dargestellten Antriebsmotor wirkverbundene Antriebswelle 3 des Mehrstufengetriebes verläuft zentral durch Zwischenplatte 32 und Nabe 34 hindurch und ist in diesen gelagert. Getriebeseitig ist die Antriebswelle 3 mit mit den gekoppelten Stegen 15, 16 als Eingangselement des Vorschalt-Planetenradsatzes 10 verbunden, sowie mit dem Außenlamellenträger 70 als Eingangselement der Kupplung E, die bis auf deren angedeutetes Servo-Element 73 nicht weiter dargestellt ist. Die drehmomentführende Anbindung des Vorschalt-Planetenradsatzes 10 an die Antriebswelle 3 erfolgt dabei auf der der Zwischenplatte 32 abgewandten Seite des Vorschalt-Planetenradsatzes 10, also auf dessen dem nicht dargestellten Haupt-Planetenradsatz zugewandten Seite. Die Antriebswelle 3 verläuft also zentral durch den Vorschalt-Plahetenradsatz 10 hindurch und ist mit den gekoppelten Stegen 15, 16 der Planetenräder 12, 13 des Vorschalt-Planetenradsatzes 10 verbunden. Auf der der Zwischenplatte 32 zugewandten Seite der gekoppelten Stege 15, 16 ist das Sonnenrad 11 des Vorschalt-Planetenradsatzes 10 auf der Antriebswelle 3 gelagert und mit einer - zur Antriebswelle 3 koaxialen - Sonnenwelle 85 des Vorschalt-Planetenradsatzes 10 verbunden. Diese Sonnenwelle 85 wiederum ist auf einem entsprechend ausgebildeten zylindrischen Abschnitt der Nabe 34 radial verdrehbar gelagert und axial abgestützt. Selbstverständlich können Sonnenrad 11 und Sonnenwelle 85 auch einstückig ausgeführt sein.

Das sechste als Bremse ausgebildete Schaltelement F ist angrenzend an die Zwischenplatte 32 angeordnet. Hierbei ist der Außenlamellenträger 80 der Bremse F als separates Bauteil ausgebildet und auf dem größtmöglichen Innendurchmesser des Getriebegehäuses 30, unmittelbar angrenzend an die Zwischenplatte 32, angeordnet und mit dem Getriebegehäuse verschraubt. In einer anderen Ausgestaltung kann selbstverständlich vorgesehen sein, daß der Außenlamellenträger 80 der Bremse F in das Getriebegehäuse 30 integriert ist, die Mitnahmeverzahnungen für die Außenlamellen der Bremse F also beispielsweise in das Getriebegehäuse 30 eingegossen sind. Das Servo-Element der Bremse F umfaßt einen Kolben 87 und eine Rückstellfeder 88. Der Kolben 87 der Bremse F grenzt unmittelbar an die Zwischenplatte 32 an. Dabei ist der Kolben 87 in dem ausgeführten Beispiel in einem ringförmigen Raum zwischen einem zylindrischen Abschnitt des Außenlamellenträgers 80 und einem zylindrischen Abschnitt der Zwischenplatte 32 axial beweglich angeordnet und gegen diese beiden zylindrischen Abschnitte hin abgedichtet. Dieser zylindrische Abschnitt des Außenlamellenträgers 80, dieser zylindrische Abschnitt der Zwischenplatte 32, der Kolben 87 und ein zum Kolben 87 rückwärtiger senkrechter Abschnitt der Zwischenplatte 32 bilden also den Kolbenraum 90 der Bremse F. Zur Betätigung der Bremse F ist der Kolbenraum 90 über einen Druckmittelkanal 86 mit Druck beaufschlagbar ist. Im ausgeführten Beispiel verläuft dieser Druckmittelkanal 86 innerhalb der Zwischenplatte 32.

In einer anderen Ausgestaltung für die Anordnung des Kolbens 87 der Bremse F kann beispielsweise auch vorgesehen sein, daß die Zwischenplatte 32 eine ringförmige Ausnehmung zur Aufnahme des Kolbens 87 aufweist. Auch kann die Zwischenplatte 32 zweiteilig ausgeführt sein mit einer scheibenförmigen ebenen ersten Platte und einer zweiten scheibenförmigen Kanalplatte, wobei der Außendurchmesser der zweiten Kanalplatte gleichzeitig den Innendurchmesser des Kolbenraums 90 der Bremse F bildet. Ebenso kann ein zylindrischer Abschnitt der an die Zwischenplatte 32 angrenzenden Nabe 34 den Innendurchmesser des Kolbenraums 90 der Bremse F bilden. Je nach Ausbildung des Kolbenraums 90, also je nach dessen räumlicher Anordnung im Bereich der Zwischenplatte 32 und je nach dessen Größe, kann der Druckmittelkanal 86 zum Kolbenraum 90 hin auch innerhalb der Nabe 34 verlaufen.

In dem ausgeführten Beispiel ist die Rückstellfeder 88 des Kolbens 87 als Tellerfeder ausgebildet und stützt sich an einem Abstützbund 89 der Nabe 34 ab. In einer anderen Ausgestaltung kann als Abstütz-Einrichtung für die Rückstellfeder 88 beispielsweise auch eine geteilte Scheibe vorgesehen sein, die in eine entsprechend ausgebildete Nut der Nabe 34 eingesetzt ist. Selbstverständlich können auch andere Bauformen der Kolben-Rückstellfeder vorgesehen sein, beispielsweise ein Spiralfeder-Paket.

Der radial unterhalb der Lamellen 81 der Bremse F angeordnete Innenlamellenträger 82 der Bremse F weist einen zumindest weitgehend scheibenförmigen Abschnitt 84 auf, der in axialer Richtung an die Zwischenplatte 32 bzw. die Rückstellfeder 88 angrenzt und zentrisch in Richtung Antriebswelle 3 geführt ist bis zu der Sonnenwelle 85 des Vorschalt-Planetenradsatzes 10, mit der er verbunden ist. Somit ist der Innenlamellenträger 82 der Bremse F auf der Nabe 34 gelagert.

Die Lamellen 41 des als Kupplung ausgebildeten ersten Schaltelementes A sind zumindest überwiegend oberhalb des Hohlrades 14 des Vorschalt-Planetenradsatzes 10 angeordnet. Der Außenlamellenträger 40 bildet das Eingangselement der Kupplung A, der Innenlamellenträger 42 deren Ausgangselement. Auf der der Zwischenplatte 32 abgewandten Seite der Lamellen 41 ist der Außenlamellenträger 40 der Kupplung A mit dem Eingangselement der nicht dargestellten Kupplung B verbunden. Dabei ist in Fig. 4 lediglich der zylinderförmige Abschnitt 64 dieses Eingangselementes der Kupplung B dargestellt.

Die Servo-Einrichtung der Kupplung A ist räumlich zwischen der Bremse F und dem Vorschalt-Planetenradsatz 10 angeordnet und umfaßt einen Kolben 48, eine Rückstellfeder 49 für den Kolben 48, sowie eine Stauscheibe 50 für einen dynamischen Druckausgleich der rotierenden Kupplung A. Der Kolben 48 ist dabei innerhalb eines Kolbenraums 51 des Außenlamellenträgers 40 druckdicht in axialer Richtung beweglich angeordnet. Als baulängensparende Konstruktion ist die Stauscheibe 50 direkt mit dem Hohlrad 14 des Vorschalt-Planetenradsatzes 10 verschweißt und gegen den Kolben 48 der Kupplung A hin abgedichtet und bildet somit auf seiner dem Vorschalt-Planetenradsatz 10 abgewandten Seite mit dem Kolben 48 einen Druckausgleichsraum 52. Die beispielhaft als Tellerfeder ausgebildete Rückstellfeder 49 stützt sich zwischen entsprechend ausgebildeten axialen Anlageflächen des Kolbens 48 und der Stauscheibe 50 ab. Die Druckmittelzufuhr zum Kolbenraum 51 der Kupplung A und zum Druckausgleichsraum 52 des dynamischen Druckausgleichs der Kupplung A erfolgt über Druckmittelkanäle, die in der Antriebswelle 3, der Nabe 34 und der Sonnenwelle 85 des Vorschalt-Planetenradsatzes 10 verlaufen. Sowohl Kolbenraum 51 als auch Druckausgleichsraum 52 der Kupplung A sind räumlich zwischen der Bremse F, insbesondere derem Kolbenraum 80 und dem Vorschalt-Planetenradsatz 10 angeordnet. In einer anderen Ausgestaltung des Druckausgleichsraums 52 kann die Stauscheibe 50 auch in herkömmlicher Weise als separate Scheibe ausgebildet sein, die in geeigneter Weise auf dem auf der Sonnenwelle 85 des Vorschalt-Planetenradsatzes 10 gelagerten nabenförmigen Abschnitt des Außenlamellenträgers 40 radial und axial fixiert ist. Auch können andere Bauformen der Kolben-Rückstellfeder der Kupplung A vorgesehen sein, beispielsweise ein Spiralfeder-Paket.

Das als Außenlamellenträger 40 ausgebildete Eingangselement der Kupplung A, welches mit dem Hohlrad 14 des Vorschalt-Planetenradsatzes 10 verbunden ist, weist einen zumindest teilweise scheibenförmigen Abschnitt 45 auf, der sich - unmittelbar angrenzend an den scheibenförmigen Abschnitt 84 des Innenlamellenträgers 82 der Bremse F - zentrisch in Richtung Antriebswelle 3 erstreckt bis zu einem zylinderförmigen Lagerabschnitt, der sich axial in Richtung der Vorschalt-Planetenradsatzes 10 erstreckt und auf der Sonnenwelle 85 des Vorschalt-Planetenradsatzes 10 verdrehbar gelagert ist. Dieser zylinderförmigen Lagerabschnitt bildet gleichzeitig den inneren Durchmesser des Kolbenraums 51 der Kupplung A. Der Außenlamellenträger 40 der Kupplung A ist über diesen zylindrischen Lagerabschnitt mit einem scheibenförmigen Abtriebselement 17 verbunden, welches auf der der Zwischenplatte 32 zugewandten Seite des Vorschalt-Planetenradsatzes 10 unmittelbar neben dem Vorschalt-Planetenradsatz 10 angeordnet und mit dem Hohlrad 14 der Vorschalt-Planetenradsatzes 10 verbunden ist. Die Druckmittelzufuhr zum Kolbenraum 51 und die Schmierölzufuhr zu dem Druckausgleichsraum 52 erfolgt über entsprechend ausgebildete Bohrungen der Antriebswelle 3, der gehäusefesten Nabe 34, der Sonnenwelle 85 des Vorschalt-Planetenradsatzes 10 und des zylinderförmigen Lagerabschnitts des Außenlamellenträgers 40.

Wie in Fig. 4 ersichtlich, handelt es sich also um eine äußerst kompakte und bauraumsparende Anordnung einer Baugruppe aus dem sechsten Schaltelement F, dem ersten Schaltelement A und dem Vorschalt-Planetenradsatz 10.

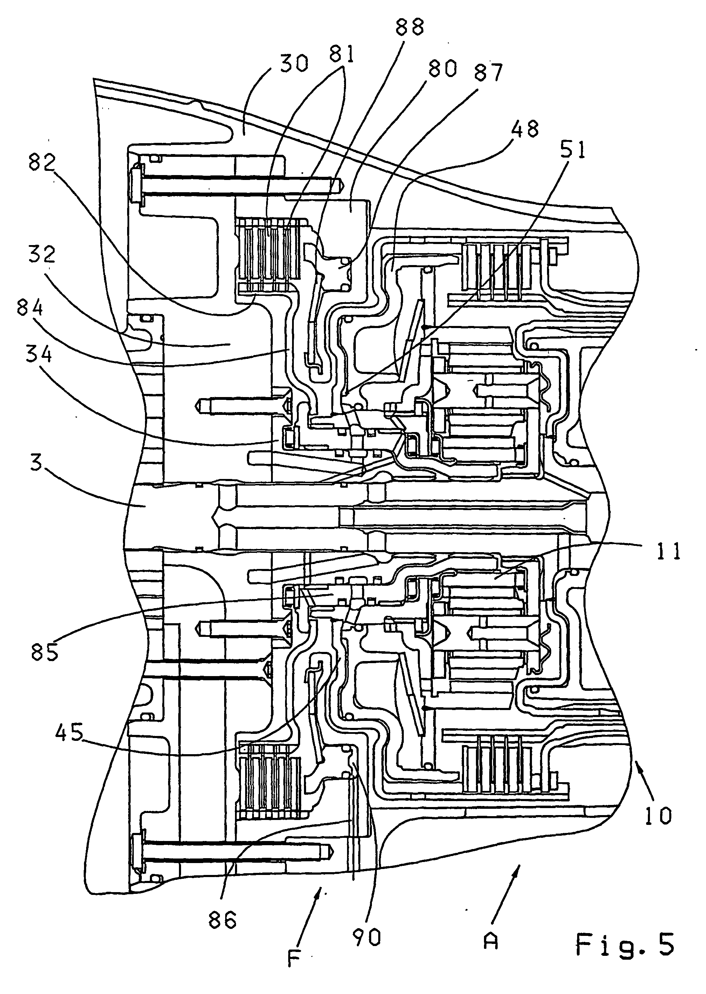

Anhand Fig. 5 wird eine Ausführungs-Variante zur Detailkonstruktion gemäß Fig. 4 mit modifizierter räumlichen Anordnung der Servo-Einrichtung der Bremse F erläutert. Unverändert ist die Bremse F auf großem Durchmesser in radialer Richtung oberhalb der Nabe 34 angeordnet, welche axial in Richtung Vorschalt-Planetenradsatz 10 zentral an die mit dem Getriebegehäuse 30 verschraubten Zwischenplatte 32 angrenzt und mit dieser verschraubt ist. Auch unverändert erstreckt sich ein scheibenförmiger Abschnitt 84 des Innenlamellenträgers 82 der Bremse F räumlich unterhalb der Lamellen 81 der Bremse F unmittelbar axial angrenzend und weitgehend parallel zur Zwischenplatte 32 zentrisch in Richtung Antriebswelle 3 bis zur Sonnenwelle 85 des Vorschalt-Planetenradsatzes 10, welche - koaxial zur Antriebswelle 3 - auf der Nabe 34 gelagert ist und die drehmomentführende Verbindung zwischen dem scheibenförmiger Abschnitt 84 des Innenlamellenträgers 82 und dem Sonnenrad 11 des Vorschalt-Planetenradsatzes 10 ist. Ebenfalls unverändert umfaßt die Servo-Einrichtung der Bremse F den Kolben 87 und die beispielhaft als Tellerfeder ausgeführte Rückstellfeder 88 des Kolbens 87.

Im Unterschied zur beipielhaften Detailkonstruktion gemäß Fig. 4 ist die Servo-Einrichtung 83 der Bremse F nunmehr auf der Seite der Lamellen 81 der Bremse F angeordnet, die der Zwischenplatte 32, welche eine dem nicht dargestellten Antriebsmotor zugewandte Außenwand des Getriebegehäuses 30 bildet, abgewandt ist. Die Servo-Einrichtung der Bremse F ist nunmehr also einerseits axial zwischen den Lamellen 81 der Bremse F und dem Vorschalt-Planetenradsatz 10 angeordnet, andererseits auch axial zwischen den Lamellen 81 der Bremse F und der Kupplung A, insbesondere unmittelbar benachbart zur Servo-Einrichtung der Kupplung A, welche insbesondere durch Kolben 48 und Kolbenraum 51 repräsentiert wird. Dabei ist der Kolben 87 der Bremse F innerhalb einer ringförmigen Ausnehmung des Außenlamellenträgers 80 der Bremse F angeordnet. Der Kolbenraum 90 der Bremse F ist also in dem Außenlamellenträger 80 der Bremse F integriert. Entsprechend verläuft der Druckmittelkanal 86 für die Druckmittelzufuhr in den Kolbenraum 90 innerhalb des Außenlamellenträgers 80.

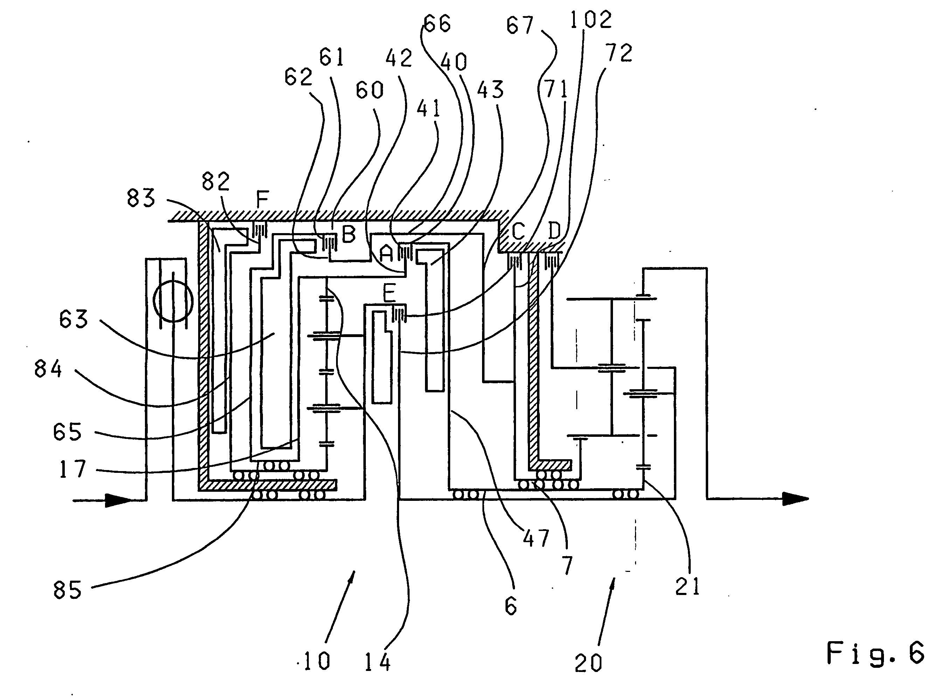

Fig. 6 zeigt eine zweite Bauteil-Anordnungs-Variante des Mehrstufengetriebes gemäß Fig. 1, wieder mit koaxialer Anordnung von An- und Abtrieb. Im Unterschied zu der in Fig. 3 dargestellten Bauteilanordnung ist in Fig. 6 nur die räumliche Anordnung des ersten und zweiten Schaltelementes A, B in axialer Richtung vertauscht.

Die Kupplung B grenzt nunmehr in axialer Richtung an das sechste als Bremse ausgebildete Schaltelement F an, wobei die Servo-Einrichtung 63 der Kupplung B zumindest überwiegend axial zwischen der Bremse F und dem Vorschalt-Planetenradsatz 10 angeordnet ist, insbesondere axial zwischen der Servo-Einrichtung 83 der Bremse F bzw. dem scheibenförmigen Abschnitt 84 des Innenlamellenträgers 82 der Bremse F und dem scheibenförmigen Abtriebselement 17 des Hohlrades 14 des Vorschalt-Planetenradsatzes 10. Die Lamellen 61 der Kupplung B sind zumindest teilweise oberhalb des Hohlrades 14 des Vorschalt-Planetenradsatzes 10 angeordnet.

Das Eingangselement der Kupplung B ist als Außenlamellenträger 60 ausgebildet. Ein zumindest weitgehend scheibenförmiger Abschnitt 65 dieses Eingangselementes der Kupplung B grenzt in axialer Richtung unmittelbar an den scheibenförmigen Abschnitt 84 des Innenlamellenträgers 82 der Bremse F an und erstreckt sich radial in Richtung Getriebemitte bis zu einem zylinderförmigen Lagerabschnitt, welcher wiederum auf der Sonnenwelle 85 des Vorschalt-Planetenradsatzes 10 gelagert ist. Über diesen zylinderförmigen Lagerabschnitt ist der Außenlamellenträger 60 mit dem scheibenförmigen Abtriebselement 17 des Hohlrades 14, welches das Ausgangselement des Vorschalt-Planetenradsatzes 10 bildet, verbunden. Somit ist die Servo-Einrichtung 63 der Kupplung B zumindest teilweise unmittelbar zwischen dem scheibenförmigen Abschnitt 65 des Eingangselementes der Kupplung B und dem scheibenförmigen Abtriebselement 17 des Hohlrades 14 angeordnet. Selbstverständlich kann die Servo-Einrichtung 63 der Kupplung B neben einer Einrichtung zur Betätigung der Lamellen 62 auch einen dynamischen Druckausgleich für die Kupplung B aufweisen.

Die solchermaßen ausgeführte Anordnung der Servo-Einrichtung 63 der Kupplung B verhindert in vorteilhafter Weise ein Leerlaufen des Kupplungsraums bzw. des Druckausgleichsraums der Kupplung B in derem nichtgeschalteten Zustand, da die Servo-Einrichtung 63 stets mit der Ausgangsdrehzahl n_vs des Vorschalt-Planetenradsatzes 10 rotiert. Hierdurch wird der Schaltkomfort beim Wiederzuschalten der Kupplung B verbessert, insbesondere nach längerer Verweilzeit im nichtgeschalteten Zustand.

Das Ausgangselement der Kupplung B ist als Innenlamellenträger 62 ausgebildet, mit einem zylinderförmigen Abschnitt 66, der sich axial in Richtung des Haupt-Planetenradsatzes 20 erstreckt und die Kupplung A, insbesondere die Lamellen 41 der Kupplung A übergreift, sowie mit einem zumindest teilweise scheibenförmigen Abschnitt 67, der sich an den zylinderförmigen Anschnitt 66 anschließt und mit einem Innenlamellenträger 102 der Bremse C und der zweiten Sonnenwelle 7 verbunden ist.

Die Kupplung A ist zwischen Vorschalt- und Haupt-Planetenradsatz 10, 20 angeordnet, wobei die Lamellen 41 der Kupplung A in axialer Richtung an den Vorschalt-Planetenradsatz 10 und an die Lamellen 61 der Kupplung B angrenzen. Relativ zur Kupplung E, die ebenfalls angrenzend an den Vorschalt-Planetenradsatz 10 zwischen Vorschalt- und Haupt-Planetenradsatz 10, 20 angeordnet ist, sind die Lamellen 41 der Kupplung A zumindest teilweise radial oberhalb der Lamellen 71 der Kupplung E angeordnet.

Das Eingangselement der Kupplung A ist als Innenlamellenträger 42 ausgebildet und direkt mit dem Hohlrad 14 als Ausgangselement des Vorschalt-Planetenradsatzes 10 verbunden. Das Ausgangselement der Kupplung A ist als Außenlamellenträger 40 ausgebildet und weist einen scheibenförmigen Abschnitt 47 auf, der zentrisch zu Getriebemitte hin verläuft bis zur ersten Sonnenwelle 6, über die es mit dem kleinen Sonnenrad 21 des Haupt-Planetenradsatzes 20 verbunden ist. Innenlamellenträger 42, Lamellen 41 und Außenlamellenträger 40 der Kupplung A übergreifen also die Kupplung E.

Die Servo-Einrichtung 43 der Kupplung A ist in einfacher Weise in axialer Richtung auf der dem Haupt-Planetenradsatz 20 zugewandten Seite der Lamellen 41 der Kupplung A angeordnet, zwischen den Lamellen 41 der Kupplung A bzw. dem scheibenförmigen Innenlamellenträger 72 der Kupplung E und dem scheibenförmigen Abschnitt 47 des Außenlamellenträgers 40 der Kupplung A angeordnet, vorzugsweise unmittelbar angrenzend an diese Bauelemente.

In einer anderen Ausgestaltung kann aber auch vorgesehen sein, daß die Servo-Einrichtung 43 der Kupplung A in axialer Richtung zwischen dem scheibenförmigen Abschnitt 47 des Ausgangsellementes der Kupplung A und dem scheibenförmigen Abschnitt 67 des Ausgangselementes der Kupplung B angeordnet ist, vorzugsweise unmittelbar angrenzend an diese Bauelemente, wobei ein Kolben der Kupplung A den Außenlamellenträger 40 der Kupplung A axial in Richtung Vorschalt-Planetenradsatz 10 radial übergreift und die Lamellen 41 der Kupplung A von deren dem Vorschalt-Plantenradsatz 10 zugewandten Seite her betätigt.

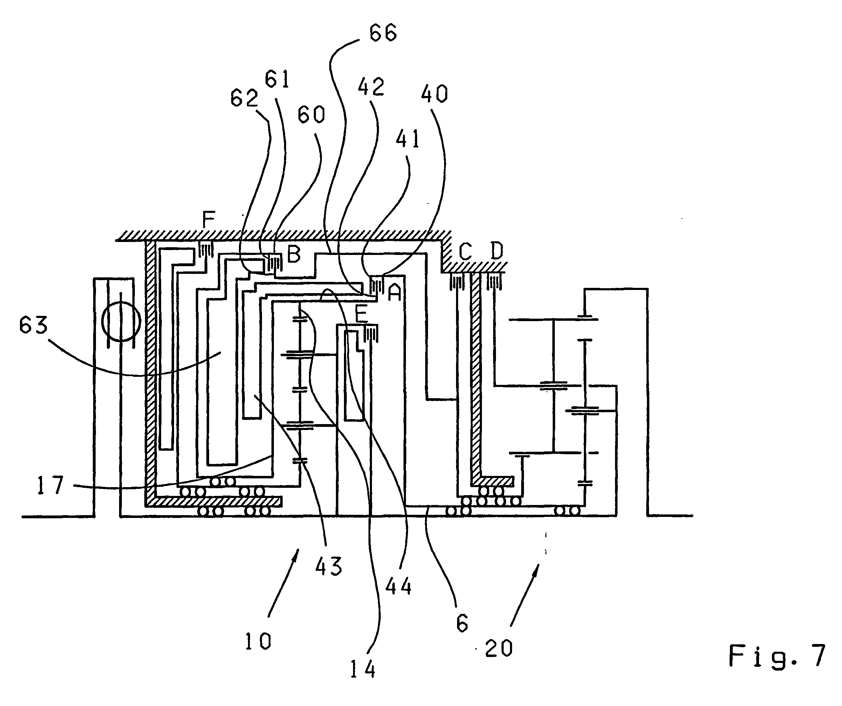

Abgeleitet aus der beispielhaften Bauteile-Anordnung gemäß Fig. 6, zeigt Fig. 7 eine weitere Ausgestaltung einer Anordnung der Servo-Elemente 43, 63 der Kupplungen A und B. Dabei ist die räumliche Anordnung der Lamellen 41, 61 beider Kupplungen A, B relativ zu Vorschalt- und Haupt-Planetenradsatz 10, 20 und relativ zu den anderen Schaltelementen C bis F unverändert. Ebenso unverändert bilden Innenlamellenträger 42 und Außenlamellenträger 60 die jeweiligen Eingangselemente der Kupplungen A, B, sowie Außenlamellenträger 40 und Innenlamellenträger 62 die jeweiligen Ausgangselemente der Kupplungen A, B.

Im Unterschied zu Fig. 6 ist nunmehr vorgesehen, daß die Servo-Einrichtung 43 der Kupplung A auf der dem Haupt-Planetenradsatz 20 abgewandten Seite des Vorschalt-Planetenradsatzes 10 angeordnet ist, axial zwischen der Servo-Einrichtung 63 der Kupplung B und dem scheibenförmigen Ausgangselement 17 des Hohlrades 14, vorzugsweise unmittelbar angrenzend an die Servo-Einrichtung 63 und das scheibenförmige Ausgangselement 17. Die Lamellen 41 der Kupplung A werden also von deren dem Haupt-Planetenradsatz 20 abgewandten Seite her betätigt. Dabei übergreift ein Betätigungselement der Servo-Einrichtung 43 das Hohlrad 14 des Vorschalt-Planetenradsatzes 10 und erstreckt sich - radial oberhalb eines mit dem Hohlrad 14 verbundenen zylindrischen Abschnittes 44 des als Innenlamellenträger 42 ausgebildeten Eingangselementes der Kupplung A, sowie radial unterhalb des zylindrischen Abschnitts 66 des als Innenlamellenträger 62 ausgebildeten Ausgangselementes der Kupplung B - in axialer Richtung bis zu den Lamellen 41 der Kupplung A. Vorteilhaft bei dieser Anordnung der Servo-Einrichtungen 43, 63 der Kupplungen A und B ist deren Ineinanderliegen innerhalb des Außenlamellenträgers 60 der Kupplung B, wodurch eine einfache Vormontage als Baugruppe möglich ist.

Da die Anordnung der anderen Bauelemente in Fig. 6 und Fig. 7 der in Fig. 3 dargestellten Anordnung entspricht, kann an dieser Stelle auf eine weitere detaillierte Beschreibung verzichtet werden.

Durch diese in Fig. 6 bzw. Fig. 7 beschriebene Anordnung der Planetenradsätze und Schaltelemente wird - ähnlich wie bei der in Fig. 3 vorgeschlagenen Anordnung - in vorteilhafter Weise eine sehr geringe Baulänge des Mehrstufengetriebes mit koaxialem An- und Abtrieb erzielt.

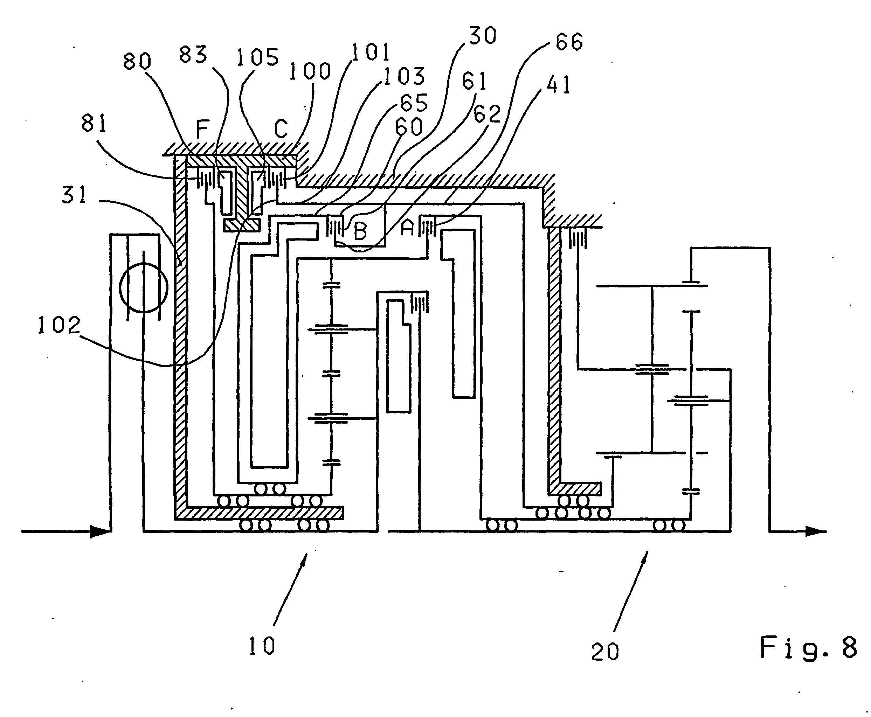

Fig. 8 zeigt eine dritte beispielhafte Bauteil-Anordnungs-Variante eines Mehrstufengetriebes mit der ersten erfindungsgemäßen Vorschaltradsatz-Variante, basierend auf der zuvor in Fig. 6 beschriebenen zweiten Bauteil-Anordnungsvariante. Gegenüber Fig. 6 unterschiedlich ist im wesentlichen nur die Anordnung der Bremse C, die nunmehr in axiale Richtung zwischen Bremse F und Kupplung B angeordnet ist, also auf der dem Haupt-Planetenradsatz 20 abgewandten Seite der Kupplung B. Vorzugsweise ist die Bremse C benachbart zur Bremse F angeordnet. Die Lamellen 101 der Bremse C weisen beispielhaft den gleichen Durchmesser auf wie die Lamellen 80 der Bremse F und sind in radialer Richtung gesehen zumindest teilweise oberhalb des Vorschalt-Planetenradsatzes 10 angeordnet. Im dargestellten Beispiel sind die Außenlamellenträger 100, 80 beider Bremsen C, F als einstückiges Bauelement ausgeführt, welches mit dem Getriebegehäuse 30 fest verbunden ist. In einer anderen Ausgestaltung können die Außenlamellenträger 100, 80 beider Bremsen C, F selbstverständlich auch in das Getriebegehäuse 30 integriert sein.

Im dargestellten Beispiel sind die Servo-Einrichtungen 105, 83 der Bremsen C, F in diesen gemeinsamen Außenlamellenträger integriert. Die Servo-Einrichtung 105 der Bremse C betätigt die Lamellen 101 der Bremse C also in Richtung Haupt-Planetenradsatz 20 und die Servo-Einrichtung 83 der Bremse F betätigt die Lamellen 81 der Bremse F in entgegengesetzter Richtung, also in Richtung Getriebegehäusewand 31, an die die Lamellen 81 unmittelbar angrenzen. In einer anderen Ausbildung kann die Servo-Einrichtung 105 der Bremse C selbstverständlich auch auf der dem Haupt-Planetenradsatz 20 zugewandten Seite der Lamellen 101 angeordnet sein. Ebenso kann in einer anderen Ausbildung auch die Servo-Einrichtung 83 der Bremse F - wie in Fig. 6 - zwischen Getriebegehäusewand 31 und den Lamellen 81 der Bremse F angeordnet sein.

Die in Fig. 8 dargestellte Ausführung des einteiligen Außenlamellenträgers für beide Bremsen C, F mit den im Außenlamellenträger integrierten Servo-Einrichtungen beider Bremsen C, F ergibt ein insgesamt sehr kompakte und einfach vormontierbare Baugruppe.

Der Innenlamellenträger 102 der Bremse C weist einen weitgehend zylinderförmigen Abschnitt 103 auf, der sich in axialer Richtung radial oberhalb des zylinderförmigen Abschnittes 65 des beispielhaft als Außenlamellenträger 60 ausgebildeten Eingangselementes der Kupplung B erstreckt und im Bereich der Lamellen 61 der Kupplung B mit dem zylinderförmigen Abschnitt 66 des Ausgangselementes der Kupplung'B, welches beispielhaft als Innenlamellenträger 62 ausgebildet ist und die Kupplung A axial in Richtung Haupt-Planetenradsatz 20 radial übergreift, verbunden ist. Der Innenlamellenträger 102 der Bremse C greift also vollständig über die Lamellen 61 der Kupplung B hinweg. Die Lamellen 41 der Kupplung A weisen in vorteilhafter Weise zumindest annährend den gleichen Durchmesser auf wie die Lamellen 61 der Kupplung B. Fertigungstechnisch günstig können in beiden Kupplungen A, B beispielsweise auch gleiche Lamellen eingesetzt sein.

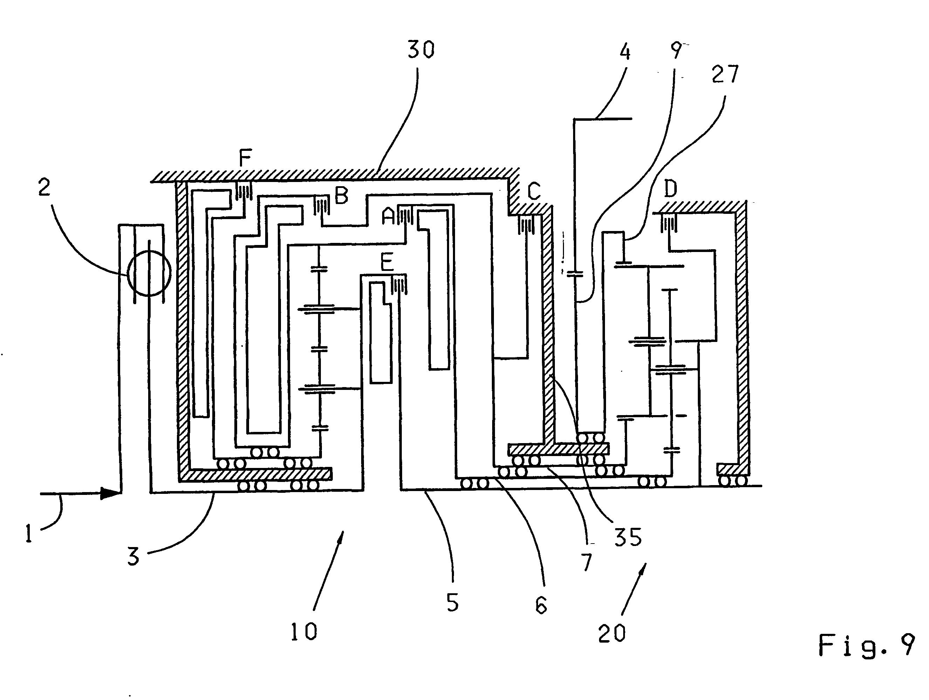

In Fig. 9 bis Fig. 33 sind verschiedene weitere Bauteil-Anordnungs-Varianten eines erfindungsgemäßen Mehrstufengetriebes mit nicht koaxialen An- und Abtrieb. Fig. 9 zeigt nun eine vierte beispielhafte Bauteil-Anordnungs-Variante eines Mehrstufengetriebes mit der ersten erfindungsgemäßen Vorschaltradsatz-Variante, basierend auf der zuvor in Fig. 6 für koaxialen An- und Abtrieb beschriebenen Bauteile-Anordnung.

Wie in Fig. 9 ersichtlich, ist die Baugruppe aus Vorschalt-Planetenradsatz 10 und den Schaltelementen F, B, A, E und C und deren Anordnung im Getriebegehäuse 30 und auch deren kraftflußmäßige Anbindung an den Haupt-Planetenradsatz 20 gegenüber Fig. 6 unverändert; d.h. der gesamte Getriebeabschnitt zwischen der Motorwelle 1 und der Lagerplatte 35 bzw. den in der Lagerplatte 35 gelagerten drei Wellen 5, 6 und 7 ist identisch. Ebenso identisch zur Fig. 6 ist der beispielhaft vorgeschlagene Ravigneaux-Radsatz als Haupt-Planetenradsatz 20 und dessen Anbindung an die drei Wellen 5, 6 und 7. Das Hohlrad 27 des Haupt-Planetenradsatzes 20 bildet dessen Ausgangselement und ist nunmehr über ein koaxial zum Haupt-Planetenradsatz 20 angeordnetes Stirnrad 9 mit der Abtriebswelle 4 verbunden. Der Abtrieb des Haupt-Planetenradsatzes 20 ist nicht zur Motorwelle 1 bzw. Antriebswelle 3 koaxial, sondern vorzugsweise rechtwinklig zu Motorwelle 1 bzw. Antriebswelle 3; d.h. die Abtriebswelle 4 ist parallel zu Motorwelle 1 bzw. Antriebswelle 3. Somit eignet sich das vorgeschlagene Mehrstufengetriebe insbesondere für ein Kraftfahrzeug mit quer zur Fahrzeuglängsrichtung eingebautem Antriebsmotor. In günstiger Weise ist das Stirnrad 9 über eine entsprechend ausgebildete Lagereinheit axial und radial an der bereits vorhandenen Lagerplatte 35 gelagert, die auf der dem Haupt-Planetenradsatz 20 zugewandten Seite der Bremse C angeordnet ist. Das Stirnrad ist also unmittelbar zwischen Lagerplatte 35 und Haupt-Planetenradsatz 20 angeordnet.

Die Bremse D, über welche die gekoppelten Stege 25, 26 des Haupt-Planetenradsatzes 20 festsetzbar sind, ist nunmehr auf der dem Vorschalt-Planetenradsatz 10 abgewandten Seite des Haupt-Planetenradsatzes 20 angeordnet, angrenzend an eine Außenwand des Getriebegehäuses 30. Um eine möglichst geringe Lamellenanzahl der Bremse D und damit günstige Einbauverhältnisse für des. Mehrstufengetriebe zu erzielen, sind die Lamellen der Bremse D auf möglichst großen Außendurchmesser radial oberhalb des Haupt-Planetenradsatzes 20 angeordnet. Eine Servo-Einrichtung der Bremse D kann dabei vorzugsweise zwischen dem Stirnrad 9 bzw. der Abtriebswelle 4 und den Lamellen der Bremse D angeordnet sein. Beispielsweise kann die Servo-Einrichtung der Bremse D auch in die Außenwand des Getriebegehäuses 30 integriert sein, die auf der motorabgewandten Seite des Haupt-Planetenradsatzes 20 an den Haupt-Planetenradsatz 20 angrenzt, wobei diese Außenwand auch als Deckel ausgebildet sein kann.

In dem in Fig. 9 dargestellten beispielhaften Mehrstufengetriebe ist der Torsionsdämpfer 2 und damit der nicht dargestellte Antriebsmotor auf der Seite des Mehrstufengetriebes angeordnet, an der das sechste Schaltelement angeordnet ist. Torsionsdämpfer 2 und Antriebsmotor sind also näher am Vorschalt-Planetenradsatz 10 angeordnet als am Haupt-Planetenradsatz 20.

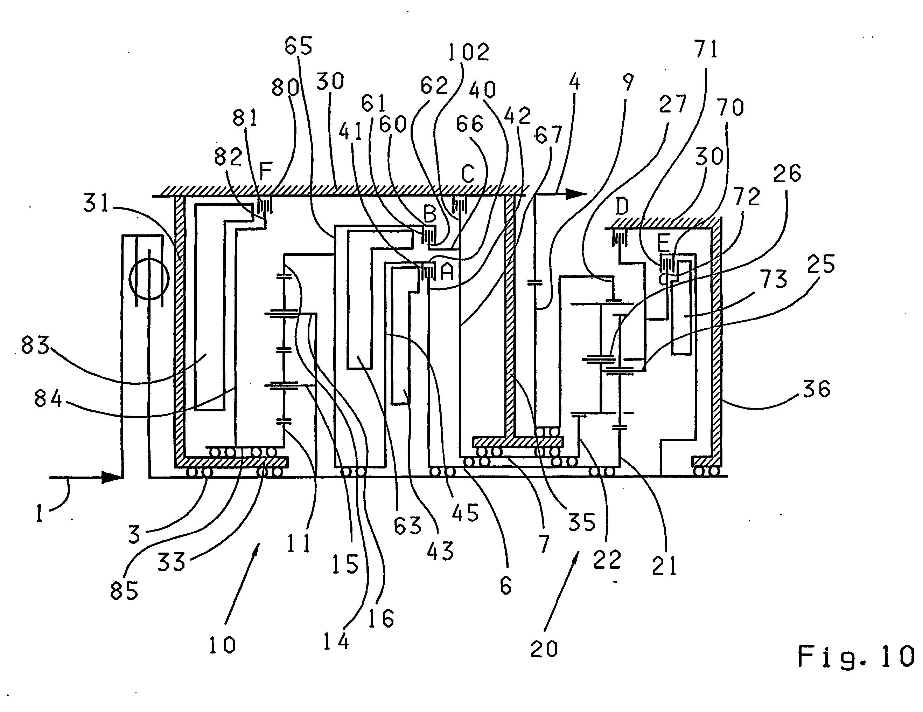

Fig. 10 zeigt nun eine fünfte beispielhafte Bauteil-Anordnungs-Variante eines Mehrstufengetriebes mit der ersten erfindungsgemäßen Vorschaltradsatz-Variante und vorzugsweise achsparallem An- und Abtrieb. Dabei sieht die Grundstruktur des Getriebeaufbaus vor, die Bremse F, den Vorschalt-Planetenradsatz 10, die Kupplungen A und B sowie die Bremse C zusammen in einem ersten Teil des Getriebegehäuses 30 anzuordnen, der sich zwischen der Getriebegehäusewand 31 und der Lagerplatte 35 erstreckt. Entsprechend sind das Stirnrad 9 mit Abtriebswelle 4, der Haupt-Planetenradsatz 20, die Bremse D sowie die Kupplung E zusammen in einem zweiten Teil des Getriebegehäuses 30 angeordnet, der sich von der Lagerplatte 35 bis zu einem Deckel 36 erstreckt, welcher auf der Seite des Getriebegehäuses 30 angeordnet ist, die der Getriebegehäusewand 31 gegenüber liegt. Selbstverständlich können Deckel 36 und Getriebegehäuse 30 auch einstückig ausgeführt sein.

Im Unterschied zu allen zuvor beschriebenen Ausführungsformen des erfindungsgemäßen Mehrstufengetriebes ist also das dritte Schaltelement E, über welches das dritte Eingangselement des Haupt-Planetenradsatzes 20 mit der Getriebe-Eingangsdrehzahl n_ein beaufschlagbar ist, nunmehr auf der Seite des Haupt-Planetenradsatzes 20 angeordnet, die dem Vorschalt-Planetenradsatz 10 abgewandt ist. Im dargestellten Beispiel sind Haupt-Planetenradsatzes 20 und Kupplung E auf der der Motorwelle 1 abgewandten Seite des Vorschalt-Planetenradsatzes 10 angeordnet. Die Kupplung E grenzt dabei unmittelbar an eine Gehäusewand des Getriebegehäuses 30 an, welche auf der der Motorwelle 1 entgegengesetzten Seite des Getriebegehäuses 30 angeordnet ist. Die Antriebswelle 3 des Mehrstufengetriebes durchdringt das Getriebe also zentrisch bis auf den Deckel 36 vollständig. Zur vereinfachten Montage des Getriebes kann die Antriebswelle 3 selbstverständlich auch mehrstückig ausgeführt sein.

Die Anordnung der Bremse F entspricht weitgehend der in Fig. 3 beschriebenen Anordnung. Wie in Fig. 10 ersichtlich, ist die Bremse F unverändert auf der dem Haupt-Planetenradsatz 20 abgewandten Seite des Vorschalt-Planetenradsatzes 10 angeordnet, angrenzend an die Getriebegehäusewand 31 des Getriebegehäuses 30, auf möglicht großem Durchmesser unmittelbar am Außendurchmesser des Getriebegehäuses 30. Der Außenlamellenträger 80 der Bremse F kann in einfacher Weise in das Getriebegehäuse 30 integriert sein. In dem axialen Raum zwischen der Getriebegehäusewand 31 und dem Innenlamellenträger 82 ist eine Servo-Einrichtung 83 zur Betätigung der Bremse F vorgesehen. Selbstverständlich kann dabei die Getriebegehäusewand 31 auch als separate, fest mit dem Getriebegehäuse 30 verbundene Zwischenplatte ausgebildet sein. Der Innenlamellenträger 82 der Bremse F weist einen scheibenförmigen Abschnitt 84 auf, der sich zentrisch nach innen erstreckt und mit der - in diesem Beispiel kurzen - Sonnenwelle 85 des Vorschalt-Planetenradsatzes 10 verbunden ist. Diese Sonnenwelle 85 ist mit dem Sonnenrad 11 des Vorschalt-Planetenradsatzes 10 verbunden und auf dem zylindrischen Vorsprung 33 der Getriebegehäusewand 31, der sich axial in Richtung des Vorschalt-Planetenradsatzes 10 erstreckt, gelagert. Die Servo-Einrichtung 83 der Bremses F grenzt also insbesondere an die Getriebegehäusewand 31 und an den scheibenförmigen Abschnitt 84 des Innenlamellenträgers 82 der Bremse F an. Die Druckmittelkanäle zur Betätigung der Bremse F können innerhalb der Getriebegehäusewand 31 und/oder des zylindrischen Vorsprungs 33 verlaufen.

Der Vorschalt-Planetenradsatz 10 grenzt axial unmittelbar an die Bremse F an, insbesondere unmittelbar an den scheibenförmigen Abschnitt 84 des Innenlamellenträgers 82, wobei die Lamellen 81 der Bremse F zumindest teilweise auch bauraumsparend oberhalb des Hohlrades 14 des Vorschalt-Planetenradsatzes 10 angeordnet sein können. Die Antriebswelle 3 des Mehrstufengetriebes ist beispielhaft in dem zylindrischen Vorsprung 33 der Getriebegehäusewand 31 gelagert und auf der der Bremse F abgewandten Seite des Vorschalt-Planetenradsatzes 10 mit dessen gekoppelten Stegen 15, 16 verbunden.

Die Kupplungen A, B sind räumlich zwischen Vorschalt-und Haupt-Planetenradsatz 10, 20 angeordnet, auf der der Bremse F abgewandten Seite des Vorschalt-Planetenradsatzes 10. Die Lamellen 41, 61 der Kupplungen A, B sind räumlich zumindest weitgehend übereinander angeordnet, wobei die Lamellen 61 der Kupplung B einen größeren Durchmesser aufweisen als die Lamellen 41 der Kupplung A. Die Eingangselemente beider Kupplungen A, B sind als Außenlamellenträger 40, 60 ausgebildet, die Ausgangselemente beider Kupplungen als Innenlamellenträger 42, 62.

Das Eingangselement der Kupplung B ist als Außenlamellenträger 60 ausgebildet, als in Richtung Haupt-Planetenradsatz 20 geöffneter Zylinder mit einem scheibenförmigen Abschnitt 65, welcher unmittelbar an den Vorschalt-Planetenradsatz 10, insbesondere an die gekoppelten Stege 15, 16 des Vorschalt-Planetenradsatzes 10 angrenzt und mit dem Hohlrad 14 des Vorschalt-Planetenradsatzes 10 verbunden ist. Dieser scheibenförmige Abschnitt 65 erstreckt sich dabei radial zur Getriebemittelachse hin und ist über einen Lagerabschnitt, der sich axial in Richtung Haupt-Planetenradsatz 20 erstreckt, auf der Antriebswelle 3 gelagert. Der Außenlamellenträger 40 der Kupplung A als deren Eingangselement ist ebenfalls als in Richtung Haupt-Planetenradsatz 20 geöffneter Zylinder ausgebildet. Ein scheibenförmiger Abschnitt 45 dieses Eingangselementes der Kupplung A erstreckt sich radial zur Getriebemittelachse hin bis zu dem Lagerabschnitt des Außenlamellenträgers 60 der Kupplung. B auf der Antriebswelle 3. Im Bereich dieses Lagerabschnitt des Außenlamellenträgers 60 sind die beiden Außenlamellenträger 40, 60 der Kupplungen A, B miteinander verbunden.

Der Innenlamellentäger 42 der Kupplung A ist überwiegend scheibenförmig ausgebildet und zentrisch zur Getriebemittelachse hin geführt bis zur ersten Sonnenwelle 6, die in diesem Ausführungsbeispiel direkt auf der Antriebswelle 3 gelagert ist und das Ausgangselement der Kupplung A mit dem kleinen Sonnenrad 21 des Haupt-Planetenradsatzes 20 verbindet. Das als Innenlamellenträger 62 ausgebildete Ausgangselement der Kupplung B umfaßt einen kurzen zylinderförmigen Abschnitt 66, der sich in axial in Richtung Haupt-Planetenradsatz erstreckt, sowie einen sich an den zylinderförmigen Abschnitt 66 anschließenden scheibenförmigen Abschnitt 67, der mir dem Innenlamellentäger 102 der Bremse C verbunden ist und sich zentrisch in Richtung Getriebemittelachse erstreckt bis zur zweiten Sonnenwelle 7, die koaxial oberhalb der ersten Sonnenwelle 6 verläuft und auf dieser gelagert ist und das Ausgangselement der Kupplung B mit dem großen Sonnenrad 22 des Haupt-Planetenradsatzes 20 verbindet.

Die Servo-Einrichtung 63 der Kupplung B ist axial zwischen dem scheibenförmigen Abschnitt 65 des als Außenlamellenträger 60 ausgebildeten Eingangselementes der Kupplung B und dem scheibenförmigen Abschnitt 45 des als Außenlamellenträgers 42 ausgebildeten Eingangselementes der Kupplung A angeordnet, vorzugsweise unmittelbar angrenzend an diese beiden scheibenförmige Abschnitte 65, 45. Die Servo-Einrichtung 43 der Kupplung A ist axial zwischen dem scheibenförmigen Abschnitt 45 des Eingangselementes der Kupplung A und dem überwiegend scheibenförmigen Innenlamellenträger 42 der Kupplung A angeordnet, vorzugsweise unmittelbar angrenzend an den scheibenförmigen Abschnitt 45.

Die Kupplung A liegt also vollständig innerhalb des Kupplungsraums der Kupplung B, welcher durch den zylinderförmigen Außenlamellenträger 60 und dem zylinderförmigen Abschnitt 66 des Innenlamellenträgers 62 der Kupplung B aufgespannt wird.

In vorteilhafter Weise rotieren beide Servo-Einrichtungen 43, 63 der Kupplungen A, B stets mit der Ausgangsdrehzahl n_vs des Vorschalt-Planetenradsatzes 10. Hierdurch wird ein Leerlaufen der Kolbenräume - und soweit vorgesehen auch der Druckausgleichsräume - beider Kupplung A, B in derem nichtgeschalteten Zustand vermieden und somit der Schaltkomfort beim Wiederzuschalten verbessert.

Die Lagerplatte 35 schließt sich an die Bremse C und den scheibenförmigen Abschnitt 67 des Ausgangselementes der Kupplung B axial in Richtung Haupt-Planetenradsatz 20 an. Dabei ist die Lagerplatte 35 im dargestellten Beispiel als separates Bauteil ausgebildet und mit dem Getriebegehäuse 30 verbunden und übernimmt sowohl eine zusätzliche Lagerung der zweiten Sonnenwelle 7, als auch die Lagerung des Stirnrades 9, welches auf der dem Haupt-Planetenradsatz 20 zugewandten Seite der Lagerplatte 35 unmittelbar an die Lagerplatte 35 angrenzt.

Wie bereits eingangs der Beschreibung von Fig. 10 erwähnt, sind Haupt-Planetenradsatzes 20 Bremse D und Kupplung E ebenfalls auf der dem Vorschalt-Planetenradsatz 10 abgewandten Seite der Lagerplatte 35 angeordnet. Dabei grenzt der Haupt-Planetenradsatz 20 unmittelbar an das Stirnrad 9 und die mit dem Stirnrad 9 wirkverbundene Abtriebswelle 4 an. Der Haupt-Planetenradsatz 20 ist also auf der Seite des Stirnrads 9 angeordnet, die der Lagerplatte 35 abgewandt ist. Unverändert bildet das Hohlrad 27 das Ausgangselement des Haupt-Planetenradsatzes 20 und ist mit dem Stirnrad 9 verbunden. Die Bremse D, über welche die gekoppelten Stegen 25, 26 des beispielhaften Ravigneaux-Radsatzes festsetzbar sind, ist lamellensparend und damit baulängensparend radial oberhalb des Hohlrades 27 des Haupt-Planetenradsatzes 20 angeordnet. Die Kupplung E grenzt unmittelbar an eine Gehäuseaußenwand des Getriebegehäuses 30 an, welche auf der der Getriebegehäusewand 31 gegenüberliegenden Seite des Getriebegehäuses 30 liegt. Die Antriebswelle 3 des Mehrstufengetriebes ist zentrisch durch den Haupt-Planetenradsatz 20 hindurch geführt und auf der dem Stirnrad abgewandten Seite des Haupt-Planetenradsatzes 20 mit dem Außenlamellenträger 70 der Kupplung E verbunden. Dabei ist der Außenlamellenträger 70 der Kupplung E vorzugsweise als in Richtung Haupt-Planetenradsatz 20 offener Zylinder ausgebildet. Die Lamellen 71 der Kupplung E sind vorzugsweise auf großem Durchmesser angeordnet mit der Folge einer geringen Lamellenanzahl. Der Innenlamellenträger 72 bildet das Ausgangselement der Kupplung E und ist mit den gekoppelten Stegen 25, 26 des Haupt-Planetenradsatzes 20 verbunden. Die Servo-Einrichtung 73 der Kupplung E ist beispielhaft innerhalb des zylinderförmigen Außenlamellenträgers 70 angeordnet, in axialer Richtung angrenzend an den Innenlamellenträger 72 der Kupplung E. In vorteilhafter Weise rotiert Servo-Einrichtung 73 der Kupplung E also stets mit Getriebe-Eingangsdrehzahl n_ein, wodurch ein Leerlaufen eines Kolbenraums der Kupplung E - und soweit vorhanden auch ein Leerlaufen eines Druckausgleichsraums eines dynamischen Druckausgleichs der Kupplung E - vermieden wird.

In einer Ausgestaltung der Bauteile-Anordnung gemäß Fig. 10 kann auch vorgesehen sein, daß die Motorwelle 1 und damit der nicht dargestellte Antriebsmotor auf der Seite des Mehrstufengetriebes angeordnet ist, an der Haupt-Planetenradsatz 20 und Kupplung E angeordnet sind, also auf der dem Vorschalt-Planetenradsatz 20 abgewandten Seite des Haupt-Planetenradsatzes 20, auf der dem Haupt-Planetenradsatz 20 abgewandten Seite der Kupplung E. Bei dieser Ausgestaltung ist der Deckel 36 entsprechend an der Getriebegehäusewand 31 angeordnet, an die das sechste Schaltelement F angrenzt. Selbstverständlich können Deckel 36 und Getriebegehäusewand 31 dabei auch einstückig ausgeführt sein. Die motornahe Anordnung des Haupt-Planetenradsatzes 20 hat akustische Vorteile aufgrund der verringerten Geräuschabstrahlflächen im Bereich des mehrgliedrigen Haupt-Planetenradsatzes 20 und ist insbesondere dann günstig, wenn der Haupt-Planetenradsatz 20 als Ravigneaux-Radsatz ausgebildet ist. Der Ravigneaux-Radsatz ist zwar eine sehr kompakte bauraumsparende Ausführung eines Zweisteg-Vierwellen-Getriebes, bekanntlich jedoch akustisch kritisch aufgrund der Stufenplaneten-Fertigung.

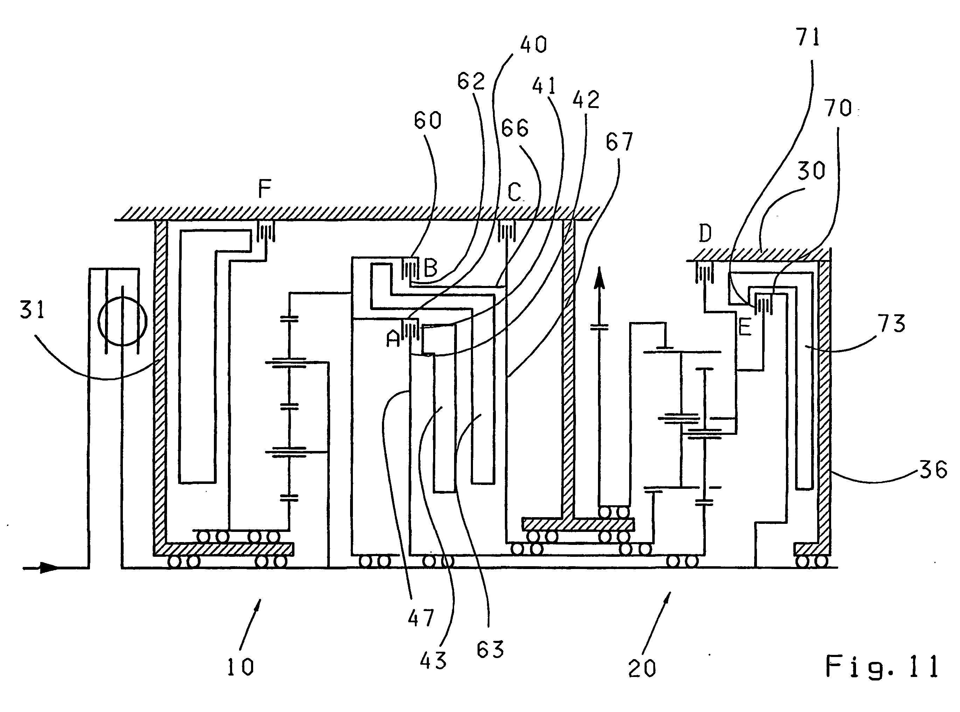

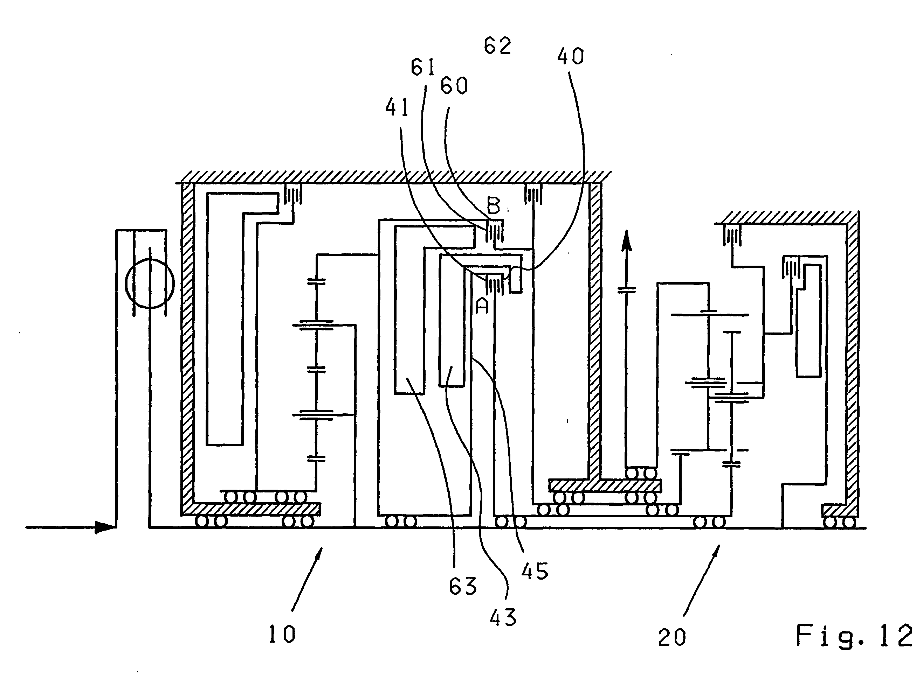

Abgeleitet aus der in Fig. 10 beschriebenen beispielhaften Bauteile-Anordnung, zeigen Fig. 11 und Fig. 12 zwei verschiedene Ausgestaltungen für die räumliche Anordnung der Servo-Elemente 43, 63 der Kupplungen A und B. Dabei ist die räumliche Anordnung der Lamellen 41, 61 beider Kupplungen A, B relativ zu Vorschalt- und Haupt-Planetenradsatz 10, 20, zum Stirnrad 9 und zu den anderen Schaltelementen C bis F gegenüber der Anordnung gemäß Fig. 10 unverändert. Ebenso unverändert bilden die Außenlamellenträger 40, 60 die jeweiligen Eingangselemente der Kupplungen A, B und die Innenlamellenträger 42, 62 die jeweiligen Ausgangselemente.

Im Unterschied zu Fig. 10 wird in der Ausgestaltung gemäß Fig. 11 vorgeschlagen, daß die Servo-Einrichtung 43 der Kupplung A auf der dem Vorschalt-Planetenradsatz 10 abgewandten Seite der Lamellen 41 der Kupplung A angeordnet ist, unmittelbar axial angrenzend an den Innenlamellenträger 42 der Kupplung A, insbesondere unmittelbar angrenzend an den scheibenförmigen Abschnitt 47 des als Innenlamellenträger 42 ausgebildeten Ausgangselemenetes der Kupplung A. Die Lamellen 41 der Kupplung A werden also nunmehr von deren dem Vorschalt-Planetenradsatz 10 abgewandten Seite her betätigt.

Weiterhin wird in der Ausgestaltung gemäß Fig. 11 vorgeschlagen, daß die Servo-Einrichtung 63 der Kupplung B zumindest teilweise axial in Richtung Haupt-Planetenradsatz 20 unmittelbar an die Servo-Einrichtung 43 der Kupplung A angrenzt, wobei sich ein Betätigungselement der Servo-Einrichtung 63 der Kupplung. B radial unterhalb des zylindrischen Abschnitts 66 des als Innenlamellenträger 62 ausgebildeten Ausgangselementes der Kupplung B, aber radial oberhalb der Servo-Einrichtung 43 und des Außenlamellenträgers 40 der Kupplung A axial in Richtung Vorschalt-Planetenradsatz 10 erstreckt, die Lamellen 61 der Kupplung B von derem Innendurchmesser her umgreift und die Lamellen 61 von ihrer dem Vorschalt-Planetenradsatz 10 zugewandten Seite her betätigt. Auf ihrer dem Haupt-Planetenradsatz 20 zugewandten Seite grenzt die Servo-Einrichtung 63 der Kupplung B an den scheibenförmigen Abschnitt 67 des Innenlamellenträgers 62 der Kupplung B an.

In vorteilhafter Weise können also beide Servo-Einrichtungen 43, 63 der Kupplungen A, B innerhalb des zylinderförmig ausgebildeten Innenlamellenträgers 62 der Kupplung B als Baugruppe zusammen mit den Innenlamellenträgern 42, 62 beider Kupplungen A, B vormontiert werden.

Ebenfalls in Fig. 11 beispielhaft dargestellt ist eine zu Fig. 10 alternative Anordnung der Servo-Einrichtung 73 des fünften Schaltelementes E. Die Servo-Einrichtung 73 grenzt nunmehr unmittelbar an eine als Deckel 36 ausgebildete Außenwand Getriebegehäuses 30 an, die sich auf der Seite des Mehrstufengetriebes befindet, die der Getriebegehäusewand 31 gegenüber liegt. Im dargestellten Beispiel ist der Deckel 36 als separates Bauteil ausgebildet und mit dem Getriebegehäuse 30 verbunden. Es kann aber auch vorgesehen sein, daß Deckel 36 und Getriebegehäuse 30 einstückig ausgeführt sind. Die Servo-Einrichtung 73 der Kupplung E ist also nicht mehr innerhalb des zylinderförmigen Außenlamellenträgers 70 der Kupplung E angeordnet. Bei dieser Ausgestaltung greift ein Betätigungselement der Servo-Einrichtung 73 in axialer Richtung radial über den Außenlamellenträger 70 und betätigt die Lamellen 71 der Kupplung E von deren dem Stirnrad 9 zugewandten Seite her.

Selbstverständlich kann die in Fig. 10 dargestellte beispielhafte Anordnung der Servo-Einrichtung 73 der Kupplung E durch die in Fig. 11 beschriebene Anordnung der Servo-Einrichtung 73 ersetzt werden. Das gleiche gilt auch für die in den folgenden Fig. 12 bis Fig. 16 jeweils dargestellte beispielhafte Anordnung der Servo-Einrichtung 73.

Fig. 12 zeigt nun eine zu Fig. 10 alternative zweite Ausgestaltung für die räumliche Anordnung der Servo-Elemente 43, 63 der Kupplungen A und B. Die räumliche Anordnung der Servo-Einrichtung 63 der Kupplung B entspricht der in Fig. 10 dargestellten Anordnung. Im Unterschied zu Fig. 10 grenzt die Servo-Einrichtung 43 der Kupplung A nunmehr unmittelbar an die Servo-Einrichtung 63 der Kupplung B an. Die Servo-Einrichtung 63 der Kupplung B ist also näher am Vorschalt-Planetenradsatz 10 angeordnet als die Servo-Einrichtung 43 der Kupplung A. Räumlich ist die Servo-Einrichtung 43 der Kupplung A auf der dem Vorschalt-Planetenradsatz 10 zugewandten Seite des Außenlamellenträgers 40 und der Lamellen 41 der Kupplung A angeordnet, vorzugsweise unmittelbar angrenzend an den scheibenförmigen Abschnitt 45 des Außenlamellenträgers 40. Bei dieser Anordnung greift ein Betätigungselement der Servo-Einrichtung 43 der Kupplung A - radial unterhalb der Lamellen 61 der Kupplung B - axial in Richtung Haupt-Planetenradsatz 20 radial über den Außenlamellenträger 40 und die Lamellen 41 der Kupplung A und betätigt die Lamellen 41 von deren dem Vorschalt-Planetenradsatz 10 abgewandten Seite her.

Beide Servo-Einrichtungen 43, 63 der Kupplungen A, B sind also zumindest überwiegend innerhalb des zylinderförmigen Außenlamellenträgers 60 der Kupplung B angeordnet und können in einfacher Weise zusammen mit beiden Außenlamellenträgern 40, 60 der Kupplungen A, B als Baugruppe vormontiert werden. Wie bei der Anordnung gemäß Fig. 10 rotieren beide Servo-Einrichtungen 43, 63 stets mit der Ausgangsdrehzahl n_vs des Vorschalt-Planetenradsatzes 10, wodurch ein Leerlaufen der Kolbenräume bzw. Druckausgleichsräume der Kupplungen A, B im nichtgeschalteten Zustand vermieden wird.

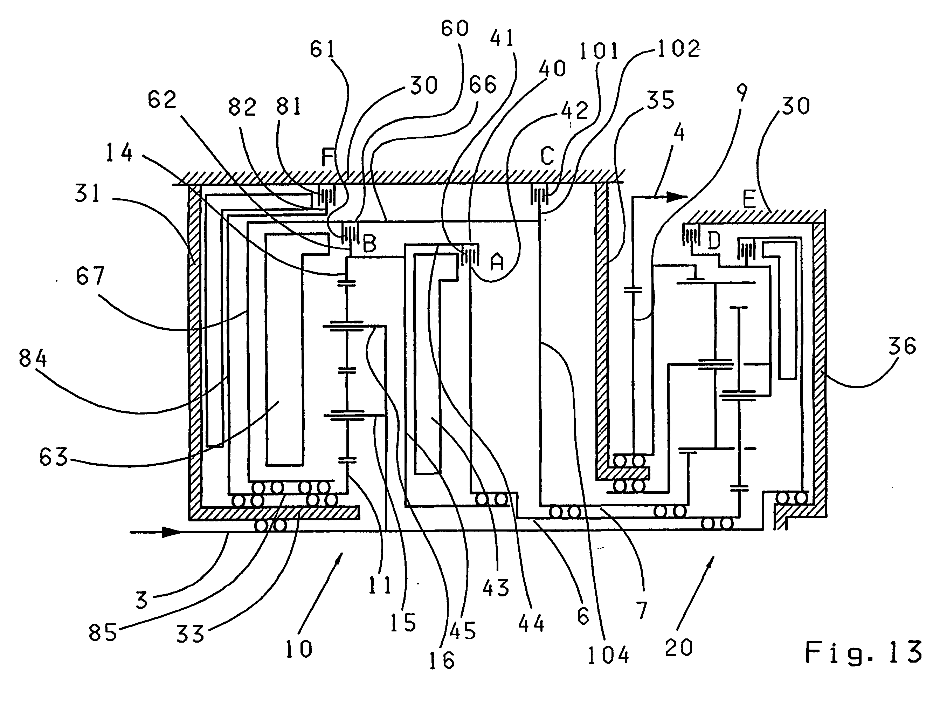

Fig. 13 zeigt nun eine sechste beispielhafte Bauteil-Anordnungs-Variante eines Mehrstufengetriebes mit der ersten erfindungsgemäßen Vorschaltradsatz-Variante und vorzugsweise achsparallem An- und Abtrieb. Dabei entspricht die Grundstruktur des Getriebeaufbaus im wesentlichen der Struktur, die zuvor anhand Fig. 10 detailliert erläutert wurde. Bremse F, Vorschalt-Planetenradsatz 10, Kupplung A, Kupplung B und Bremse C sind zusammen in einem ersten Teil des Getriebegehäuses 30 angeordnet, der sich zwischen der Getriebegehäusewand 31 und der Lagerplatte 35 erstreckt. Entsprechend sind Stirnrad 9, Abriebswelle 4, Haupt-Planetenradsatz 20, Bremse D und Kupplung E zusammen in einem zweiten Teil des Getriebegehäuses 30 angeordnet, der sich von der Lagerplatte 35 bis zu dem Deckel 36, welcher auf der Seite des Getriebegehäuses 30 angeordnet ist, die der Getriebegehäusewand 31 gegenüber liegt, erstreckt. Die Bauteile-Anordnung von Stirnrad 9, Abtriebswelle 4, Haupt-Planetenradsatz 20, Bremse D und Kupplung E innerhalb dieses zweiten Teils des Getriebegehäuses 30 ist vollständig aus Fig. 10 übernommen. Ebenso aus Fig. 10 übernommen ist die kraftflußmäßige Anbindung von Haupt-Planetenradsatz 20 und Kupplung E an die Antriebswelle 3 und die erste und zweite Sonnenwelle 6, 7, wobei alle drei koaxial übereinander verlaufenden Wellen 3, 6, 7 zentral durch die Lagerplatte 35 verlaufen.

Innerhalb des ersten Teils des Getriebegehäuses 30 entspricht die in Fig. 13 gezeigte Anordnung der Bremse F, die unmittelbar an die Getriebegehäusewand 31 angrenzt, der in Fig. 10 erläuterten Anordnung. Der scheibenförmige Abschnitt 84 des Innenlamellenträgers 82 der Bremse F erstreckt sich entlang der Getriebegehäusewand 31 radial in Richtung Antriebswelle 3 bis zu der Sonnenwelle 85 des Vorschalt-Planetenradsatzes 10, die oberhalb der Antriebswelle 3 an dem sich zum Vorschalt-Planetenradsatz 10 hin erstreckenden zylinderförmigen Vorsprung 33 der Getriebegehäusewand 31 gelagert ist. Die Sonnenwelle 85 ist mit dem Sonnenrad 11 des Vorschalt-Planetenradsatzes 10 verbunden. Dabei ist der Vorschalt-Planetenradsatz 10 - ähnlich wie in Fig. 10 - axial in Richtung Lagerplatte 35 bzw. Haupt-Planetenradsatz 20 neben der Bremse F angeordnet und sein Eingangselement auf seiner dem Haupt-Planetenradsatz 20 zugewandten Seite mit der Antriebswelle 3 verbunden, grenzt jedoch nicht mehr unmittelbar an den scheibenförmigen Abschnitt 84 des Innenlamellenträgers 82 der Bremse F an.

Das Eingangselement der Kupplung B, das mit dem Hohlrad 14 des Vorschalt-Planetenradsatzes 10 verbunden ist, ist nunmehr als Innenlamellenträger 62 ausgebildet. Die Lamellen 61 der Kupplung B sind zumindest teilweise in radialer Richtung oberhalb des Hohlrades 14 angeordnet. Das Ausgangselement der Kupplung B ist als Außenlamellenträger 60 ausgebildet, als in Richtung Haupt-Planetenradsatz 20 geöffneter Zylinder, mit einem zylindrischen Abschnitt 66, der sich axial in einem weiten Bereich des ersten Teils des Getriebegehäuses 30 von dem scheibenförmigen Abschnitt 84 des Innenlamellenträgers 82 der Bremse F bis zu den Lamellen 101 der Bremse C erstreckt. Dabei grenzt die Bremse C unmittelbar an die dem Vorschalt-Planetenradsatz 10 zugewandten Seite der Lagerplatte 35 an. Ein Teil des zylindrischen Abschnitts 66 verläuft radial unterhalb der Lamellen 81 der Bremse F. Auf der Seite des Außenlamellenträgers 60, die der Getriebegehäusewand 31 zugewandt ist, schließt sich an den zylindrischen Abschnitt 66 ein scheibenförmiger Abschnitt 67 des Ausgangselementes der Kupplung B an, der sich - unmittelbar angrenzend an den scheibenförmigen Abschnitt 84 des Innenlamellenträgers 82 der Bremse F - zentrisch in Richtung Antriebswelle 3 erstreckt bis zu einem Lagerabschnitt, der auf der Sonnenwelle 85 des Vorschalt-Planetenradsatzes 10 gelagert ist. An der offenen Seite des zylinderförmigen Außenlamellenträgers 60 der Kupplung B ist der zylinderförmige Abschnitt 66 mit dem Innenlamellenträger 102 der Bremse C verbunden, der einen scheibenförmigen Abschnitt 104 ausweist, der zentrisch nach innen geführt ist bis zu der zweiten Sonnenwelle 7, über die er mit dem zweiten Eingangselement des Haupt-Planetenradsatzes 20 verbunden ist. Im ausgeführten Beispiel ist die zweite Sonnenwelle 7 koaxial oberhalb der ersten Sonnenwelle 6 gelagert, sie kann aber zusätzlich oder auch ausschließlich in den Lagerplatte 35 gelagert sein.

Die Servo-Einrichtung 63 der Kupplung B ist axial zwischen dem scheibenförmiger Abschnitt 67 des als Außenlamellenträger 60 ausgebildeten Ausgangselementes der Kupplung B und dem Vorschalt-Planetenradsatz 10 angeordnet, vorzugsweise hieran unmittelbar angrenzend. Infolge der notwendigen Baubreite der Servo-Einrichtung 63 ist die Lagerbasis des Außenlamellenträgers 60 der Kupplung B vorteilhaft auch relativ breit.

Auf der dem Haupt-Planetenradsatz 20 zugewandten Seite des Vorschalt-Planetenradsatzes 10 ist die Kupplung A angeordnet, angrenzend an den Vorschalt-Planetenradsatz 10. Der Außenlamellenträger 40 der Kupplung A ist als deren Eingangselement mit dem Hohlrad 14 des Vorschalt-Planetenradsatzes 10 verbunden und als Zylinder ausgebildet, der in Richtung des Haupt-Planetenradsatzes 20 geöffnet ist. Das Eingangselement der Kupplung A umfaßt einen zylinderförmigen Abschnitt 44 und einen scheibenförmigen Abschnitt 45. Der scheibenförmige Abschnitt 45 grenzt dabei an die gekoppelten Stege 15, 16 des Vorschalt-Planetenradsatzes 10 an und erstreckt sich zentral in Richtung Antriebswelle 3 bis zu einem Lagerabschnitt, der sich vorzugsweise knapp oberhalb des Außendurchmessers der Antriebswelle 3 befindet und auch auf der Antriebswelle 3 gelagert sein kann. Das Ausgangselement der Kupplung A ist als Innenlamellenträger 42 ausgebildet, der im ausgeführten Beispiel zumindest weitgehend scheibenförmig ausgebildet ist und sich zentral in Richtung Antriebswelle 3 erstreckt, bis zu einem Lagerabschnitt, an dem der Außenlamellenträger 60 der Kupplung A gelagert ist, und bis zu der ersten Sonnenwelle 6, die auf der Antriebswelle 3 gelagert ist und den Innenlamellenträger 42 der Kupplung A mit dem ersten Eingangselement des Haupt-Planetenradsatzes 20 verbindet.

Die Servo-Einrichtung 43 der Kupplung A ist räumlich zwischen dem Vorschalt-Planetenradsatz 10 und den Lamellen 41 der Kupplung A angeordnet, vollständig innerhalb des zylinderförmigen Außenlamellenträgers 40 der Kupplung A, vorzugsweise unmittelbar angrenzend an den scheibenförmigen Abschnitt 45 des Eingangselementes der Kupplung A. In vorteilhafter Weise rotiert die Servo-Einrichtung 43 der Kupplung A also stets mit der Ausgangsdrehzahl n_vs des Vorschalt-Planetenradsatzes 10.

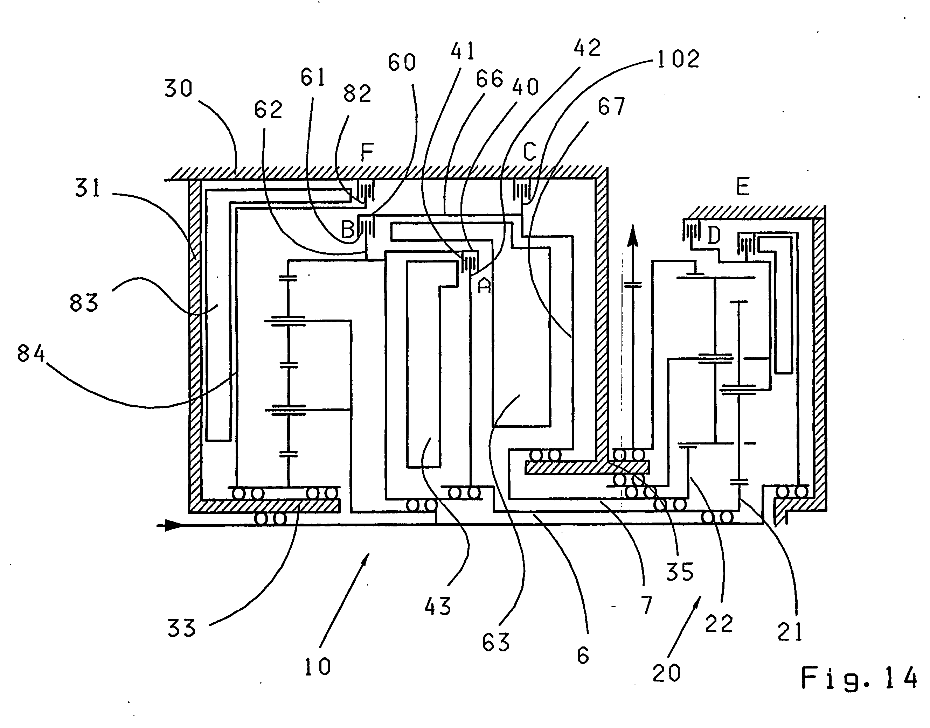

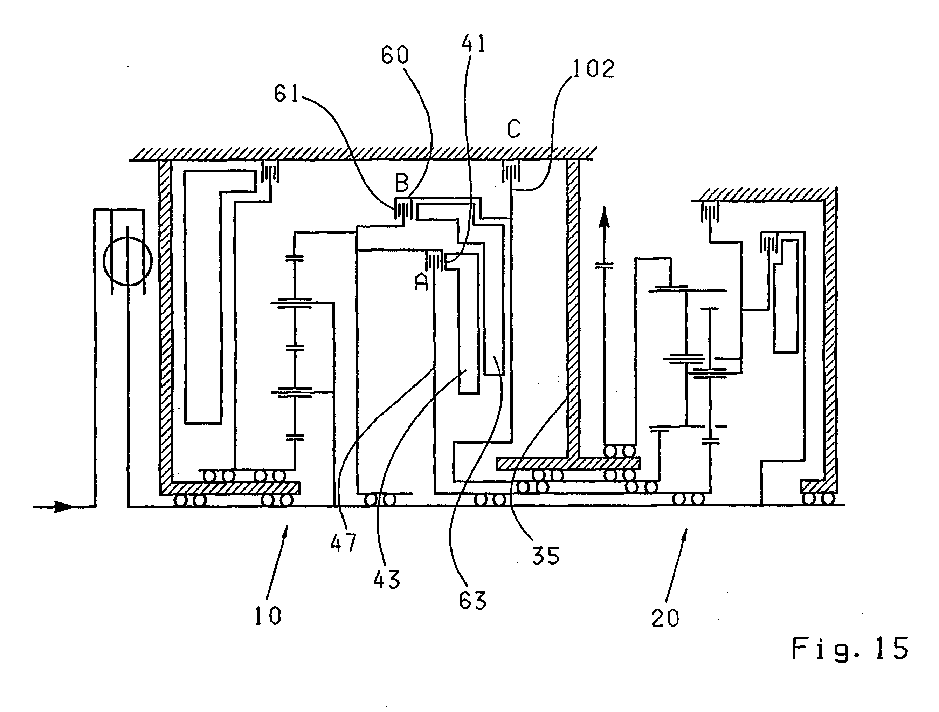

Basierend auf der in Fig. 13 dargestellten beispielhaften Bauteile-Anordnung zeigen Fig. 14 und Fig. 15 nun zwei Ausgestaltungen für die Anordnung der Servo-Einrichtungen 43, 63 der Kupplungen A und B. Wie in Fig. 14 dargestellt, wird in einer ersten Ausgestaltung vorgeschlagen, die Servo-Einrichtung 63 der Kupplung B - bei unveränderter Lage der Lamellen 61 der Kupplung B zumindest teilweise in radialer Richtung oberhalb des Vorschalt-Planetenradsatzes 10 - auf der dem Haupt-Planetenradsatz 20 zugewandten Seite des Vorschalt-Planetenradsatzes 10 anzuordnen, axial in Richtung des Haupt-Planetenradsatzes 20 angrenzend an die Kupplung A. Vorzugsweise grenzt dabei ein Teil der Servo-Einrichtung 63 der Kupplung B unmittelbar an den überwiegend scheibenförmig ausgebildeten Innenlamellenträger 42 der Kupplung A an. Ein Betätigungselement der Servo-Einrichtung 63 erstreckt sich radial zwischen dem Außenlamellenträger 40, der das Eingangselement der Kupplung A bildet, und einem zylinderförmigen Abschnitt 66 des als Außenlamellenträger 60 ausgebildeten Ausgangselement der Kupplung B, axial in Richtung Vorschalt-Planetenradsatz 10 bis zu den Lamellen 61 der Kupplung B. Die Lamellen 61 der Kupplung B werden also im Unterschied zu Fig. 13 nunmehr von deren dem Haupt-Planetenradsatz 20 zugewandten Seite her betätigt.

Entsprechend ist der Außenlamellenträger 60 der Kupplung B als in Richtung des Vorschalt-Planetenradsatz 10 bzw. der Getriebegehäusewand 31 geöffneter Zylinder ausgebildet. An den zylinderförmigen Abschnitt 66 des Ausgangselementes der Kupplung B schließt sich, angrenzend an die Lagerplatte 35, ein zumindest teilweise scheibenförmiger Abschnitt 67 des Ausgangselementes der Kupplung B an und ist im Bereich seines Außendurchmessers mit dem Innenlamellenträger 102 der Bremse C und im Bereich seines Innendurchmessers mit der zweiten Sonnenwelle 7 verbunden. In günstiger Weise ist der Außenlamellenträger 60 über eine relativ breite Lagerung an einem zylinderförmigen Vorsprung der Lagerplatte 35, der sich in Richtung des Vorschalt-Planetenradsatzes 10 erstreckt, gelagert.

Wie in Fig. 14 ersichtlich, liegt die Servo-Einrichtung 83 der Bremse F infolge der anderen räumlichen Anordnung der Servo-Einrichtung 63 der Kupplung B nunmehr näher am Vorschalt-Planetenradsatz 10 als in der zugrundeliegenden Anordnung gemäß Fig. 13. Insbesondere grenzt nunmehr der scheibenförmige Abschnitt 84 des Innenlamellenträgers 82 der Bremse F unmittelbar axial an den Vorschalt-Planetenradsatz 10 an.

In vorteilhafter Weise ermöglicht diese Anordnung ein einfache Montierbarkeit der einzelnen Bauelemente. So kann der zylinderförmige Außenlamellenträger 60 der Kupplung B, der vorzugweise gleichzeitig den Innenlamellenträger 102 der Bremse C bildet, mit der Servo-Einrichtung 43, den Lamellen 41 und dem Innenlamellenträger 42 der Kupplung A zusammen mit dem Innenlamellenträger 62 der Kupplung B als eine erste Baugruppe vormontiert werden, sowie der zylinderförmige Außenlamellenträger 60 mit der Servo-Einrichtung 63 und den Lamellen 61 der Bremse B zusammen als eine zweite Baugruppe. Anschließend können diese beiden Baugruppen einfach zusammengefügt werden und als Gesamt-Baugruppe in das Getriebegehäuse 30 eingebaut werden.

In Fig. 15 wird als eine zweiten Ausgestaltung der räumlichen Anordnung der Servo-Einrichtungen 43, 63 der Kupplungen A, B vorgeschlagen, abweichend von den zuvor beschriebenen Bauteile-Anordnungen gemäß Fig. 13 und Fig. 14, die jeweiligen Lamellen 41, 61 beider Kupplungen A, B nunmehr von deren Seite her zu betätigen, die der Lagerplatte 35 bzw. dem Haupt-Planetenradsatz 20 zugewandt ist. Die räumliche Lage der Lamellen 41, 61 relativ zu den Planetenradsätzen und anderen Schaltelementen ist dabei zumindest weitgehend identisch zu Fig. 13 und Fig. 14.

Die in Fig. 15 dargestellte Ausbildung und räumliche Anordnung des Außenlamellenträgers 60 der Kupplung B sowie die räumliche Anordnung der Servo-Einrichtung 63 der Kupplung B innerhalb des zylinderförmigen Außenlamellenträgers 60 wurde vollständig aus Fig. 14 übernommen. Im Unterschied zu Fig. 14 und auch zu Fig. 13 ist in Fig. 15 vorgesehen, daß die Servo-Einrichtung 43 der Kupplung A auf der dem Vorschalt-Planetenradsatz 10 abgewandte Seite der Lamellen 41 angeordnet ist, zwischen den Lamellen 41 der Kupplung A und der Servo-Einrichtung 63 der Kupplung B, vorzugsweise axial unmittelbar angrenzend an den scheibenförmigen Abschnitt 47 des als Innenlamellenträger 42 ausgebildeten Ausgangselement der Kupplung A. Somit liegen die Servo-Einrichtungen 43, 63 der Kupplungen A, B nunmehr nebeneinander, wobei die Kupplung A vollständig innerhalb des Kupplungsraums der Kupplung B, der durch den zylinderförmigen Außenlamellenträger 60 der Kupplung B gebildet wird, angeordnet ist.

Die in Fig. 15 vorgeschlagene ineinander geschachtelte Anordnung der Bauelemente von Kupplung A und Kupplung B ermöglicht eine sehr einfache Vormontage beider Kupplungen A, B als eine Baugruppe.

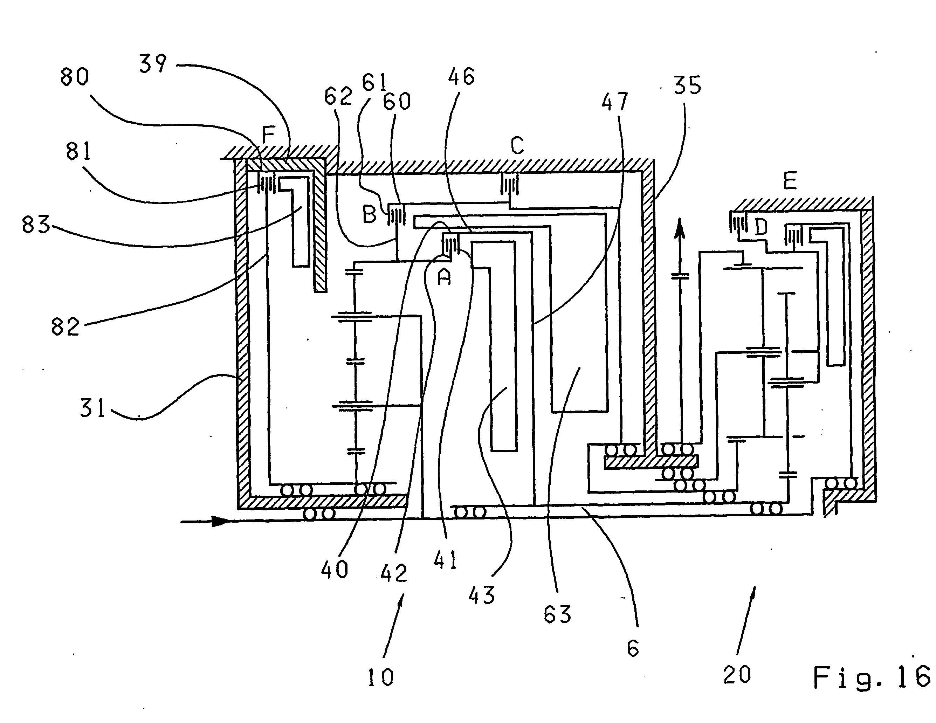

Fig. 16 zeigt nun eine siebte beispielhafte Bauteil-Anordnungs-Variante eines Mehrstufengetriebes mit der ersten erfindungsgemäßen Vorschaltradsatz-Variante und vorzugsweise achsparallem An- und Abtrieb. Dabei geht die in Fig. 16 vorgeschlagene Variante weitgehend von der zuvor in Fig. 14 beschriebenen Bauteil-Anordnung aus. Hauptsächlich unterschiedlich ist die Ausbildung von Eingangs- und Ausgangselement der Kupplung A und die sich hieraus ergebende sinnvolle Anordnung der Servo-Einrichtung 43 der Kupplung A. Das Eingangselement der Kupplung A ist nunmehr als Innenlamellenträger 42 ausgebildet, der sich an den oberhalb des Vorschalt-Planetenradsatzes 10 angeordneten Innenlamellenträger 62 der Kupplung B axial in Richtung Haupt-Planetenradsatz 20 anschließt. Der Außenlamellenträger 40 der Kupplung A bildet deren Ausgangselement und ist als in Richtung Vorschalt-Planetenradsatz 10 geöffneter Zylinder ausgeführt. Entsprechend erstreckt sich ein zylinderförmiger Abschnitt 46 des Ausgangselementes der Kupplung A radial unterhalb des zylinderförmigen Außenlamellenträgers 60 der Kupplung B axial in Richtung Lagerplatte 35 bzw. Haupt-Planetenradsatz 20, bis zu der Servo-Einrichtung 63 der Kupplung B, die innerhalb des zylinderförmigen Außenlamellenträgers 60 angeordnet ist. An diesen zylinderförmigen Abschnitt 46 schließt sich ein scheibenförmiger Abschnitt 47 des Ausgangselementes der Kupplung A an und erstreckt sich zentral nach innen bis zu der ersten Sonnenwelle 6, über die der Außenlamellenträger 40 der Kupplung A mit dem ersten Eingangselement des Haupt-Planetenradsatzes 20 verbunden ist. Dabei weist der Außenlamellenträger 40 der Kupplung A vorzugsweise einen kleineren Außendurchmesser auf als der Innendurchmesser der Lamellen 61 der Kupplung B.

Die Servo-Einrichtung 43 der Kupplung A ist räumlich zwischen den Lamellen 41 der Kupplung A und dem scheibenförmigen Abschnitt 47 des als Außenlamellenträger 40 ausgebildeten Ausgangselementes der Kupplung A angeordnet, vorzugsweise unmittelbar angrenzend an den scheibenförmigen Abschnitt 47. Somit ist die Kupplung A vollständig innerhalb des durch den zylinderförmigen Außenlamellenträger 60 gebildeten Kupplungsraum der Kupplung B angeordnet.

Die in Fig. 16 vorgeschlagene Bauteil-Anordnung ermöglicht insbesondere ein einfaches Einstellen der erforderlichen Lüftspiele beider Kupplungen A und B. Der mit Servo-Einrichtung 43 und Lamellen 41 vorkomplettierte Außenlamellenträger 40 der ersten Kupplung A kann in einfacher Weise in den mit Servo-Einrichtung 63 und Lamellen 61 vorkomplettierten Außenlamellenträger 60 der Kupplung B eingesetzt werden. Die anschließende Montage der Innenlamellenträger 42, 62 der Kupplungen A, B in den jeweiligen Lamellenpaketen kann nochmals vereinfacht werden, indem Innenlamellenträger 42, 62 einstückig ausgeführt sind.

Als eine Variante für die Anordnung der Servo-Einrichtung 83 der Bremse F wird beispielhaft vorgeschlagen, diese nunmehr zwischen Innenlamellenträger 82 und dem Vorschalt-Planetenradsatz 10 anzuordnen. Wie im Ausführungsbeispiel gemäß Fig.1 und Fig. 5 werden die Lamellen 81 der Bremse F also in Richtung Getriebegehäusewand 31 betätigt. Zur Abstützung der Servo-Einrichtung in die zu den Lamellen 81 entgegengesetzter Richtung ist im dargestellten Beispiel ein Zylinder 39 vorgesehen, der mit dem Getriebegehäuse 30 verbunden ist und eine senkrechte Wand aufweist, die axial in der zu den Lamellen 81 entgegengesetzten Richtung unmittelbar an die Servo-Einrichtung 83 angrenzt. Dabei nimmt der Zylinder 39 den Außenlamellenträger 80 der Bremse F auf. Selbstverständlich können Zylinder 39 und Außenlamellenträger 80 auch einstückig ausgebildet sein, wie beispielsweise in Fig. 5 vorgeschlagen. Auch kann der Zylinder 39 in das Getriebegehäuse 30 integriert sein.

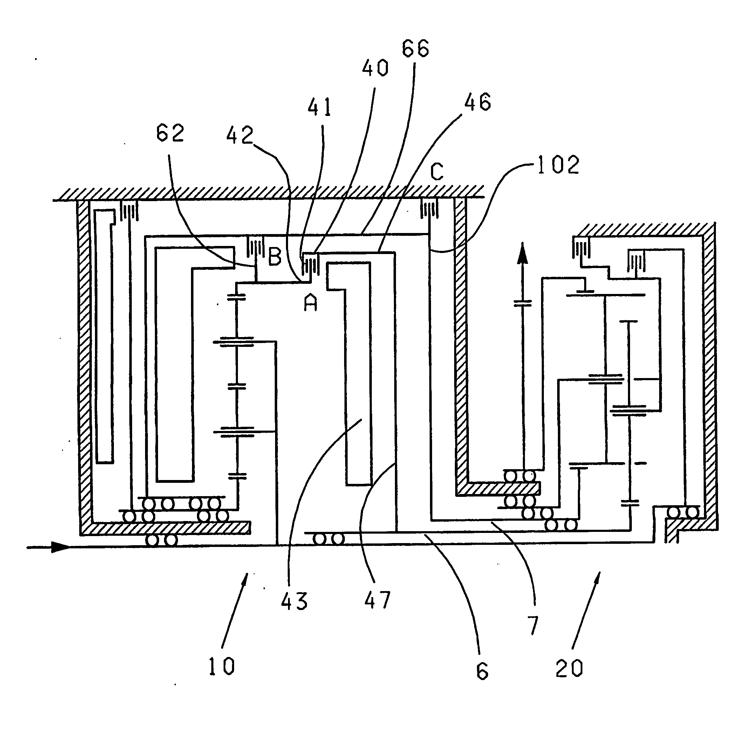

Fig. 17 zeigt eine achte beispielhafte Bauteil-Anordnungs-Variante eines Mehrstufengetriebes mit der ersten erfindungsgemäßen Vorschaltradsatz-Variante und vorzugsweise achsparallem An- und Abtrieb. Dabei geht die in Fig. 17 vorgeschlagene Variante weitgehend von der zuvor in Fig. 13 beschriebenen Bauteil-Anordnung aus. Hauptsächlich unterschiedlich ist die Ausbildung von Eingangs- und Ausgangselement der Kupplung A und die hieraus resultierende sinnvolle Anordung der Servo-Einrichtung 43 der Kupplung A. Das Eingangselement der Kupplung A ist nunmehr als Innenlamellenträger 42 ausgebildet, der sich an den oberhalb des Vorschalt-Planetenradsatzes 10 angeordneten Innenlamellenträger 62 der Kupplung B axial in Richtung Haupt-Planetenradsatz 20 anschließt. Der Außenlamellenträger 40 der Kupplung A bildet deren Ausgangselement und ist als in Richtung Vorschalt-Planetenradsatz 10 geöffneter Zylinder ausgeführt. Entsprechend erstreckt sich ein zylinderförmiger Abschnitt 46 des Ausgangselementes der Kupplung A radial unterhalb des zylinderförmigen Außenlamellenträgers 60 der Kupplung B axial in Richtung Haupt-Planetenradsatz 20, etwa bis zu einem scheibenförmigen Innenlamellenträger 102 der Bremse C, der mit der zweiten Sonnenwelle 7 verbunden ist. An diesen zylinderförmigen Abschnitt 46 des als Außenlamellenträger 40 ausgebildeten Ausgangselemenetes der Kupplung A schließt sich ein scheibenförmiger Abschnitt 47 an und erstreckt sich zentral nach innen bis zu der ersten Sonnenwelle 6, über die der Außenlamellenträger 40 der Kupplung A mit dem ersten Eingangselement des Haupt-Planetenradsatzes 20 verbunden ist. Vorzugsweise ist der Außendurchmesser des Außenlamellenträgers 40 der Kupplung A dabei nur geringfügig kleiner als der Innendurchmesser des zylinderförmigen Abschnittes 66 des als Außenlamellenträger 60 ausgebildeten Ausgangselementes der Kupplung B, um eine möglichst hohe Drehmoment-Übertragungsfähigkeit der Kupplung A bei gleichzeitig geringstmöglicher Lamellenanzahl zu erzielen.

Die Servo-Einrichtung 43 der Kupplung A ist räumlich zwischen den Lamellen 41 der Kupplung A und dem scheibenförmigen Abschnitt 47 des als Außenlamellenträger 40 ausgebildeten Ausgangselementes der Kupplung A angeordnet, vorzugsweise unmittelbar angrenzend an den scheibenförmigen Abschnitt 47. Die Betätigung der Lamellen 41 der Kupplung A erfolgt also von deren dem Vorschalt-Planetenradsatz 10 abgewandten Seite her. Somit umgreift das Ausgangselement der Kupplung B die Kupplung A vollständig.

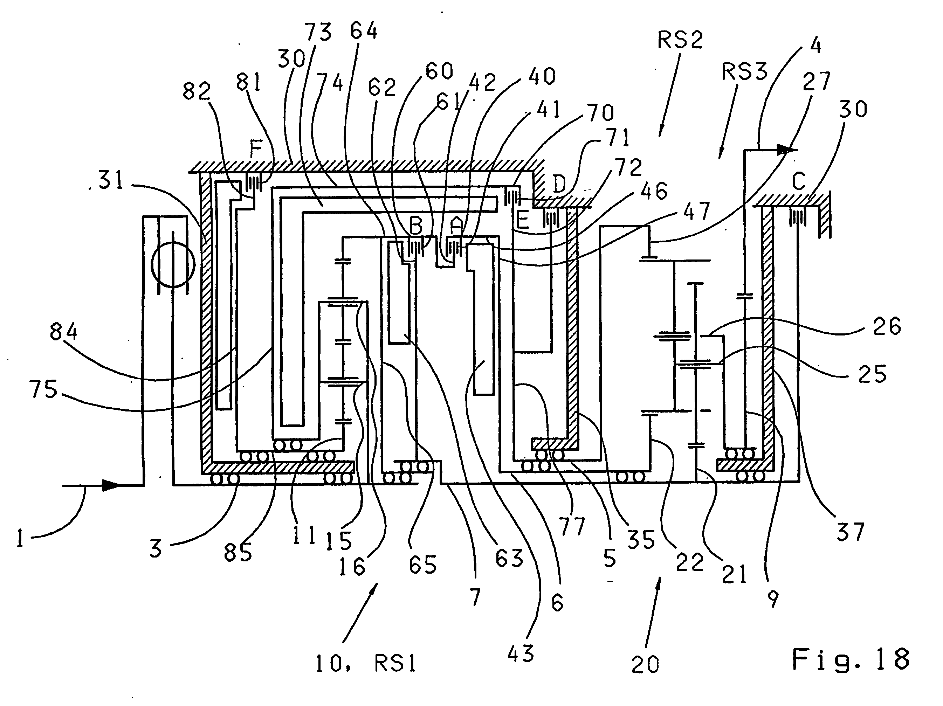

In den folgenden Fig. 18 bis Fig. 22 sind eine neunte bis eine dreizehnte beispielhafte Bauteil-Anordnungs-Variante eines Mehrstufengetriebes mit der ersten erfindungsgemäßen Vorschaltradsatz-Variante und vorzugsweise achsparallelem An- und Abtrieb dargestellt, bei denen jeweils das sechste Schaltelement F auf der dem Haupt-Planetenradsatz 20 abgewandten Seite des Vorschalt-Planetenradsatzes 10 an der der Motorwelle 1 zugewandten Seite des Getriebegehäuses 30, angrenzend an die Getriebegehäusewand 31 angeordnet ist, bei denen jeweils das erste und das zweite Schaltelement A, B zwischen Vorschalt- und Haupt-Planetenradsatz 10, 20 angeordnet sind, wobei Vorschalt-Planentenradsatz 10 und beide Schaltelemente A, B zusammen angeordnet sind und das zweite Schaltelement B in Richtung Haupt-Planetenradsatz 20 an den Vorschalt-Planetenradsatz 10 und das erste Schaltelement A an das zweite Schaltelement B angrenzt, und bei denen das dritte Schaltelement C, über welche das zweite Eingangselement des Haupt-Planetenradsatzes 20 festsetzbar ist, stets auf der dem Vorschalt-Planetenradsatz 10 abgewandten Seite des Haupt-Planetenradsatzes 20 angeordnet ist, angrenzend an eine dem Antriebsmotor bzw. der Getriebegehäusewand 31 gegenüberliegende Außenwand des Getriebegehäuses 30. Das zweite Schaltelement B ist also stets näher am Vorschalt-Planetenradsatz 10 angeordnet als das erste Schaltelement A. Das fünfte Schaltelement E ist in Richtung Antrieb gesehen immer vor dem Haupt-Planetenradsatz 20 abgeordnet.

Wie bei den in Fig. 3 bis Fig. 17 zuvor beschriebenen Anordnungs-Varianten sind auch in Fig. 18 bis Fig. 20 der Innenlamellenträger 82 des als Bremse ausgebildeten sechsten Schaltelementes F und das Sonnenrad 11 des Vorschalt-Planetenradsatzes 10 über die Sonnenwelle 85 des Vorschalt-Planetenradsatzes 10, die auf dem Vorsprung 33 der Getriebegehäusewand 31 gelagert ist, verbunden. Die gekoppelten Stege 15, 16 des Vorschalt-Planetenradsatzes 10 sind auf dessen der Bremse F gegenüberliegenden Seite mit der Antriebswelle 3 verbunden. Das Hohlrad 14 des Vorschalt-Planetenradsatzes 10 ist jeweils mit dem Außenlamellenträger 60 des als Kupplung ausgebildeten zweiten Schaltelementes B sowie mit dem Innenlamellenträger 42 des als Kupplung ausgebildeten ersten Schaltelementes A verbunden. Der Innenlamellenträger 62 der Kupplung B ist jeweils über die zweite Sonnenwelle 7, welche im Unterschied zu den vorigen Ausführungsbeispielen nunmehr zentral durch den Haupt-Planetenradsatz 20 hindurchgeführt ist, mit dem zweiten Eingangselement des Haupt-Planetenradsatzes 20 verbunden. Der Außenlamellenträger 40 der Kupplung A ist jeweils über die erste Sonnenwelle 6, welche im Unterschied zu den vorigen Ausführungsbeispielen nunmehr koaxial oberhalb der zweiten Sonnenwelle 7 verläuft und auf dieser gelagert ist, mit dem ersten Eingangselement des Haupt-Planetenradsatzes 20 verbunden. Das Eingangselement der Kupplung E ist stets über die gekoppelten Stege 15, 16 des Vorschalt-Planetenradsatzes 10 mit der Antriebswelle verbunden. Das Ausgangselement der Kupplung E ist stets über die dritte Welle 5, welche im Unterschied zu den vorigen Ausführungsbeispielen nunmehr auf der zweiten Sonnenwelle 7 und/oder in der Lagerplatte 35 gelagert ist, mit dem ersten Eingangselement des Haupt-Planetenradsatzes 20 verbunden. Dabei ist die Lagerplatte 35 auf der Seite der aus Stirnrad 9 und Haupt-Planetenradsatz 20 bestehenden Baugruppe angeordnet, die dem Vorschalt-Planetenradsatz 10 bzw. den Kupplungen A, B zugewandt ist. Die Lamellen 41 und 61 der Kupplungen A, B weisen zumindest annähernd gleichen Durchmesser auf. Der Durchmesser der Lamellen 71 der Kupplung E ist annähernd so groß oder größer als der Durchmesser der Lamellen 41, 61 der Kupplungen A, B. Fertigungstechnisch günstig können hierdurch beispielsweise gleiche Lamellen für die Kupplungen A und B verwendet werden.

In der neunten Bauteil-Anordnungs-Variante gemäß Fig. 18 wird vorgeschlagen, die Lamellen 71 der Kupplung E in axialer Richtung zwischen der Kupplung A und dem Haupt-Planetenradsatz 20 anzuordnen, vorzugsweise axial angrenzend an den Außenlamellenträger 40 der Kupplung A, die Servo-Einrichtung 73 der Kupplung E zumindest teilweise jedoch auf der Seite des Vorschalt-Planetenradsatzes 10, die der Kupplung A abgewandt ist. Die Lamellen 71 der Kupplung E werden also von deren dem Vorschalt-Planetenradsatz 10 zugewandten Seite her betätigt. Dabei ist das Eingangselement der Kupplung E als Außenlamellenträger 70 ausgebildet, mit einem zylinderförmigen Abschnitt 74, der sich in axialer Richtung radial oberhalb der Kupplungen A und B von den Lamellen 71 der Kupplung E bis in den Bereich der Lamellen 81 der Bremse F erstreckt. Im Bereich der Lamellen 81 der Bremse F schließt sich an diesen zylinderförmigen Abschnitt 74 ein scheibenförmiger Abschnitt 75 des Eingangselementes der Kupplung E an und erstreckt sich - unmittelbar angrenzend an den scheibenförmigen Abschnitt 84 des Innenlamellenträgers 82 der Bremse F - zentral in Richtung Antriebswelle 3 bis zu einem Lagerabschnitt, der sich koaxial zur Sonnenwelle 85 des Vorschalt-Planetenradsatzes 10 in Richtung Vorschalt-Planetenradsatz 10 erstreckt und auf dieser Sonnenwelle 85 gelagert ist. Auf der dem Vorschalt-Planetenradsatz 10 zugewandten Seite dieses Lagerabschnittes ist der Außenlamellenträger 70 der Kupplung E mit den gekoppelten Stegen 15, 16 des Vorschalt-Planetenradsatzes 10 verbunden. Dabei durchdringen die gekoppelten Stege 15, 16 den Vorschalt-Planetenradsatz 10 in axialer Richtung. Die Servo-Einrichtung 73 der Kupplung E liegt also innerhalb des zylinderförmigen Außenlamellenträgers 70, wobei sich ein Betätigungselement der Servo-Einrichtung 73 in axialer Richtung radial über die Kupplungen A und B hinweg erstreckt.

Das vierte, als Bremse ausgebildete Schaltelement D, über welches das dritte Eingangselement des Haupt-Planetenradsatzes 20 festsetzbar ist, grenzt beispielhaft axial in Richtung Haupt-Planetenradsatz 20 an die Lamellen 71 der Kupplung E an, vor der Lagerplatte 35. Auf der dem Vorschalt-Planetenradsatz 10 bzw. der Bremse D abgewandten Seite der Lagerplatte 35 grenzt beispielhaft der Haupt-Planetenradsatz unmittelbar an, wobei das Stirnrad 9 auf der dem Vorschalt-Planetenradsatz 10 bzw. dem nicht dargestellten Antriebsmotor abgewandten Seite des Haupt-Planetenradsatzes 20 angeordnet ist. Auf der Seite dem Haupt-Planetenradsatz 20 abgewandten Seite des Stirnrades 9 grenzt eine zweite Lagerplatte 37 an das Stirnrad 9 an, über die das Stirnrad 9 gelagert ist. Das dritte, als Bremse ausgebildete Schaltelement C, über welche das zweite Eingangselement des Haupt-Planetenradsatzes 20 festsetzbar ist, schließt sich axial an diese zweite Lagerplatte 37 an und ist somit auf der dem Antriebsmotor entgegengesetzte Seite des Mehrstufengetriebes angeordnet.

In einer anderen Ausgestaltung kann auch vorgesehen sein, daß die Lagerplatte 35 axial in Richtung Haupt-Planetenradsatz 20 an die Lamellen 71 der Kupplung E angrenzt und die Bremse D auf der dem Vorschalt-Planetenradsatz 10 abgewandten Seite der Lagerplatte 35 angeordnet ist.

Für die Anordnung des Servo-Elementes 63 der Kupplung B wird in Fig. 18 vorgeschlagen, den mit dem Hohlrad 14 des Vorschalt-Planetenradsatzes 10 verbundenen Außenlamellenträger 60 der Kupplung B als in Richtung Haupt-Planetenradsatz 20 geöffneten Zylinder auszubilden. Dieses Eingangselement der Kupplung B weist einen zylindrischen Abschnitt 64 und einen scheibenförmigen Abschnitt 65 auf, wobei der scheibenförmige Abschnitt 65 unmittelbar an den Vorschalt-Planetenradsatz 10 angrenzt und über einen Lagerabschnitt auf der Antriebswelle 3 gelagert ist. Weiterhin wird vorgeschlagen, den Innenlamellenträger 62 der Kupplung B als deren Ausgangselement zumindest weitgehend scheibenförmig auszubilden und die Servo-Einrichtung 63 der Kupplung B axial zwischen dem scheibenförmigen Abschnitt 65 des als Außenlamellenträger 60 ausgebildeten Eingangselementes der Kupplung B und dem scheibenförmigen Innenlamellenträger 62 der Kupplung B anzuordnen. Auf diese Weise rotiert die Servo-Einrichtung 63 der Kupplung B in vorteilhafter Weise stets mit der Ausgangsdrehzahl n_vs des Vorschalt-Planetenradsatzes 10.

In einer anderen Ausgestaltung der Kupplung B kann auch vorgesehen sein, daß die Servo-Einrichtung 63 der Kupplung B auf der dem Haupt-Planetenradsatz 20 zugewandten Seite des Innenlamellenträgers 62 der Kupplung B angeordnet ist.

Für die Anordnung des Servo-Elementes 43 der Kupplung A wird in Fig. 18 vorgeschlagen, den Innenlamellenträger 42 der Kupplung A mit dem Außenlamellenträger 60 der Kupplung B zu verbinden, das Ausgangselement der Kupplung A als Außenlamellenträger 40 auszubilden in Form eines in Richtung Vorschalt-Planetenradsatz 10 geöffneten Zylinders mit einem zylindrischen Abschnitt 46 und einem sich daran anschließenden scheibenförmigen Abschnitt 47, sowie die Servo-Einrichtung 43 der Kupplung A axial zwischen den scheibenförmigen Abschnitten 67, 47 der Ausgangselemente der Kupplungen B und A anzuordnen. Dabei ist der scheibenförmige Abschnitt 47 des als Außenlamellenträger 40 ausgebildeten Ausgangselementes der Kupplung A zentral mit der ersten Sonnenwelle 6 verbunden und über diese beispielsweise an der Lagerplatte 35 gelagert. Vorzugsweise grenzt der scheibenförmigen Abschnitt 47 auf seiner dem Vorschalt-Planetenradsatz 10 abgewandten Seite unmittelbar an einen scheibenförmigen Abschnitt 77 des Innenlamellenträgers 72 der Kupplung E an.

In einer anderen Ausgestaltung der Kupplung A kann auch vorgesehen sein, daß die Servo-Einrichtung 43 der Kupplung A auf der dem Haupt-Planetenradsatz 20 zugewandten Seite des Außenlamellenträgers 40 der Kupplung A angeordnet ist, wobei ein Betätigungselement der Servo-Einrichtung 43 die Lamellen 41 der Kupplung A axial in Richtung Vorschalt-Planetenradsatz 10 radial übergreift und die Lamellen 41 von deren dem Vorschalt-Planetenradsatz 10 zugewandten Seite her betätigt.

In einer Ausgestaltung, bei der die Lamellen 71 der Kupplung E einen größeren Innendurchmesser aufweisen als der Außendurchmesser der Außenlamellenträger 60, 40 der Kupplungen B und A, können die Bremse F, die Kupplung E bis auf deren Innenlamellenträger 72, der Vorschalt-Planetenradsatz 10, die komplette Kupplung B und die komplette Kupplung A nacheinander in einfacher Weise in das Getriebegehäuse 30 eingesetzt werden. In einer Ausgestaltung, bei der der Innendurchmesser der Lamellen 71 der Kupplung E kleiner ist als der Außendurchmesser der Außenlamellenträger 60, 40 der Kupplungen B und A, können die Lamellen 71 der Kupplung E bei ansonsten gleicher Montageabfolge natürlich erst nach der Montage der Kupplung A erfolgen, wobei aber - bei gegebenem Außendurchmesser des Getriebegehäuses 30 - gegenüber der zuvor vorgeschlagenen Ausgestaltung ein insgesamt größerer Lamellendurchmesser für die Kupplungen A und B möglich ist. Letzteres ist günstig für die Dimensionierung der Kupplungen A und B, die gegenüber der Kupplung E in den meisten Schaltzuständen ein höheres Drehmoment übertragen müssen.

Im Unterschied zu den bisherigen Bauteil-Anordnungs-Varianten ist Fig. 18 beispielhaft auch ein modifizierter Haupt-Planetenradsatz 20 dargestellt. Die Bauform ist unverändert ein Ravigneaux-Radsatz mit den einzelnen Planetenradsätzen RS2 und RS3, jedoch mit geänderter Anbindung seiner sogenannten freien Wellen. Der Planetenradsatz RS2 ist unverändert an das erste Schaltelement A angebunden, der Planetenradsatz RS3 an das zweite und dritte Schaltelement B, C. Das erste Eingangselement des Haupt-Planetenradsatzes 20 ist nun sein großes Sonnenrad 22, das zweite Eingangselement sein kleines Sonnenrad 21 und das dritte Eingangselement sein Hohlrad 27. Dabei ist das große Sonnenrad 22 ist also jetzt dem Planetenradsatz RS2 zugeordnet und auf der dem Vorschalt-Planetenradsatz 10 zugewandten Seite des Haupt-Planetenradsatzes 20 angeordnet. Entsprechend ist das kleine Sonnenrad 21 jetzt dem Planetenradsatz RS3 zugeordnet. Die gekoppelten Stege 25 und 26 bilden nun das Ausgangselement des Haupt-Planetenradsatzes 20 und sind mit der Abtriebswelle 4 wirkverbunden. In dem dargestellten Beispiel eines Mehrstufengetriebes mit quer zum Antrieb angeordnetem Abtrieb ist diese Wirkverbindung als Stirntrieb mit dem Stirnrad 9 ausgeführt. Der Abtrieb über die gekoppelten Stege 25, 26 hat schmierungstechnische Vorteile, da bei rotierender Abtriebswelle 4 - beispielsweise bei rollendem Fahrzeug - stets eine Relativbewegung an den Bolzen der Planetenräder vorliegt. Im unteren Teil der Fig. 18 sind die von den in Fig. 2A bzw. 2B abweichenden Standübersetzungen der einzelnen Radsätze RS1, RS2, RS3 dieser beispielhaften Radsatz-Kombination dargestellt. Dabei sind mit RS1 der einzige Planetenradsatz des Vorschalt-Planetenradsatzes 10 und mit RS2, RS3 die einzelnen Planetenradsätze des mehrgliedrigen Haupt-Planetenradsatzes 20 bezeichnet.

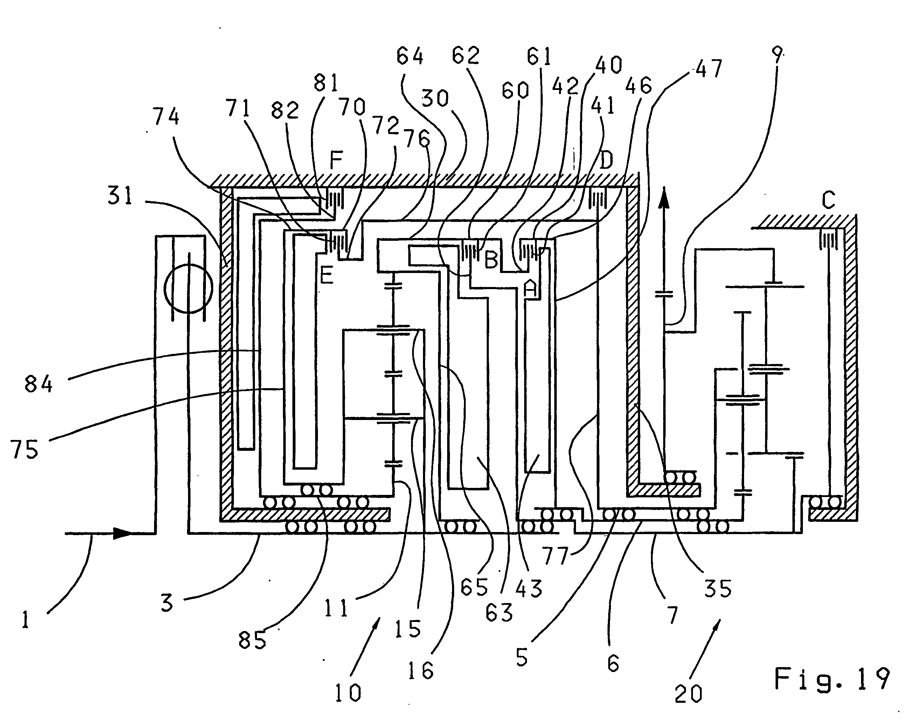

In der zehnten Bauteil-Anordnungs-Variante gemäß Fig. 19 wird als wesentlicher Unterschied zur Variante gemäß Fig. 18 vorgeschlagen, nicht nur die Servo-Einrichtung 73 der Kupplung E auf der dem Haupt-Planetenradsatz 20 abgewandten Seite des Vorschalt-Planetenradsatzes 10 anzuordnen, sondern auch die Lamellen 71 der Kupplung E. Im dargestellten Beispiel sind die Lamellen 71 hierbei in radialer Richtung unterhalb der Lamellen 81 der Bremse F angeordnet. Unverändert gegenüber Fig. 18 ist das Eingangselement der Kupplung E als Außenlamellenträger 70 ausgebildet, als in Richtung Vorschalt-Planetenradsatz 10 geöffneter Zylinder, mit einem scheibenförmigen Abschnitt 75, der an den scheibenförmigen Abschnitt 84 des Innenlamellenträgers 82 der Bremse F angrenzt, auf der Sonnenwelle 85 des Vorschalt-Planetenradsatzes 10 gelagert und mit den gekoppelten Stegen 15, 16 des Vorschalt-Planetenradsatzes 10 verbundenen ist, sowie mit einem zylindrischen Abschnitt 74, der sich in radialer Richtung unterhalb der Lamellen 81 der Bremse F erstreckt. Die Servo-Einrichtung 73 der Kupplung E ist also nunmehr vollständig innerhalb des Außenlamellenträgers 70 der Bremse E angeordnet.

Das Ausgangselement der Kupplung E ist entsprechend als Innenlamellenträger 72 ausgebildet und weist einen zylindrischen Abschnitt 76 und einen scheibenförmigen Abschnitt 77 auf. Der zylindrische Abschnitt 76 erstreckt sich in axialer Richtung vollständig über die Kupplungen A und B hinweg. Der sich in Richtung Haupt-Planetenradsatz 20 an den zylindrischen Abschnitt 76 anschließende scheibenförmige Abschnitt 77 erstreckt sich zentrisch in Richtung Getriebemittelachse bis zu der dritten Welle 5, welche die Lagerplatte 35 koaxial oberhalb der zweiten und ersten Sonnenwelle 7, 6 durchdringt und den Innenlamellenträger 72 mit dem dritten Eingangselement des Haupt-Planetenradsatzes 20 verbindet. Räumlich ist der scheibenförmige Abschnitt 77 des Ausgangselemenets der Kupplung E axial zwischen dem scheibenförmigen Abschnitt 47 des als Außenlamellenträger 40 ausgebildeten Ausgangselementes der Kupplung A und der Lagerplatte 35 angeordnet und im Bereich seines Außendurchmessers mit einem Innenlamellenträger der an die Lagerplatte 35 angrenzende Bremse D verbunden.

Der in Fig. 19 dargestellte Haupt-Planetenradsatz 20 entspricht wieder dem zuvor in den Fig. 1 und Fig. 3 bis Fig. 17 beschriebenen beispielhaften Ravigneaux-Radsatz. Das Stirnrad 9 ist auf der Seite des Haupt-Planetenradsatzes 20 angeordnet, die der Lagerplatte 35 bzw. dem Vorschalt-Planetenradsatz 10 zugewandt ist. Dabei grenzt das Stirnrad 9 unmittelbar an die Lagerplatte 35 an und stützt sich über diese an dem Getriebegehäuse 30 ab. Hierdurch kann eine zweite Lagerplatte entfallen.

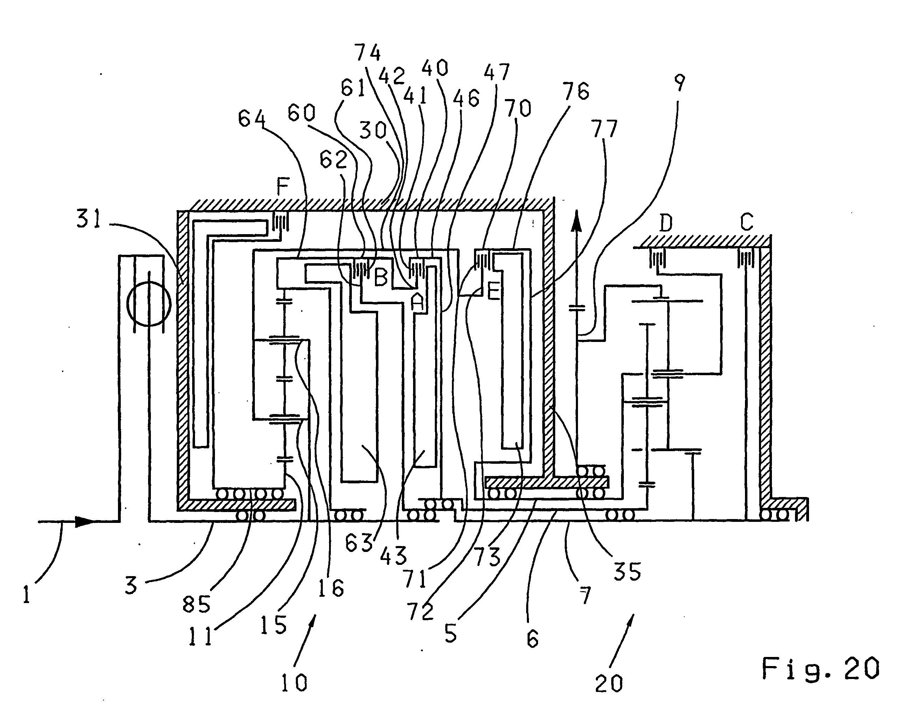

In der elften Bauteil-Anordnungs-Variante gemäß Fig. 20 wird vorgeschlagen, nicht nur die Lamellen 71 der Kupplung E zwischen Kupplung A und Haupt-Planetenradsatz 20 anzuordnen, sondern auch die Servo-Einrichtung 73 der Kupplung E. Im dargestellten Beispiel weisen die Lamellen 71 hierbei einen geringfügig größeren Durchmesser auf als die Lamellen 41, 61 der Kupplungen A, B. In einer anderen Ausgestaltung können auch gleiche Lamellen für alle drei Kupplungen A, B und E vorgesehen sein. Abweichend zu Fig. 18 und Fig. 19 ist das Eingangselement der Kupplung E nunmehr als Innenlamellenträger 72 ausgebildet, mit einem zylindrischen Abschnitt 74, der sich axial über die Kupplungen A und B und den Vorschalt-Planetenradsatz 10 hinweg erstreckt und auf der der Motorwelle 1 zugewandten Seite des Vorschalt-Planetenradsatzes 10 mit dessen gekoppelten Stegen 15, 16 verbunden ist.

Das Ausgangselement der Kupplung E ist entsprechend als Außenlamellenträger 70 ausgebildet, in Form eines in Richtung Vorschalt-Planetenradsatz 10 offenen Zylinders, mit einem kurzen zylindrischen Abschnitt 76 im Bereich der Lamellen 71 der Kupplung E, sowie mit einem weitgehend scheibenförmigen Abschnitt 77, der sich an den zylindrischen Abschnitt 76 anschließt und sich - unmittelbar an die Lagerplatte 35 angrenzend - zentral in Richtung Getriebemittelachse erstreckt bis zu einem Lagerabschnitt der Lagerplatte 35 bzw. bis zu der dritten Welle 5, über die der Außenlamellenträger 70 der Kupplung E mit dem dritten Eingangselement des Haupt-Planetenradsatzes 20 verbunden ist. Dabei ist der Außenlamellenträger 70 über die dritte Welle 5 an der Lagerplatte 35 gelagert. Selbstverständlich kann der Außenlamellenträger 70 auch direkt an der Lagerplatte gelagert sein. Die Servo-Einrichtung 73 der Kupplung E ist vollständig innerhalb des Außenlamellenträgers 70 der Bremse E angeordnet. Hierdurch wird ein einfacher Montageablauf der Kupplung E in dem Getriebegehäuse 30 erzielt.

Die Anordnung des Stirnrades 9 relativ zur Lagerplatte 35 und zu den Radsätzen entspricht der anhand Fig. 19 beschiebenen Anordnung. Im Unterschied zu Fig. 19 sieht die Bauelemente-Anordnung gemäß Fig. 20 vor, die Bremse D, über die das dritte Eingangselement des Haupt-Planetenradsatzes 20 festsetzbar ist, zwischen dem Stirnrad 9 und der Bremse C anzuordnen, baulängensparend in radialer Richtung oberhalb des Haupt-Planetenradsatzes 20. Wie zuvor erwähnt, ist die Bremse C an der Seite des Mehrstufengetriebes angeordnet, die der Motorwelle 1 gegenüber liegt.

Wie schon für die Bauteil-Anordnungs-Variante gemäß Fig. 18 vorgeschlagen, kann in anderen Ausgestaltungen der Anordnung gemäß Fig. 19 und Fig. 20 auch vorgesehen sein, die Servo-Einrichtungen 43, 63 der beiden Kupplungen A, B derart räumlich anzuordnen, daß die Servo-Einrichtung 43 der Kupplung A auf der dem Haupt-Planetenradsatz 20 zugewandten Seite des Außenlamellenträgers 40 der Kupplung A angeordnet ist, wobei ein Betätigungselement der Servo-Einrichtung 43 die Lamellen 41 der Kupplung A axial in Richtung Vorschalt-Planetenradsatz 10 radial übergreift und die Lamellen 41 von deren dem Vorschalt-Planetenradsatz 10 zugewandten Seite her betätigt, und/oder daß die Servo-Einrichtung 63 der Kupplung B auf der dem Haupt-Planetenradsatz 20 zugewandten Seite des Innenlamellenträgers 62 der Kupplung B angeordnet ist.

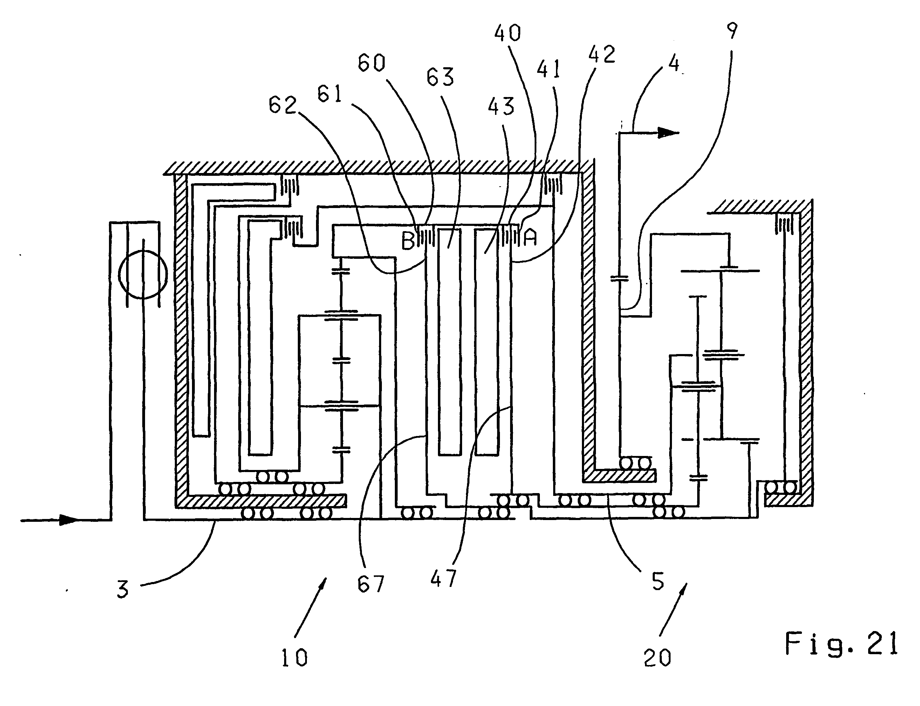

Fig. 21 zeigt nun eine zwöfte beispielhafte Bauteil-Anordnungs-Variante eines Mehrstufengetriebes mit der ersten erfindungsgemäßen Vorschaltradsatz-Variante und vorzugsweise achsparallelem An- und Abtrieb, im wesentlichen basierend auf der anhand Fig. 19 detailliert beschriebenen zehnten Bauteil-Anordnungs-Variante. Die Unterschiede zu Fig. 19 betreffen lediglich die Ausgestaltung der Eingangs-und Ausgangselemente der Kupplung A, die geometrische Ausgestaltung des Ausgangselementes der Kupplung B sowie die räumliche Anordnung der Servo-Einrichtungen 43, 63 beider Kupplungen A, B. In Fig. 21 wird vorgeschlagen, beide Eingangselemente der Kupplungen A, B als nebeneinander angeordnete Außenlamellenträger 40, 60 auszubilden, vorzugsweise derart, daß für die Lamellen 41, 61 beider Kupplungen A, B gleiche Bauteile verwendet werden können. Beide Ausgangselemente der Kupplungen A, B sind entsprechend als Innenlamellenträger 42, 62 ausgebildet, vorzugsweise weitgehend scheibenförmig. Die entsprechenden scheibenförmigen Abschnitte 47, 67 dieser Ausgangselemente erstrecken sich zentrisch in Richtung Antriebswelle 3. Im ausgeführten Beispiel ist der Innenlamellenträger 62 der Kupplung B, die näher am Vorschalt-Planetenradsatz 10 angeordnet ist als die Kupplung A, in einem Lagerabschnitt, der sich an den scheibenförmigen Abschnitt 67 anschließt, auf der Antriebswelle 3 verdrehbar gelagert. Der Innenlamellenträger 42 der Kupplung A ist zentral auf den Lagerabschnitt des Innenlamellenträgers 62 der Kupplung B auf damit indirekt ebenfalls auf der Antriebswelle 3 verdrehbar gelagert.

Hinsichtlich Anordnung der Servo-Einrichtungen 43, 63 der Kupplungen A, B wird in Fig. 21 vorgeschlagen, beide Servo-Einrichtungen 43, 63 nebeneinander anzuordnen, axial zwischen den Innenlamellenträgern 42, 62 der Kupplungen A, B. Dabei ist die Servo-Einrichtung 63 der Kupplung B näher am Vorschalt-Planetenradsatz 10 angeordnet als die Servo-Einrichtung 43 der Kupplung A, vorzugsweise axial angrenzend an den scheibenförmigen Abschnitt 67 des Ausgangselementes der Kupplung B, und betätigt die Lamellen 61 der Kupplung B in Richtung Vorschalt-Planetenradsatz 10. Die Servo-Einrichtung 43 der Kupplung A grenzt vorzugsweise axial an den scheibenförmigen Abschnitt 47 des Ausgangselementes der Kupplung A an und betätigt die Lamellen 41 der Kupplung A in Richtung Haupt-Planetenradsatz 20.

In einer anderen Ausgestaltung kann auch vorgesehen sein, daß die Innenlamellenträger 42, 62 der Kupplungen A, B-unmittelbar nebeneinander angeordnet sind. Die Servo-Einrichtung 43 der Kupplung A ist hierbei auf der dem Vorschalt-Planetenradsatz 10 abgewandten Seite des Innenlamellenträgers 42 der Kupplung A angeordnet und betätigt die Lamellen 41 der Kupplung A nunmehr in Richtung Vorschalt-Planetenradsatz 10. Die Servo-Einrichtung 63 der Kupplung B ist entsprechend auf der dem Vorschalt-Planetenradsatz 10 zugewandten Seite des Innenlamellenträgers 62 der Kupplung B angeordnet und betätigt die Lamellen 61 der Kupplung B nunmehr in Richtung Haupt-Planetenradsatz 20. Bei dieser Anordnung können die Außenlamellenträger 40, 60 der Kupplungen A, B in vorteilhafter Weise einstückig ausgeführt sein und sich die Lamellen 41, 61 beider Kupplungen A, B bei Betätigung gegen den gleichen Anschlag abstützen.

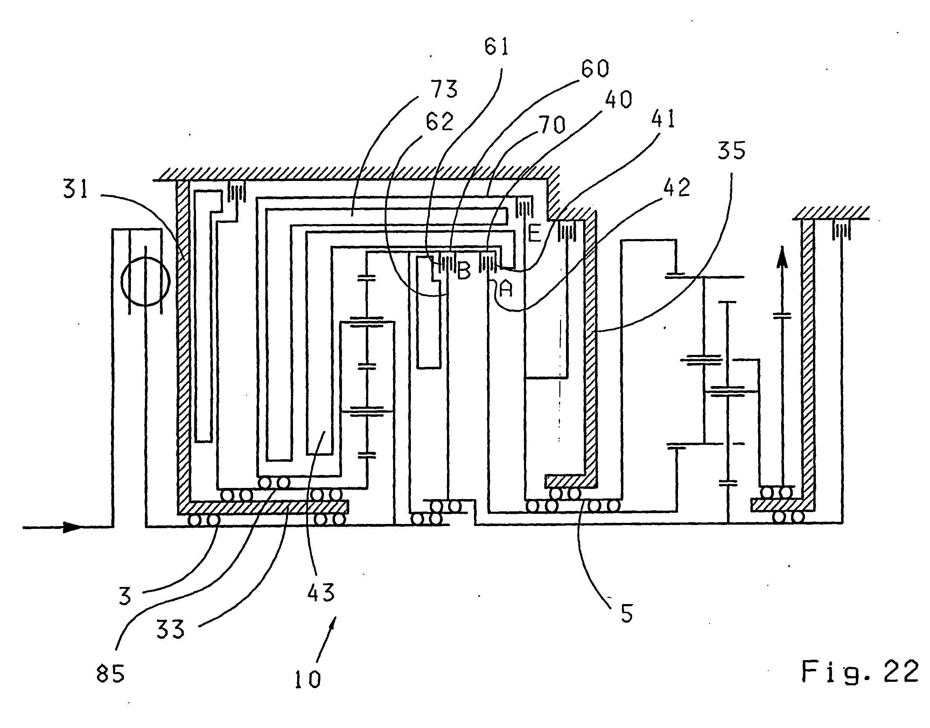

Fig. 22 zeigt eine dreizehnte beispielhafte Bauteil-Anordnungs-Variante eines Mehrstufengetriebes mit der ersten erfindungsgemäßen Vorschaltradsatz-Variante und vorzugsweise rechtwinklig zum Antrieb angeordnetem Abtrieb, im wesentlichen basierend auf die anhand Fig. 18 detailliert beschriebene neunte Bauteil-Anordnungs-Variante. Die Unterschiede zu Fig. 18 betreffen lediglich die Ausgestaltung der Eingangs- und Ausgangselemente der Kupplung A, sowie die räumliche Anordnung der Servo-Einrichtung 43 der Kupplung A. Gemäß Fig. 22 wird nunmehr vorgeschlagen, beide Eingangselemente der Kupplungen A, B als nebeneinander angeordnete Außenlamellenträger 40, 60 auszubilden, vorzugsweise derart, daß für die Lamellen 41, 61 beider Kupplungen A, B gleiche Bauteile verwendet werden können. Unverändert sind die Lamellen 61 der Kupplung B näher am Vorschalt-Planetenradsatz 10 angeordnet als die Lamellen 41 der Kupplung A. Beide Ausgangselemente der Kupplungen A, B sind als Innenlamellenträger 42, 62 ausgebildet, vorzugsweise weitgehend scheibenförmig. Die Lagerung von Außen- und Innenlamellenträger 60, 62 der Kupplung B auf der Antriebswelle 3 entspricht der in Fig. 18 dargestellten Lagerung. Im Unterschied zu Fig. 18 ist nunmehr der Innenlamellenträger 42 der Kupplung A über die dritte Welle 5 gelagert.

Gemäß Fig. 22 wird weiterhin vorgeschlagen, die Servo-Einrichtung 43 der Kupplung A zwischen der Servo-Einrichtung 73 der Kupplung E und dem Vorschalt-Planetenradsatz 10 anzuordnen. Dabei greift ein Betätigungselement der Servo-Einrichtung 43 in axialer Richtung radial über Vorschalt-Planetenradsatz 10, Kupplung B und Außenlamellenträger 40 der Kupplung A hinweg und betätigt die Lamellen 41 der Kupplung A von deren dem Vorschalt-Planetenradsatz 10 abgewandten Seite her. Die Servo-Einrichtung 43 der Kupplung A liegt also vollständig innerhalb des Kupplungsraums der Kupplung E, der durch den zylinderförmigen Außenlamellenträger 70 der Kupplung E gebildet wird. In vorteilhafter Weise können also Außenlamellenträger 70 der Kupplung E, Servo-Einrichtung 73 der Kupplung E und Servo-Einrichtung 43 der Kupplung A zusammen als Baugruppe vormontiert und eingebaut werden. Die Druckmittelzufuhr zur Betätigung beider Kupplungen E, A und ggf. auch die Schmiermittelzufuhr für einen dynamischen Druckausgleich einer der beiden oder beider Kupplungen E, A kann in einfacher Weise über entsprechende Kanäle und Bohrungen innerhalb des Vorsprungs 33 der Getriebegehäusewand 31 und innerhalb der Sonnenwelle 85 des Vorschalt-Planetenradsatzes 10 erfolgen, auf der der Außenlamellenträger 70 der Kupplung E gelagert ist. In vorteilhafter Weise rotieren beide Servo-Einrichtungen 73, 43 der Kupplungen E, A stets mit der Getriebe-Eingangsdrehzahl n_ein, wodurch ein Leerlaufen der Kolbenräume und ggf. auch der Druckausgleichsräume beider Kupplungen E, A in derem nichtgeschalteten Zustand verhindert wird.

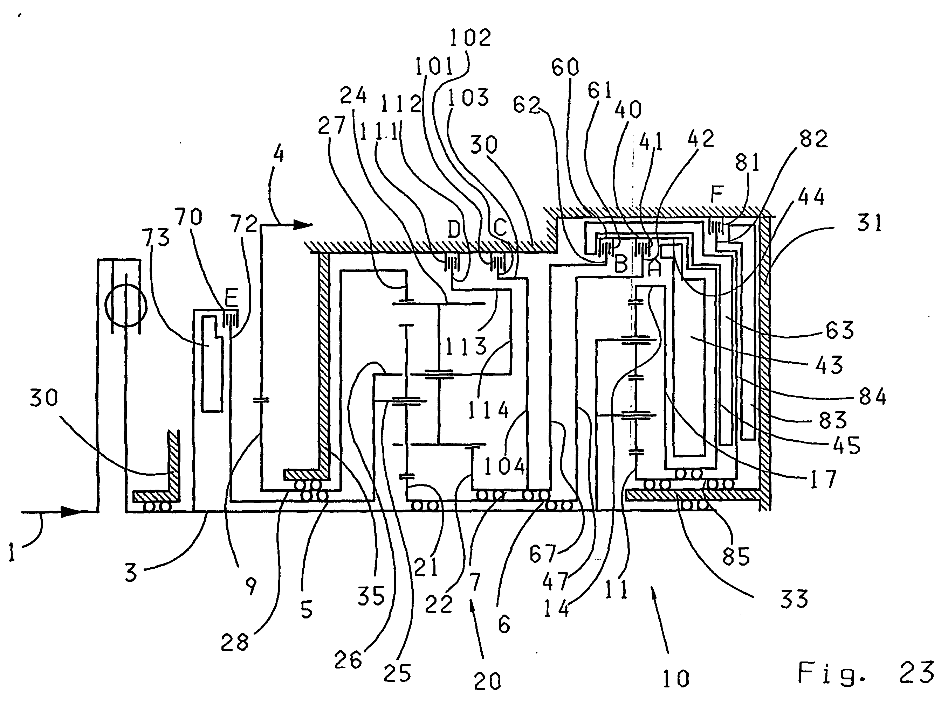

Fig. 23 zeigt eine vierzehnte beispielhafte Bauteil-Anordnungs-Variante eines Mehrstufengetriebes mit der ersten erfindungsgemäßen Vorschaltradsatz-Variante und mit vorzugsweise achsparallelem An- und Abtrieb. Im Unterschied zu den in Fig. 1 und Fig. 2 bis Fig. 22 dargestellten Bauteil-Anordnungen beispielhafter erfindungsgemäßer Mehrstufengetriebe bildet die Getriebegehäusewand 31, an welche die Bremse F - insbesondere die Servo-Einrichtung 83 der Bremse F - angrenzt, nunmehr die Außenwand des Getriebegehäuses 30, die der Motorwelle 1 gegenüberliegt. Wie in den vorigen Bauteil-Anordnungs-Varianten sind die Lamellen 81 der Bremse F im Getriebegehäuse 30 in günstiger Weise auf möglicht großem Durchmesser angeordnet. In Richtung Motorwelle 1 schließt sich an die Bremse F eine Baugruppe an, die aus den Kupplungen A, B und dem Vorschalt-Planetenradsatz 10 besteht. Im ausgeführten Beispiel sind die Lamellen 41 der Kupplung A oberhalb des Vorschalt-Planetenradsatzes 10 angeordnet. Die Lamellen 61 der Kupplung B sind in Richtung Motorwelle 1 benachbart zu den Lamellen 41 der Kupplung A abgeordnet, auf zumindest annähernd gleichem Durchmesser. Die Lamellen 61 der Kupplung B sind also näher am Haupt-Planetenradsatz 20 angeordnet als die Lamellen 41 der Kupplung A, und die Lamellen 41 der Kupplung A also näher an der Bremse F als die Lamellen 61 der Kupplung B. Die Außenlamellenträger 40, 60 beider Kupplungen A, B sind mit dem Hohlrad 14 des Vorschalt-Planetenradsatzes 10 verbunden.

Der Vorschalt-Planetenradsatz 10 ist oberhalb des sich in Richtung Motorwelle 1 erstreckenden zylinderförmigen Vorsprungs 33 der Getriebegehäusewand 31 angeordnet. Das Sonnenrad 11 des Vorschalt-Planetenradsatzes 10 ist über die Sonnenwelle 85 des Vorschalt-Planetenradsatzes 10 mit dem Innenlamellenträger 82 der Bremse F verbunden, wobei diese Sonnenwelle 85 auf dem Vorsprung 33 gelagert ist. Hinsichtlich Anordnung der Servo-Einrichtungen 43, 63 der Kupplungen A, B wird in Fig. 23 vorgeschlagen, daß der Außenlamellenträger 40 der Kupplung A als in Richtung Motorwelle 1 offener Zylinder ausgebildet ist. Ein zylindrischer Abschnitt 44 dieses Eingangselementes der Kupplung A erstreckt sich axial in Richtung Bremse F, ein sich an diesen zylindrischen Abschnitt 44 anschließender scheibenförmiger Abschnitt 45 erstreckt sich zentrisch in Richtung Antriebswelle 3, bis zu einem Lagerabschnitt, der auf der Sonnenwelle 85 des Vorschalt-Planetenradsatzes 10 gelagert ist. Auf der der Bremse F zugewandten Seite des Vorschalt-Planetenradsatzes 10 erstreckt sich ebenfalls ein scheibenförmiges Abtriebselement 17 des Hohlrades 14 des Vorschalt-Planetenradsatzes 10 zentrisch in Richtung Antriebswelle 3, bis zu dem Lagerabschnitt des Außenlamellenträgers 40 der Kupplung A und ist dort mit diesem verbunden. Die Servo-Einrichtung 43 der Kupplung A ist axial zwischen dem scheibenförmigen Abtriebselement 17 des Hohlrades 14 und dem scheibenförmigen Abschnitt 45 des Eingangselementes der Kupplung A angeordnet und betätigt die Lamellen 41 der Kupplung A in Richtung Motorwelle 1. Die Servo-Einrichtung 63 der Kupplung B ist axial zwischen dem scheibenförmigen Abschnitt 45 des Eingangselementes der Kupplung A und dem scheibenförmigen Abschnitt 84 des Innenlamellenträgers 82 der Bremse F angeordnet, wobei ein Betätigungselement der Servo-Einrichtung 63 die Außenlamellenträger 40, 60 beider Kupplungen A, B axial in Richtung Motorwelle 1 radial übergreift und die Lamellen 61 der Kupplung B in Richtung Bremse F betätigt. Durch die in Fig. 23 dargestellte Anordnung können Innenlamellenträger 82 der Bremse F, Servo-Einrichtung 63 der Kupplung B, beide Außenlamellenträger 40, 60 der Kupplungen A und B, Servo-Einrichtung 43 der Kupplung A und die Lamellen 41, 61 beider Kupplungen A und B in einfacher Weise als Baugruppe vormontiert werden. In vorteilhafter Weise rotieren die Servo-Einrichtungen 43, 63 beider Kupplungen A stets mit der Ausgangsdrehzahl n_vs der Vorschalt-Planetenradsatzes 10.

Auf der der Motorwelle 1 zugewandten Seite des Getriebegehäuses 30 ist das als Kupplung ausgebildete fünfte Schaltelement E angeordnet. Dabei ist der Außenlamellenträger 70 der Kupplung E als deren Eingangselement mit der Antriebswelle 3 verbunden, die zentral vollständig durch das Getriebe hindurch geführt ist bis zu der Getriebegehäusewand 31, die das Getriebegehäuse 30 auf seiner der Motorwelle 1 abgewandten Seite nach außen hin verschließt. Dabei ist der Außenlamellenträger 70 als Zylinder ausgebildet, der an seiner antriebsabgewandten Seite offen ist. Der Innenlamellenträger 72 bildet das Ausgangselement der Kupplung E und ist mit der dritten Welle 5 verbunden. Die dritten Welle 5 erstreckt sich koaxial unmittelbar oberhalb der Antriebswelle 3 axial in Richtung des Haupt-Planetenrad-satzes 20 und ist mit dem dritten Eingangselement des Haupt-Planetenradsatzes 20 - im dargestellten Beispiel mit den gekoppelten Stegen 25, 26 - verbunden. Die dritten Welle 5 kann dabei auf der Antriebswelle 3 gelagert sein. Die Servo-Einrichtung 73 der Kupplung E ist innerhalb des zylinderförmigen Außenlamellenträgers 70 angeordnet, auf der der Motorwelle 1 zugewandten Seite des Innenlamellenträgers 72 der Kupplung E.

Auf der dem Antrieb, also der Motorwelle 1 abgewandten Seite der Kupplung E ist das Stirnrad 9 mit der Abtriebswelle 4 angeordnet, vorzugsweise axial unmittelbar angrenzend an den Innenlamellenträger 72 der Kupplung E. Das Stirnrad 9 ist über eine Ausgangswelle 28 des Haupt-Planetenradsatzes 20 mit dem Ausgangselement des Haupt-Planetenradsatzes 20 - im dargestellten Beispiel dessen Hohlrad 27 - verbunden, wobei sich diese Ausgangswelle 28 koaxial unmittelbar oberhalb der dritten Welle 5 in axialer Richtung erstreckt. Antriebswelle 3, dritten Welle 5 und Ausgangswelle 28 sind also in koaxial übereinander angeordnet und durchdringen die mit dem Getriebegehäuse 30 verbundene Lagerplatte 35 zentral. Dabei grenzt das Stirnrad 9 auf seiner der Kupplung E abgewandten Seite an die Lagerplatte 35 an. Die Ausgangswelle 28 des Haupt-Planetenradsatzes 20 ist direkt in der Lagerplatte 35 gelagert. Im dargestellten Beispiel ist die dritten Welle 5 innerhalb der Ausgangswelle 28 gelagert und damit indirekt auch zentral in der Lagerplatte 35. Der Haupt-Planetenradsatz 20 ist auf der dem Stirnrad 9 abgewandten Seite der Lagerplatte 35 angeordnet, vorzugsweise angrenzend an diese.

Die Bremse D, über die das dritte Eingangselement des Haupt-Planetenradsatzes 20 festsetzbar ist, ist baulängensparend zumindest teilweise in radialer Richtung oberhalb des Haupt-Planetenradsatzes 20 auf großem Durchmesser im Getriebegehäuse 30 angeordnet. Im dargestellten Beispiel sind Lamellen 111 der Bremse D oberhalb der zweiten (äußeren) Planetenräder 24 des Haupt-Planetenradsatzes 20 angeordnet. Hierbei durchdringt der Steg 26 der zweiten Planetenräder 24 den Haupt-Planetenradsatz 20 vollständig und ist auf dessen der Motorwelle 1 abgewandten Seite mit einem Innenlamellenträger 112 der Bremse D verbunden. Dabei ist der Innenlamellenträger 112 als in Richtung Motorwelle 1 offener Zylinder mit einem zylinderförmigen Abschnitt 113 und einem scheibenförmigen Abschnitt 114 ausgebildet, und um die zweiten Planetenräder 24 herum geftihrt. Auf der Seite der Bremse D, die der Motorwelle 1 abgewandt ist, schließt sich die Bremse C, über die das zweite Eingangselement - im dargestellten Beispiel das große Sonnenrad 22 - des Haupt-Planetenradsatzes 20 festsetzbar ist, axial an die Bremse D an. Vorzugsweise weisen die Lamellen 101 der Bremse C den gleichen Durchmesser auf wie die Lamellen 111 der Bremse D, mit den bekannten fertigungstechnischen Vorteilen. Im dargestellten Beispiel sind die Lamellen 101 der Bremse C zumindest überwiegend oberhalb des zylindrischen Abschnitts 113 des Innenlamellenträgers 112 der Bremse D angeordnet. In einer Ausgestaltung kann auch vorgesehen sein, daß die Lamellen 101 der Bremse C ganz oder teilweise oberhalb der zweiten (äußeren) Planetenräder 24 des Haupt-Planetenradsatzes 20 angeordnet sind. Wie in Fig. 23 ersichtlich, ist der Innenlamellenträger 102 der Bremse C ebenfalls als in Richtung Motorwelle 1 offener Zylinder mit einem axial kurzen zylinderförmigen Abschnitt 103 und einem scheibenförmigen Abschnitt 104 ausgebildet und erstreckt sich zentrisch in Richtung Antriebswelle 3 bis zu einer axial kurzen zweiten Sonnenwelle 7. Die zweite Sonnenwelle 7 verbindet das große Sonnenrad 22 des Haupt-Planetenradsatzes 20 mit dem scheibenförmigen Abschnitt 104 des Innenlamellenträgers 102 der Bremse C und einem scheibenförmigen Abschnitt 67 des als Innenlamellenträger 62 ausgebildeten Ausgangselementes der Kupplung B. Gelagert ist die zweite Sonnenwelle 7 auf der ersten Sonnenwelle 6, welche das kleine Sonnenrad 21 des Haupt-Planetenradsatzes 20 als dessen erstes Eingangselement mit einem scheibenförmigen Abschnitt 47 des als Innenlamellenträger 42 ausgebildeten Ausgangselement der Kupplung A verbindet. Die erste Sonnenwelle 6 wiederum ist direkt auf der Antriebswelle 3, die das Getriebe zentral durchdringt, gelagert. Der scheibenförmigen Abschnitt 67 des Ausgangselementes der Kupplung B grenzt also axial an die dem Haupt-Planetenradsatz 20 abgewandten Seite des scheibenförmigen Abschnitts 104 des Innenlamellenträgers 102 der Bremse C an, und der scheibenförmigen Abschnitt 47 des Ausgangselementes der Kupplung A wiederum axial an den scheibenförmigen Abschnitt 67 auf dessen dem Haupt-Planetenradsatz 20 abgewandten Seite. Es ist also keine separate Lagerplatte oder Gehäusewand axial zwischen Haupt- und Vorschalt-Planetenradsatz 20, 10 notwendig, um die drei koaxial übereinanderliegenden Wellen (Antriebswelle 3, erste Sonnenwelle 6, zweite Sonnenwelle 7) zu lagern.

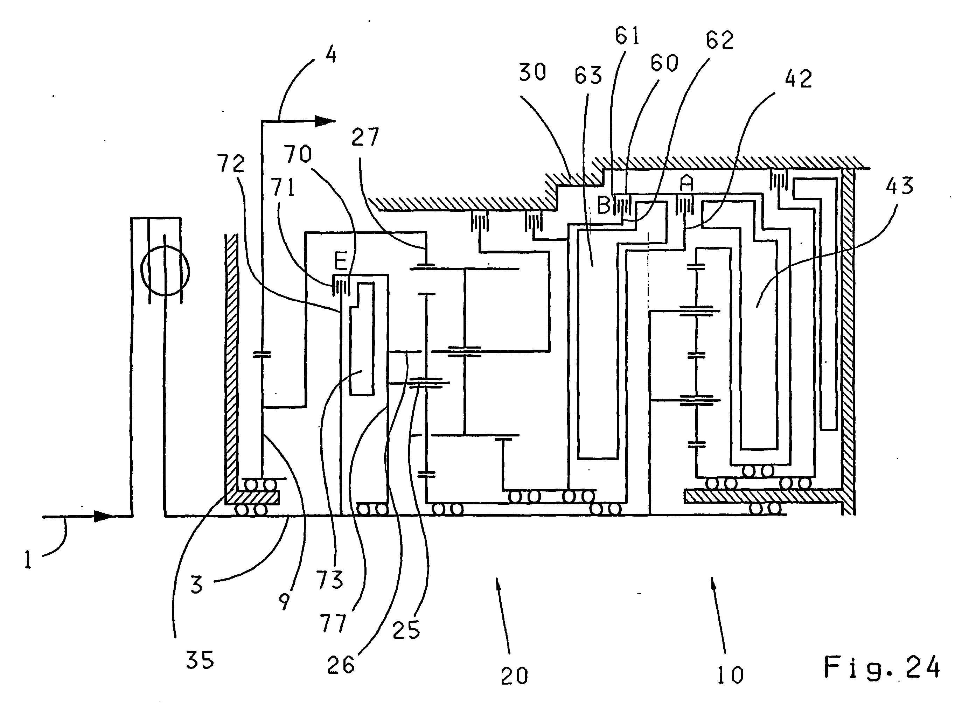

Fig. 24 zeigt eine fünfzehnte beispielhafte Bauteil-Anordnungs-Variante eines Mehrstufengetriebes mit der ersten erfindungsgemäßen Vorschaltradsatz-Variante und vorzugsweise achsparallelem An- und Abtrieb, im wesentlichen basierend auf der anhand Fig. 23 detailliert beschriebenen vierzehnten Bauteil-Anordnungs-Variante. Gegenüber Fig. 23 ist zum einen die räumliche Lage der Kupplung E relativ zum Stirnrad 9 und dem Haupt-Planetenradsatz 20 verändert, zum anderen die räumliche Lage der Servo-Einrichtung 63 der Kupplung B relativ zu den Lamellen 61 der Kupplung B und zum Vorschalt-Planetenradsatz 10 bzw. zur Kupplung A. Wie in Fig. 24 dargestellt, wird in der fünfzehnten Bauteil-Anordnungs-Variante eines erfindungsgemäßen Mehrstufengetriebes vorgeschlagen, das Stirnrad 9 und die mit dem Stirnrad 9 wirkverbundene Abtriebswelle 4 unmittelbar an der Seite des Getriebegehäuses 30 anzuordnen, die der Motorwelle 1 und damit dem - nicht dargestellten Antriebsmotors zugewandt ist. Dabei bildet die Lagerplatte 35 die der Motorwelle 1 zugewandte Außenwand des Getriebegehäuses 30 und nimmt die Lagerung des Stirnrades 9 auf. Auf der der Lagerplatte 35 abgewandten Seite des Stirnrades 9 schließt sich in axialer Richtung die Kupplung E an. Die Kupplung E ist also nunmehr räumlich zwischen Stirnrad 9 und Haupt-Planetenradsatz 20 angeordnet. Das als Außenlamellenträger 70 ausgebildete Ausgangselement der Kupplung E ist als in Richtung Motorwelle 1 offener Zylinder ausgebildet, dessen scheibenförmiger Abschnitt 77 an die gekoppelten Stege 25, 26 des Haupt-Planetenradsatzes 20 angrenzt und mit diesen verbunden ist und auf der Antriebswelle 3 gelagert ist. Die Servo-Einrichtung 73 der Kupplung E ist vorzugsweise bauraumsparend axial zwischen Innenlamellenträger 72 und Außenlamellenträger 70 der Kupplung E angeordnet, auf der dem Haupt-Planetenradsatz 20 zugewandten Seite der Lamellen 71 der Kupplung E, also innerhalb des zylinderförmigen Außenlamellenträgers 70 der Kupplung E. Ein Ausgangselement des Hohlrades 27 des Haupt-Planetenradsatzes 20, welches mit dem Stirnrad 9 wirkverbunden ist, greift also in axialer Richtung radial über die Kupplung E hinweg.

In einer anderen Ausbildung kann auch vorgesehen sein, daß die Servo-Einrichtung 73 der Kupplung E auf der dem Stirnrad 9 zugewandten Seite des Innenlamellenträgers 72 der Kupplung E angeornet ist und die Lamellen 71 der Kupplung E in Richtung Haupt-Planetenradsatz 20 betätigt. Hierbei ist eine separate Lagerung der Servo-Einrichtung 73 auf der Antiebswelle 3 notwendig, wodurch die Servo-Einrichtung 73 der Kupplung E dann aber in vorteilhafter Weise stets mit Getriebe-Eingangsdrehzahl n_ein rotiert.

Gemäß Fig. 24 wird weiterhin vorgeschlagen, die Servo-Einrichtung 63 der Kupplung B räumlich zwischen Haupt- und Vorschalt-Planetenradsatz 10, 20 anzuordnen, vorzugsweise unmittelbar axial zwischen den beiden Innenlamellenträgern 62, 42 der Kupplungen B, A. Somit ist die Servo-Einrichtung 63 der Kupplung B, bezogen auf den Vorschalt-Planetenradsatz 10, gegenüber der Servo-Einrichtung 43 der Kupplung A angeordnet und betätigt die Lamellen 61 der Kupplung B in Richtung Haupt-Planetenradsatz 20.

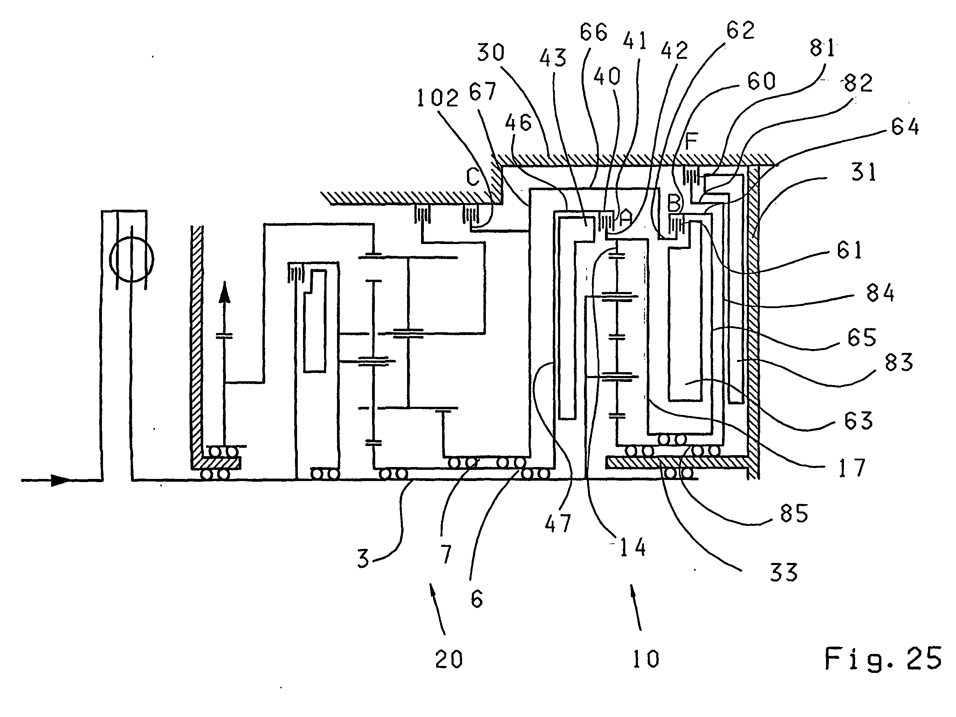

Fig. 25 zeigt eine sechzehnte beispielhafte Bauteil-Anordnungs-Variante eines Mehrstufengetriebes mit der ersten erfindungsgemäßen Vorschaltradsatz-Variante und vorzugsweise achsparallelem An- und Abtrieb, basierend auf der fünfzehnten Bauteil-Anordnungs-Variante gemäß Fig. 24. Gegenüber dieser fünfzehnten Bauteil-Anordnungs-Variante ist nunmehr die räumliche Lage der Kupplung B relativ zur Kupplung A und zum Vorschalt-Planetenradsatz 10 und zur Bremse F verändert. Außerdem ist das Eingangselement der Kupplung A nunmehr als Innenlamellenträger 42 ausgebildet und das Ausgangselement der Kupplung A entsprechend als Außenlamellenträger 40.

Die Anordnung der Bremse F im Getriebegehäuse 30 angrenzend an die dem Antriebsmotor gegenüberliegende Getriebegehäusewand 31 ist gegenüber Fig. 24 unverändert, ebenso die räumliche Lage der Lamellen 41 der Kupplung A relativ zum Vorschalt-Planetenradsatz 10 und zur Bremse F. Das nunmehr als Innenlamellenträger 42 ausgebildete Eingangselement der Kupplung A ist unmittelbar oberhalb des Vorschalt-Planetenradsatzes 10 angeordnet und mit dessen Hohlrades 14 verbunden. Das nunmehr als Außenlamellenträger 40 ausgebildete Ausgangselement der Kupplung A weist die Form eines in Richtung Bremse F geöffneten Zylinders auf, mit einem zylinderförmigen Abschnitt 46, der sich von den Lamellen 41 der Kupplung A ausgehend in Richtung Haupt-Planetenradsatz 20 erstreckt, und mit einem scheibenförmigen Abschnitt 47, der sich an den zylinderförmigen Abschnitt 46 anschließt und sich zentral in Richtung Antriebswelle 3 erstreckt bis zur ersten Sonnenwelle 6, mit der er verbunden ist und die auf der Antriebswelle 3 gelagert ist. Die Servo-Einrichtung 43 der Kupplung A ist innerhalb des zylinderförmigen Außenlamellenträgers 40 der Kupplung A angeordnet, axial zwischen dem scheibenförmigen Abschnitt 47 und dem Vorschalt-Planetenradsatz 10, und betätigt die Lamellen 41 der Kupplung A in Richtung Bremse F.

Insbesondere die Lamellen 61 und die Servo-Einrichtung 63 der Kupplung B sind nunmehr auf der Seite des Vorschalt-Planetenradsatzes 10 angeordnet, die der Bremse F zugewandt ist, also auf der dem Haupt-Planetenradsatz 20 abgewandten Seite des Vorschalt-Planetenradsatzes 10. Dabei ist das Eingangselement der Kupplung B - wie in Fig. 24 - als Außenlamellenträger 60 ausgebildet, in Form eines in Richtung Vorschalt-Planetenradsatz 10 geöffneten Zylinders, mit einem zylinderförmigen Abschnitt 64, der sich unterhalb der Lamellen 81 der Bremse F in axialer Richtung von den Lamellen 61 der Kupplung B in Richtung Getriebegehäusewand 31 erstreckt, und mit einen scheibenförmigen Abschnitt 65, der sich an den zylinderförmigen Abschnitt 64 anschließt und sich zentrisch in Richtung Antriebswelle 3 erstreckt bis zu einem Lagerabschnitt radial oberhalb der Sonnenwelle 85 des Vorschalt-Planetenradsatzes 10, die wiederum auf dem Absatz 33 der Getriebegehäusewand 31 gelagert ist. Dabei grenzt der scheibenförmige Abschnitt 65 des Eingangselementes der Kupplung B unmittelbar axial an den scheibenförmigen Abschnitt 84 des Innenlamellenträgers 82 der Bremse F an, welcher auf der dem Vorschalt-Planetenradsatz 10 zugewandten Seite der sich an die Getriebegehäusewand 31 angrenzenden Servo-Einrichtung 83 der Bremse F angeordnet ist. Auf der der Bremse F bzw. der Getriebegehäusewand 31 zugewandten Seite des Vorschalt-Planetenradsatzes 10, also auf der dem Haupt-Planetenradsatz 20 abgewandten Seite des Vorschalt-Planetenradsatzes 10, erstreckt sich ein mit dem Hohlrad 14 des Vorschalt-Planetenradsatzes 10 verbundenes, zumindest teilweise scheibenförmig ausgebildetes Abtriebselement 17 zentral in Richtung Antriebswelle 3 bzw. Sonnenwelle 85 bis zu dem Lagerabschnitt des Außenlamellenträgers 60 der Kupplung B auf der Sonnenwelle 85 des Vorschalt-Planetenradsatzes 10 und ist dort mit dem Außenlamellenträger 60 verbunden.

Die Servo-Einrichtung 63 der Kupplung B ist axial zwischen dem scheibenförmigen Abtriebselement 17 des Hohlrades 14 und dem scheibenförmigen Abschnitt 65 des Eingangselementes der Kupplung B angeordnet, innerhalb des zylinderförmigen Außenlamellenträgers 60 der Kupplung B, und betätigt die Lamellen 61 der Kupplung B in Richtung des Vorschalt- bzw. Haupt-Planetenradsatzes 10, 20 bzw. in Richtung Antriebsmotor. Lamellen 61 und Servo-Einrichtung 63 der Kupplung B sind also radial oberhalb des zylinderförmigen Vorsprungs 33 der Getriebegehäusewand 31, auf dem auch der Innenlamellenträger 82 der Bremse F gelagert ist, angeordnet. Außenlamellenträger 60 und Servo-Einrichtung 63 der Kupplung B sind also in einfacher Weise als Baugruppe vormontierbar und in den Innenlamellenträger 82 der Bremse F einsetzbar.

Das als Innenlamellenträger 62 ausgebildete Ausgangselement der Kupplung B weist die Form eines in Richtung Bremse F geöffneten Zylinders auf, mit einem zylindrischen Abschnitt 66, der sich in axialer Richtung von den Lamellen 61 der Kupplung B in Richtung Haupt-Planetenradsatz 20 (bzw. in Richtung der Bremse C) vollständig radial über die Kupplung A hinüber erstreckt, und mit einem scheibenförmigen Abschnitt 67, der sich an den zylindrischen Abschnitt 66 anschließt und mit dem Innenlamellenträger 102 der Bremse C verbunden ist und sich zentrisch in Richtung Antriebswelle 3 erstreckt bis zu der zweiten Sonnenwelle 7, die koaxial oberhalb der ersten Sonnenwelle 6 verläuft, auf der ersten Sonnenwelle 6 gelagert ist und den Innenlamellenträger 62 der Kupplung B mit dem zweiten Eingangselement des Haupt-Planetenradsatzes 20 verbindet. Das Ausgangselement der Kupplung B übergreift also den Vorschalt-Planetenradsatz 10 und die Kupplung A vollständig.

Fertigungstechnisch vorteilhaft kann die Verwendung von Gleichteilen für die Lamellen 41, 61 beider Kupplungen A, B vorgesehen sein.

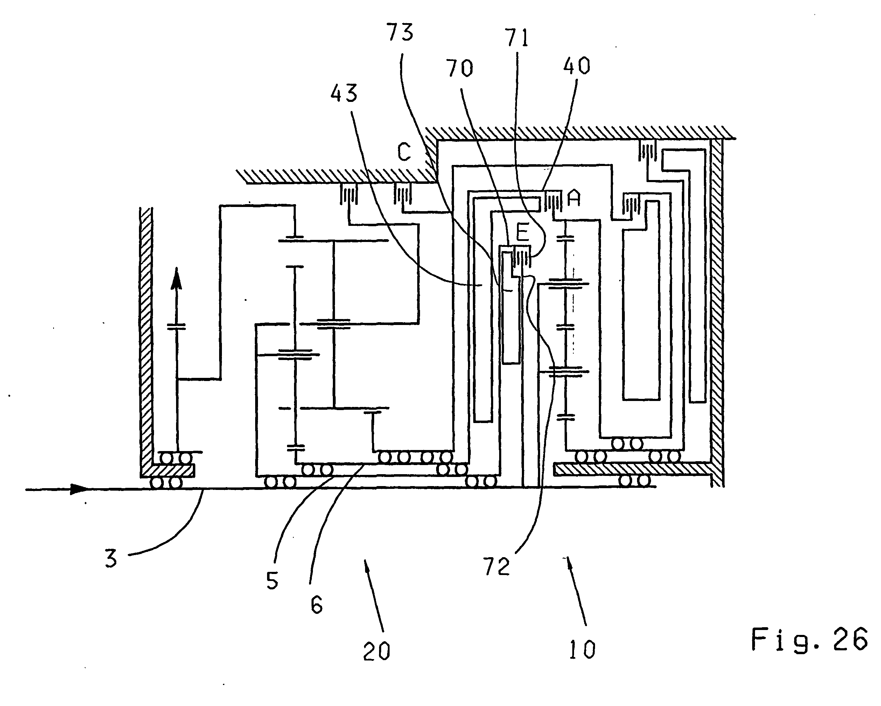

Fig. 26 zeigt eine siebzehnte beispielhafte Bauteil-Anordnungs-Variante eines Mehrstufengetriebes mit der ersten erfindungsgemäßen Vorschaltradsatz-Variante und vorzugsweise rechtwinklig zum Antrieb angeordnetem Abtrieb. Gegenüber der zuvor anhand Fig. 25 beschriebenen sechzehnten Bauteil-Anordnungs-Variante ist nunmehr die Kupplung E räumlich zwischen Haupt- und Vorschalt-Planetenradsatz 20, 10 angeordnet, unmittelbar angrenzend an den Vorschalt-Planetenradsatz 10. Dabei ist die Kupplung E, insbesondere deren Lamellen 71 und deren Servo-Einrichtung 73, vollständig innerhalb des zylinderförmigen Außenlamellenträgers 40 der Kupplung A angeordnet. Vorzugsweise grenzt der Innenlamellenträger 72 der Kupplung E als deren Eingangselement unmittelbar an den Vorschalt-Planetenradsatz 10 an. Entsprechend grenzt der als in Richtung Vorschalt-Planetenradsatz 10 hin geöffneter Zylinder ausgebildete Außenlamellenträger 70 der Kupplung E als Ausgangselement der Kupplung E an die Servo-Einrichtung 43 der Kupplung A an und ist zentrisch mit der dritten Welle 5 verbunden. Die dritte Welle 5 verläuft dabei koaxial unmittelbar oberhalb der Antriebswelle 3, ist auf der Antriebswelle 3 gelagert, durchdringt den Haupt-Planetenradsatz 20 zentral und verbindet den Außenlamellenträger 70 mit dem dritten Eingangselement des Haupt-Planetenradsatzes 20 auf dessen dem Vorschalt-Planetenradsatz 10 abgewandten Seite. Entsprechend verläuft die erste Sonnenwelle 6, über die der Außenlamellenträger 40 der Kupplung A mit dem ersten Eingangselement des Haupt-Planetenradsatzes 20 verbunden ist, nunmehr koaxial oberhalb der dritten Welle 5 und ist vorzugsweise auf dieser gelagert. Die Servo-Einrichtung 73 betätigt die Lamellen 71 der Kupplung E in Richtung Vorschalt-Planetenradsatz 10. Diese Anordnung gemäß Fig. 26 ermöglicht eine einfache Vormontage der kompletten Kupplung E innerhalb des Außenlamellenträgers 40 der Kupplung A.

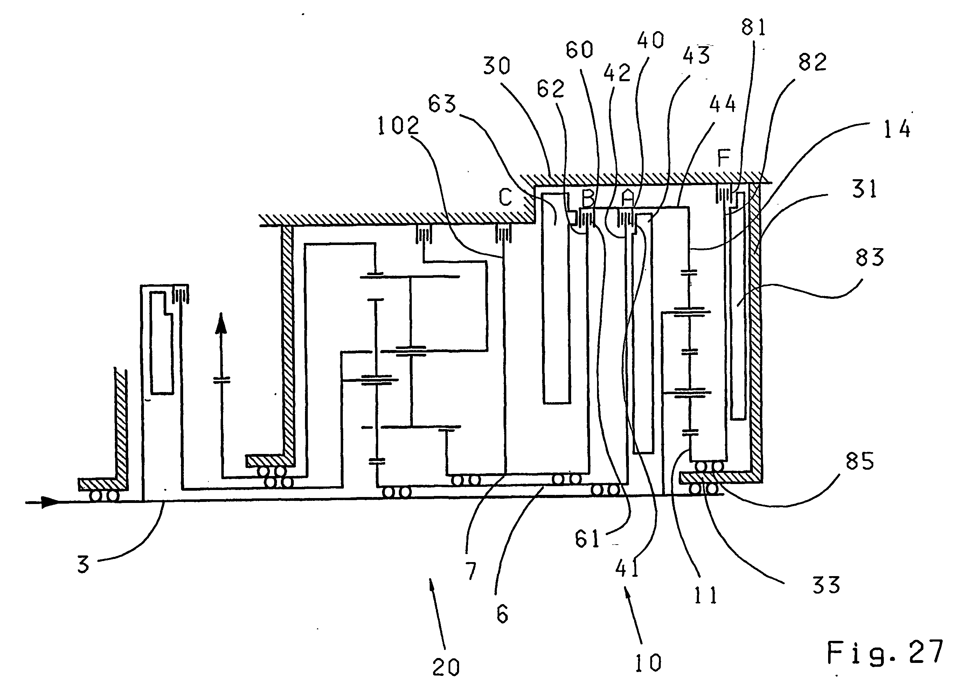

Fig. 27 zeigt eine achtzehnte beispielhafte Bauteil-Anordnungs-Variante eines Mehrstufengetriebes mit der ersten erfindungsgemäßen Vorschaltradsatz-Variante und vorzugsweise achsparallelem An- und Abtrieb, basierend auf der anhand Fig. 23 beschriebenen vierzehnten Bauteil-Anordnungs-Variante.

Gegenüber Fig. 23 unterscheidet sich die in Fig. 27 dargestellte Bauteil-Anordnungs-Variante im wesentlichen durch eine geänderte Anordnung der Servo-Einrichtungen 43, 63 der beiden Kupplungen A und B, durch eine leicht geänderte räumliche Lage der Lamellen 41 der Kupplung A relativ zum Vorschalt-Planetenradsatz 10, sowie durch eine geänderte Bauteilgeometrie der Innenlamellenträger 42, 62 und 102 der drei Schaltelemente A, B und C. Unverändert sind die Außenlamellenträger 40, 60 der beiden Kupplungen A, B mit deren Lamellen 41, 61 unmittelbar nebeneinander angeordnet, vorzugsweise mit gleichem Lamellendurchmesser. Relativ zum Vorschalt-Planetenradsatz 10 sind die Lamellen 41 der Kupplung A nunmehr axial neben dem Vorschalt-Planetenradsatz 10 angeordnet, auf dessen dem Haupt-Planetenradsatz 20 zugewandten Seite. Der mit dem Außenlamellenträger 60 der Kupplung B verbundene Außenlamellenträger 40 der Kupplung A ist über einen axial relativ kurzen zylinderförmigen Abschnitt 44 mit dem Hohlrad 14 des Vorschalt-Planetenradsatzes 10 verbunden. Der weitgehend scheibenförmig ausgebildete Innenlamellenträger 42 der Kupplung A erstreckt sich zentrisch in Richtung Antriebswelle 3, bis zu der ersten Sonnenwelle 6, die koaxial zur Antriebswelle 3 verläuft und auf dieser gelagert ist, und ist mit der ersten Sonnenwelle 6 verbunden. Der ebenfalls weitgehend scheibenförmige Innenlamellenträger 62 der Kupplung B erstreckt sich - unmittelbar axial in Richtung Haupt-Planetenradsatz 20 an den Innenlamellenträger 42 der Kupplung A angrenzend - zentrisch in Richtung Antriebswelle 3, bis zu der zweiten Sonnenwelle 7, die koaxial oberhalb der ersten Sonnenwelle 6 verläuft und auf dieser gelagert ist, und ist mit der zweiten Sonnenwelle 7 verbunden.

Die Servo-Einrichtung 43 der Kupplung A ist axial zwischen Vorschalt-Planetenradsatz 10 und Innenlamellenträger 42 der Kupplung A angeordnet und betätigt die Lamellen 41 der Kupplung A in Richtung Haupt-Planetenradsatz 20. Die Servo-Einrichtung 63 der Kupplung B ist axial zwischen Innenlamellenträger 62 der Kupplung B und dem ebenfalls weitgehend scheibenförmigen Innenlamellenträger 102 der Bremse C angeordnet, vorzugsweise axial in Richtung Haupt-Planetenradsatz 20 unmittelbar angrenzend an den Innenlamellenträger 62 der Kupplung B, und betätigt die Lamellen 61 der Kupplung B in Richtung Vorschalt-Planetenradsatz 10. Der Innenlamellenträger 102 der Bremse C erstreckt sich dabei zentral in Richtung Antriebswelle 3 bis zur zweiten Sonnenwelle 7, mit der er verbunden ist.

Die Lamellen 81 der Bremse F sind unverändert auf möglichst großem Durchmesser innerhalb des Getriebegehäuses 30 im Bereich der motorabgewandten Getriebegehäusewand 31 angeordnet, im dargestellten Beispiel zumindest überwiegend in axialer Richtung neben dem Vorschalt-Planetenradsatz 10. Der Innenlamellenträger 82 der Bremse F ist nunmehr ebenfalls weitgehend scheibenförmig ausgebildet und über die entsprechend axial kurzen Sonnenwelle 85 des Vorschalt-Planetenradsatzes 10 mit dessen Sonnenrad 11 verbunden. Entsprechend kurz ist auch der Vorsprung 33 der Getriebegehäusewand 31, auf dem diese Sonnenwelle 85 gelagert ist. Die Servo-Einrichtung 83 der Bremse F ist zwischen den scheibenförmigen Innenlamellenträger 82 und der Getriebegehäusewand 31 angeordnet, kann aber selbstverständlich auch in die Getriebegehäusewand 31 integriert sein.

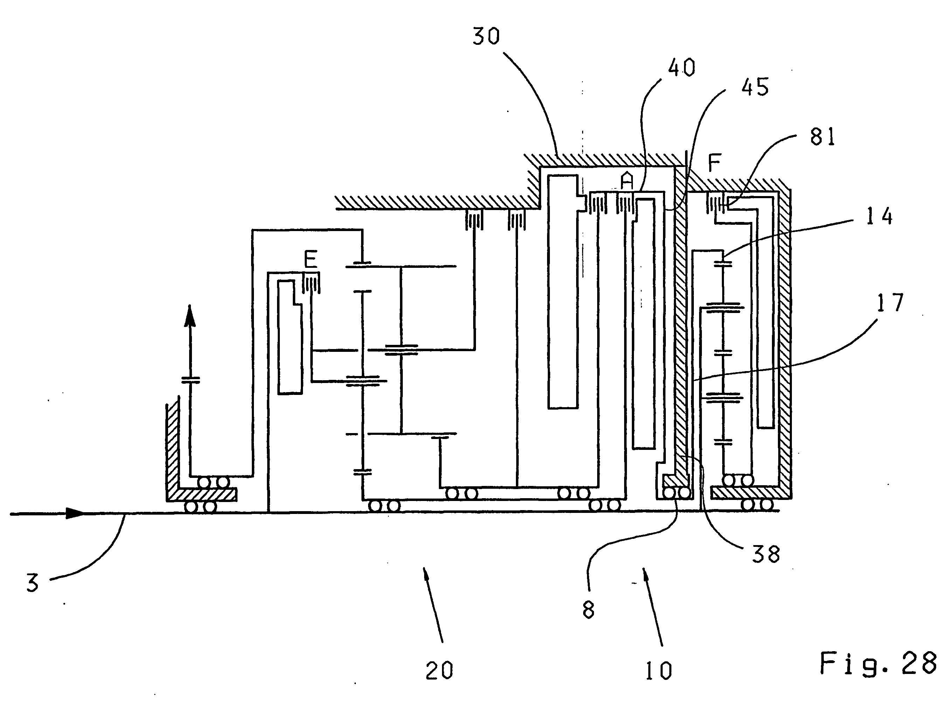

Fig. 28 zeigt eine neunzehnte beispielhafte Bauteil-Anordnungs-Variante eines Mehrstufengetriebes mit der ersten erfindungsgemäßen Vorschaltradsatz-Variante und vorzugsweise achsparallelem An- und Abtrieb. Basierend auf der Bauteil-Anordnung gemäß Fig. 27, wird in Fig. 28 vorgeschlagen, die Kupplung E nicht zwischen dem - nicht dargestellten - Antriebsmotor des Getriebes und dem Stirnrad 9 anzuordnen, sondern die Anordnung der Kupplung E aus Fig. 24 zu übernehmen und die Kupplung E also räumlich zwischen Stirnrad 9 und Haupt-Planetenradsatz 20 anzuordnen. Zur verbesserten Lagerung des Außenlamellenträgers 40 der Kupplung A wird vorgeschlagen, zwischen Kupplung A und Vorschalt-Planetenradsatz 10 eine zusätzliche dritte Lagerplatte 38 vorzusehen, die mit dem Getriebegehäuse 30 verbunden ist. Selbstverständlich können Getriebegehäuse 30 und dritte Lagerplatte 38 auch einstückig ausgeführt sein. Wie in Fig. 28 ersichtlich, ist der Außenlamellenträger 40 der Kupplung A als Zylinder ausgebildet, der in Richtung Haupt-Planetenradsatz 20 geöffnet ist. Der scheibenförmige Abschnitt 45 dieses Eingangselementes der Kupplung A erstreckt sich zentrisch in Richtung Antriebswelle 3 bis zu einer axial kurzen Zwischenwelle 8, die koaxial unmittelbar oberhalb der Antriebswelle 3 verläuft, sich axial in Richtung Vorschalt-Planetenradsatz 10 erstreckt, innerhalb der dritten Lagerplatte 38 gelagert ist, und den Außenlamellenträger 40 der Kupplung A über das scheibenförmige Abtriebselement 17 mit dem Hohlrad 14 des Vorschalt-Planetenrad-satzes 10 verbindet. Dabei grenzt das scheibenförmige Abtriebselement 17 auf der dem Vorschalt-Planetenradsatzes 10 zügewandetne Seite der dritten Lagerplatte 38 an diese dritten Lagerplatte 38 an. Selbstverständlich kann die Zwischenwelle 8 auch direkt auf der Antriebswelle 3 gelagert sein.

Im dargestellten Beispiel sind die Lamellen 81 der Bremse F - im Unterschied zu Fig. 27 - nunmehr zumindest überwiegend in radialer Richtung oberhalb des Hohlrades 14 des Vorschaltradsatzes 10 angeordnet, wie schon in einigen zuvor beschriebenen Bauteile-Anordnungs-Varianten.

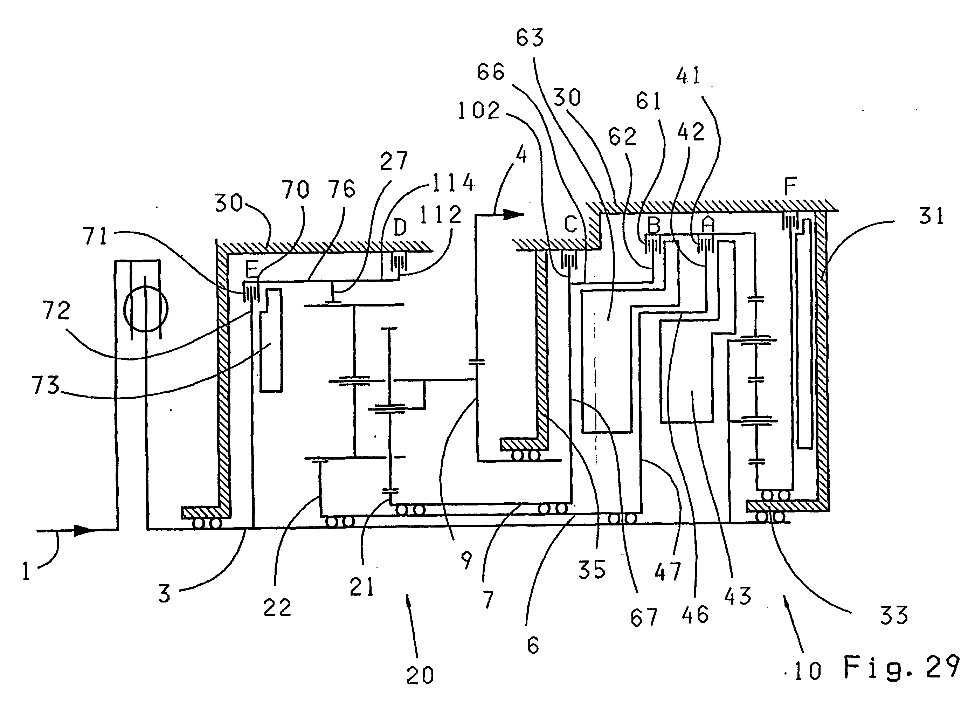

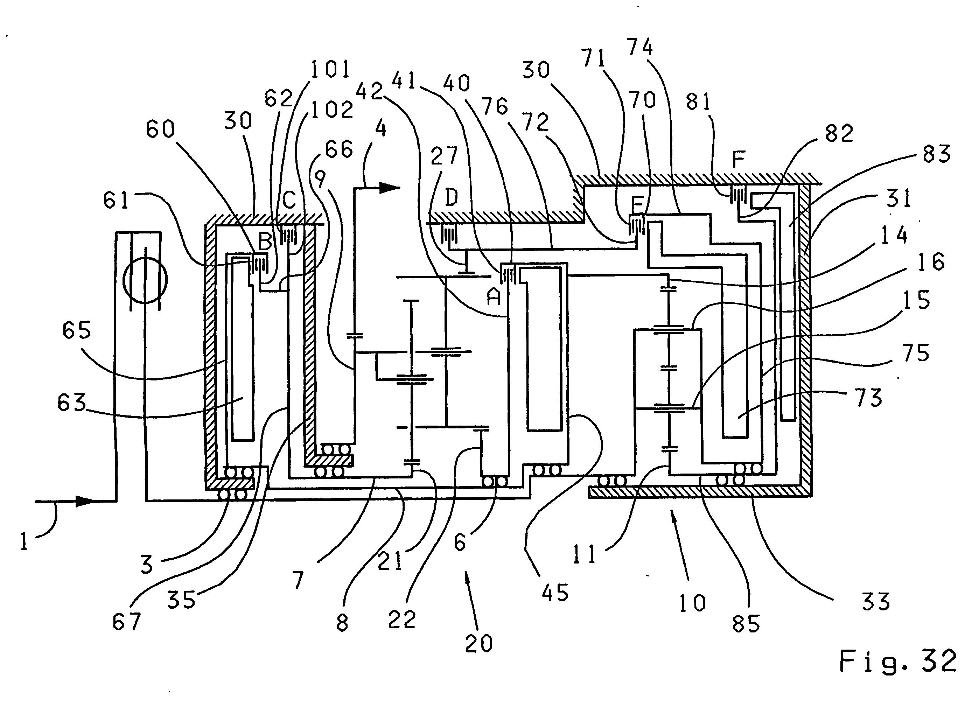

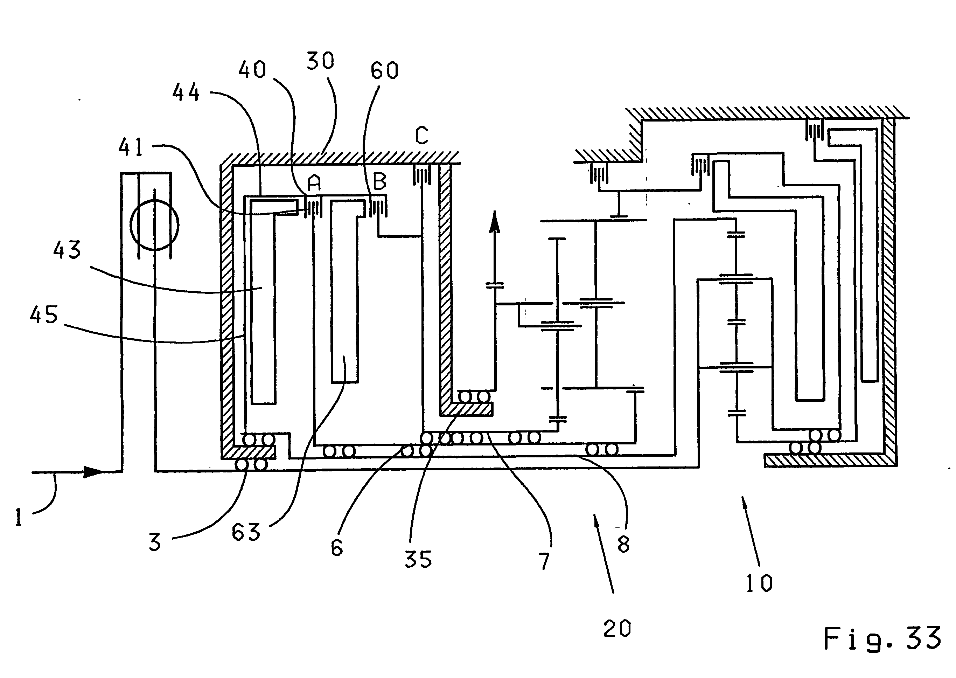

Die folgenden Bauteil-Anordnungs-Varianten eines erfindungsgemäßen Mehrstufengetriebes mit der ersten erfindungsgemäßen Vorschaltradsatz-Variante und vorzugsweise achsparallelem An- und Abtrieb gemäß Fig. 29 bis Fig. 33 weisen den schon anhand Fig. 18 erläuterten beispielhaften Haupt-Planetenradsatz 20 auf. Die Bauform ist unverändert ein Ravigneaux-Radsatz, jedoch mit dem großen Sonnenrad 22 als erstes Eingangselement, mit dem kleinen Sonnenrad 21 als zweites Eingangselement, mit dem Hohlrad 27 als drittes Eingangselement, sowie mit den gekoppelten Stege 25, 26 als Ausgangselement des Haupt-Planetenradsatzes 20. In den Bauteil-Anordnungs-Varianten gemäß Fig. 29 bis Fig. 31 ist im Unterschied zu Fig. 18 das kleine Sonnenrad 21 auf der dem Vorschalt-Planetenradsatz 10 zugewandten Seite des Haupt-Planetenradsatzes 20 angeordnet. In den Bauteil-Anordnungs-Varianten gemäß Fig. 32 und Fig. 33 ist analog zu Fig. 18 das große Sonnenrad 22 auf der dem Vorschalt-Planetenradsatz 10 zugewandten Seite des Haupt-Planetenradsatzes 20 angeordnet. Die zugeordneten Standübersetzungen können der Tabelle in Fig. 18 entnommen werden.

In den Bauteil-Anordnungs-Varianten gemäß Fig. 29 bis Fig. 31 ist das als Kupplung ausgebildete fünfte Schaltelement E jeweils antriebsseitig angeordnet, also an der Seite des Getriebegehäuses 30, die der Antriebswelle 1 bzw. dem nicht dargestellten Antriebsmotor zugewandt ist. Die mit der Motorwelle 1 wirkverbundene Antriebswelle 3, mit der auch ein Eingangselement der Kupplung E verbunden ist, durchdringt das Getriebe zentral in axialer Richtung vollständig. Das sechste, als Bremse ausgebildete Schaltelement F ist auf der dem Antriebsmotor gegenüberliegenden Seite des Getriebes angeordnet, in radialer Richtung oberhalb des sich in den Innenraum des Getriebegehäuses 30 erstreckenden Vorsprungs 33 der Getriebegehäusewand 31, die gleichzeitig die motorabgewandte Außenwand des Getriebegehäuses 30 bildet, in axialer Richtung angrenzend an diese Getriebegehäusewand 31. Der Haupt-Planetenradsatz 20 ist näher an der Kupplung E bzw. näher an dem Antriebsmotor als der Vorschalt-Planetenradsatz 10. Der Vorschalt-Planetenradsatz 10 ist näher an der Bremse F als der Haupt-Planetenradsatz 20. Das Stirnrad 9 und die damit wirkverbundene Abtriebswelle 4 sind in axialer Richtung ungefähr getriebemittig angeordnet, räumlich zwischen Haupt- und Vorschalt-Planetenradsatz 20, 10, unmittelbar angrenzend an den Haupt-Planetenradsatz 20 auf dessen dem Vorschalt-Planetenradsatz 10 zugewandten Seite. Dabei ist das Stirnrad 9 stets über die Lagerplatte 35 am Getriebegehäuse 30 gelagert, wobei die Lagerplatte 35 in axialer Richtung an das Stirnrad 9 an dessen dem Haupt-Planetenradsatz 20 abgewandten Seite angrenzt und mit dem Getriebegehäuse 30 verbunden ist. Selbstverständlich können Getriebegehäuse 30 und Lagerplatte 35 auch einstückig ausgeführt sein.

In der in Fig. 29 dargestellten zwanzigsten beispielhaften Bauteil-Anordnungs-Variante wird vorgeschlagen, daß die auf der Antriebsseite des Mehrstufengetriebes angeordnete Kupplung E unmittelbar an den Haupt-Planetenradsatz 20 angrenzt. Hierbei ist der zumindest weitgehend scheibenförmig ausgebildete Innenlamellenträger 72 der Kupplung E als deren Eingangselement mit der Antriebswelle 3 verbunden. Die Lamellen 71 der Kupplung E grenzen an die der Motorwelle 1 zugewandten Außenwand des Getriebegehäuses 30 an, auf möglichst großem Durchmesser innerhalb des Getriebegehäuses 30. Selbstverständlich kann diese Außenwand auch als separater Deckel ausgebildet sein, der mit dem Getriebegehäuse 30 verbunden ist. Das Ausgangselement der Kupplung E ist als Außenlamellenträger 70 ausgebildet und weist einen zylinderförmigen Abschnitt 76 auf, der sich in axialer Richtung bis zum Hohlrad 27 des Haupt-Planetenradsatzes 20 erstreckt und mit diesem verbunden ist. Axial in Richtung Vorschalt-Planetenradsatz 10, radial oberhalb des Hohlrades 27 schließt sich an den zylinderförmigen Abschnitt 76 ein zylinderförmiger Abschnitt 114 des Innenlamellenträgers 112 der Bremse D an und ist sowohl mit dem zylinderförmigen Abschnitt 76 als auch mit dem Hohlrad 27, welches in diesem ausgeführten Beispiel das dritte Eingangselement des Haupt-Planetenradsatzes 20 bildet, verbunden. Das Servo-Element 73 der Kupplung E ist räumlich zwischen Innenlamellenträger 72 der Kupplung E und Haupt-Planetenradsatz 20 angeordnet und betätigt die Lamellen 71 der Kupplung E von deren dem Haupt-Planetenradsatz 20 zugewandten Seite her. In vorteilhafter Weise rotiert die Servo-Einrichtung 73 der Kupplung E also stets mit Getriebe-Eingangsdrehzahl n_ein, wodurch ein ungewünschtes Leerlaufen der rotierenden Kolbenraums und - soweit in der praktischen Auskonstruktion den Servo-Einrichtung 73 vorgesehen - des rotierenden Druckausgleichsraums der Kupplung E in derem nichtgeschalteten Zustand zuverlässig verhindert wird.

Das große Sonnenrad 22 des Haupt-Planetenradsatzes 20 ist auf der der Motorwelle 1 zugewandten Seite des Haupt-Planetenradsatzes 20 angeordnet und mit der ersten Sonnenwelle 6 verbunden. Die erste Sonnenwelle 6 erstreckt sich koaxial unmittelbar oberhalb der Antriebswelle 3 axial in Richtung Vorschalt-Planetenradsatz 10, ist beispielsweise auf der Antriebswelle 3 gelagert, durchdringt den Haupt-Planetenradsatz 20, das Stirnrad 9 und die Lagerplatte 35 sowie das hier als Innenlamellenträger 62 ausgebildete Ausgangselement der Kupplung B zentrisch und ist mit einem scheibenförmigen Abschnitt 47 des hier als Innenlamellenträger 42 ausgebildeten Ausgangselementes der Kupplung A verbunden. Das kleine Sonnenrad 21 des Haupt-Planetenradsatzes 20 ist auf der dem Vorschalt-Planetenradsatz 10 zugewandten Seite des Haupt-Planetenradsatzes 20 angeordnet und mit der zweiten Sonnenwelle 7 verbunden. Die zweite Sonnenwelle 7 erstreckt sich koaxial unmittelbar oberhalb der ersten Sonnenwelle 6 axial in Richtung Vorschalt-Planetenradsatz 10, ist beispielsweise auf der ersten Sonnenwelle 6 gelagert, durchdringt das Stirnrad 9 und die Lagerplatte 35 zentrisch und ist mit einem scheibenförmigen Abschnitt 67 des hier als Innenlamellenträger 62 ausgebildeten Ausgangselementes der Kupplung B verbunden.

Axial in Richtung Getriebegehäusewand 31, also in Richtung der motorabgewandten Seite des Mehrstufengetriebes, schließen sich an die Lagerplatte 35 die Bremse C, die Kupplung B, die Kupplung A, der Vorschalt-Planetenradsatz 10 und die Bremse F in dieser Reihenfolge an. Auf eine detaillierte Beschreibung der räumlichen Anordnung der Bremse F, des Vorschalt-Planetenradsatzes 10, der Lamellen 41, 61, 101 der Kupplungen A, B, C sowie der miteinander verbundenen Außenlamellenträger 40, 60 der Kupplungen A, B als deren Eingangselemente relativ zueinander kann an dieser Stelle verzichtet werden, da deren Anordnung aus der zuvor anhand Fig. 27 beschriebenen achtzehnten Bauteil-Anordnungs-Variante in Fig. 29 unverändert übernommen wurde. Gegenüber Fig. 27 wurde die Ausgestaltung der Innenlamellenträger 42, 62 beider Kupplungen A, B sowie die Anordnung der Servo-Einrichtung 63 der Kupplung B modifiziert. Beide als Innenlamellenträger 42, 62 ausgebildete Ausgangselemente der Kupplungen A, B weisen nunmehr die Form eines in Richtung Vorschalt-Planetenradsatz 10 geöffneten Zylinders auf, mit jeweils einem zylindrischen Abschnitt 46, 66 und jeweils einem scheibenförmigen Abschnitt 47, 67. In dem Bereich, in dem der zylindrischen Abschnitt 66 des Ausgangselementes der Kupplung B in den scheibenförmigen Abschnitt 67 übergeht, ist auch der Innenlamellenträger 102 der Bremse C mit diesem Ausgangselement der Kupplung B verbunden. Die Servo-Einrichtung 43 der Kupplung A ist räumlich zwischen Vorschalt-Planetenradsatz 10 und Innenlamellenträger 42 der Kupplung A angeordnet, die Servo-Einrichtung 63 der Kupplung B zwischen Innenlamellenträger 42 der Kupplung A und Innenlamellenträger 62 der Kupplung B. Die Lamellen 41, 61 beider Kupplungen werden in Richtung Haupt-Planetenradsatz 20 betätigt. Die abgewinkelte Bauweise und verschachtelte Anordnung beider Innenlamellenträger 42, 62 zusammen mit den Servo-Einrichtungen 43, 63 beider Kupplungen A, B ermöglicht einen sehr kompakten Aufbau dieser Baugruppe, wobei insbesondere radial unterhalb der jeweiligen zylindrischen Abschnitte 46, 66 der Innenlamellenträger 42, 62 Bauraum geschaffen ist für den dynamischen Druckausgleich der jeweiligen Kupplung.

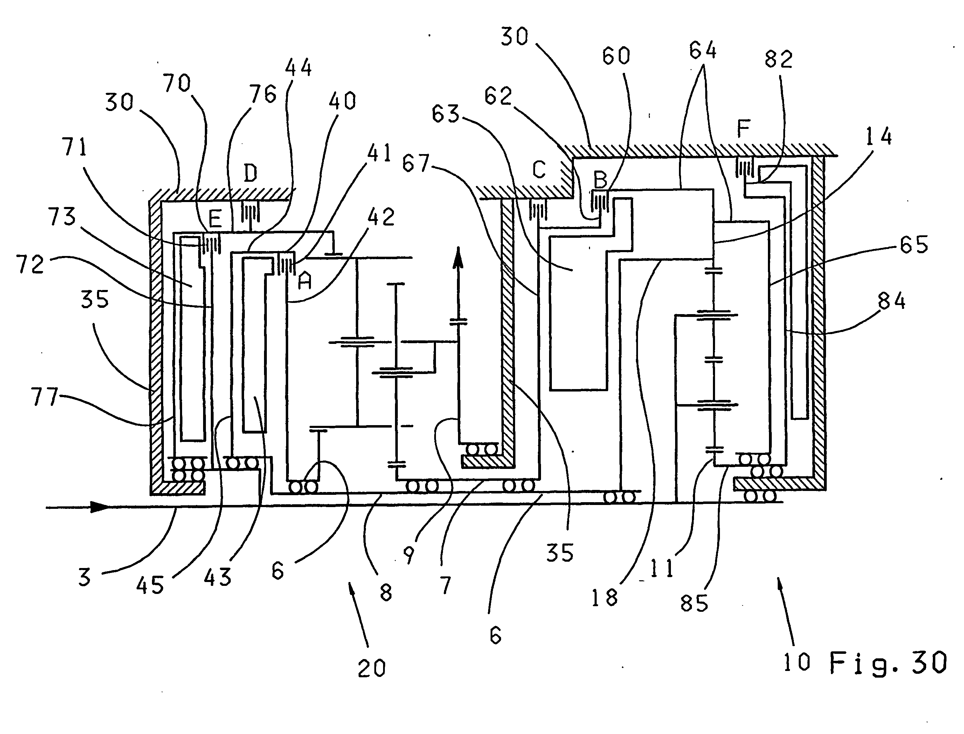

Fig. 30 zeigt eine einundzwanzigste beispielhafte Bauteil-Anordnungs-Variante eines Mehrstufengetriebes mit der ersten erfindungsgemäßen Vorschaltradsatz-Variante und vorzugsweise achsparallelem An- und Abtrieb, abgeleitet aus der vorigen Bauteil-Anordnungs-Variante gemäß Fig. 29. Gegenüber Fig. 29 wurde im wesentlichen die Anordnung der Kupplung A verändert. Es wird vorgeschlagen, die Kupplung A nunmehr räumlich zwischen der Kupplung E und dem Haupt-Planetenradsatz 20 anzuordnen, also auf der dem Stirnrad 9 und dem Vorschalt-Planetenradsatz 10 abgewandten Seite des Haupt-Planetenradsatzes 20, vorzugsweise unmittelbar angrenzend an Haupt-Planetenradsatz 20 und Kupplung E.

Die Servo-Einrichtung 63 der Kupplung B grenzt unverändert axial in Richtung Vorschalt-Planetenradsatz 10 an den scheibenförmigen Abschnitt 67 des als Innenlamellenträger 62 ausgebildeten Ausgangselementes der Kupplung B an. Zwischen der Servo-Einrichtung 63 der Kupplung B und dem Vorschalt-Planetenradsatz 10 ist nunmehr ein zylinderförmiges Abtriebselement 18 vorgesehen, das einerseits mit dem Hohlrad 14 des Vorschalt-Planetenradsatzes 10 und andererseits mit einer Zwischenwelle 8 verbunden ist. Diese Zwischenwelle 8 erstreckt ist koaxial unmittelbar oberhalb der Antriebswelle 3 in axialer Richtung von dem Vorschalt-Planetenradsatz 10 bis zu dem als Außenlamellenträger 40 ausgebildeten Eingangselement der Kupplung A, durchgreift dabei zentrisch den durch den Innenlamellenträger 62 gebildeten Kupplungsraum der Kupplung B, die zweite Sonnenwelle 7 und die Lagerplatte 35 und das Stirnrad 9, sowie den Haupt-Planetenradsatz 20 und das als Innenlamellenträger 42 ausgebildete Ausgangselement der Kupplung A. Im dargestellten Beispiel ist die Zwischenwelle 8 direkt auf der Antriebswelle 3 und die dritte Sonnenwelle 7 wiederum direkt auf der Zwischenwelle 8 gelagert. Es kann beispielsweise auch vorgesehen sein, daß die zweite Sonnenwelle 7 zusätzlich oder auch ausschließlich über die Lagerplatte ,35 gelagert ist.

Zur verbesserten Lagerung des unverändert als Außenlamellenträger 60 ausgebildeten Eingangselementes der Kupplung B erstreckt sich dessen zumindest weitgehend zylinderförmiger Abschnitt 64, der mit dem Hohlrad des Vorschalt-Planetenradsatzes 10 verbunden ist, axial in Richtung Bremse F über den Vorschalt-Planetenradsatz 10 hinaus. An diesen zylinderförmiger Abschnitt 64 schließt sich ein scheibenförmiger Abschnitt 65 an, welcher sich zentrisch in Richtung Antriebswelle 3 erstreckt bis zur Sonnenwelle 85 des Vorschalt-Planetenradsatzes 10, die das Sonnenrad 11 mit dem Innenlamellenträger 82 der Bremse F verbindet. Räumlich erstreckt sich der scheibenförmige Abschnitt 65 also zwischen Vorschalt-Planetenradsatz 10 und dem scheibenförmigen Abschnitt 84 des Innenlamellenträgers 82 der Bremse F. Über einen entsprechenden Lagerabschnitt des scheibenförmigen Abschnitts 65 ist der Außenlamellenträger 60 der Kupplung B auf der Sonnenwelle 85 des Vorschalt-Planetenradsatzes 10 gelagert.

Wie bereits erwähnt, ist die Kupplung E auf der Seite des Getriebegehäuses 30 angeordnet, die dem - nicht dargestellten - Antriebsmotor zugewandt ist, wobei der Innenlamellenträger 72 der Kupplung E unverändert scheibenförmig ausgebildet ist und mit der Antriebswelle 3 verbunden ist. Als Variante zur anhand Fig. 29 beschriebenen Anordnung der Servo-Einrichtung 73 der Kupplung E, wird in Fig. 30 nun vorgeschlagen, die Servo-Einrichtung 73 der Kupplung E auf der dem Haupt-Planetenradsatz 20 abgewandten Seite der Lamellen 71 anzuordnen. Entsprechend werden die Lamellen 71 der Kupplung E in Richtung Haupt-Planetenradsatz 20 betätigt. Zur Aufnahme der Servo-Einrichtung 73 innerhalb des Außenlamellenträgers 70 der Kupplung E und zur Lagerung des Außenlamellenträgers 70 auf der Antriebswelle 3 erstreckt sich der zylinderförmige Abschnitt 76 des als Außenlamellenträger 70 ausgebildeteten Ausgangselementes der Kupplung E axial in Richtung Antriebsmotor über die Lamellen 71 und die Servo-Einrichtung 73 hinaus bis nahe der Außenwand des Getriebegehäuses 30. Ein an diese Außenwand angrenzender scheibenförmiger Abschnitt 77 schließt sich an diesen zylinderförmigen Abschnitt 76 des Ausgangselementes der Kupplung E an, erstreckt sich zentrisch in Richtung Antriebswelle 3 und ist über einen entsprechend ausgebildeten Lagerabschnitt auf dieser gelagert.

Wie bereits erwähnt, ist die Kupplung A nunmehr räumlich zwischen Kupplung E und Haupt-Planetenradsatz 20 angeordnet. Dabei ist das Eingangselement der Kupplung A als Außenlamellenträger 40 ausgebildet, in Form eines in Richtung Haupt-Planetenradsatz 20 offenen Zylinders, mit einem zylinderförmigen Abschnitt 44, der sich zwischen den Lamellen 41 der Kupplung A und den Lamellen 71 der Kupplung E erstreckt, und mit einem scheibenförmigen Abschnitt 45, der sich an den zylinderförmigen Abschnitt 44 anschließt und sich zentrisch in Richtung Antriebswelle 3 erstreckt bis zur - koaxial oberhalb der Antriebswelle 3 verlaufenden - Zwischenwelle 8 und mit dieser Zwischenwelle 8 verbunden ist. Dabei grenzt der scheibenförmige Abschnitt 45 unmittelbar an den scheibenförmigen Innenlamellenträger 72 der Kupplung E an. Die Servo-Einrichtung 43 der Kupplung A ist innerhalb des zylinderförmigen Außenlamellenträgers 40 der Kupplung A angeordnet und betätigt deren Lamellen 41 in Richtung Haupt-Planetenradsatz 20. Der vorzugsweise scheibenförmig ausgebildete Innenlamellenträger 42 der Kupplung A erstreckt sich zentrisch in Richtung Antriebswelle 3 bis zur Zwischenwelle 8, auf der er gelagert ist. Dieser Lagerabschnitt des Innenlamellenträgers 42 radial unmittelbar oberhalb der Zwischenwelle 8 kann als axial kurze erste Sonnenwelle 6 interpretiert werden, über die der Innenlamellenträger 42 der Kupplung A mit dem ersten Eingangselement des Haupt-Planetenradsatzes 20 verbunden ist.

Wie in Fig. 30 ersichtlich, übergreift das Ausgangselement der Kupplung E die Kupplung A vollständig. Aus Gründen der Montierbarkeit des Außenlamellenträgers 40 der Kupplung A innerhalb des Außenlamellenträgers 70 der Kupplung E weisen die Lamellen 41 der Kupplung A einen geringfügig kleineren Durchmesser auf als die Lamellen 71 der Kupplung E. Die im dargestellten Beispiel in radialer Richtung oberhalb der Kupplung A angeordnete Bremse D kann selbstverständlich auch oberhalb des Hohlrades 27 des Haupt-Planetenradsatzes 20 angeordnet sein.

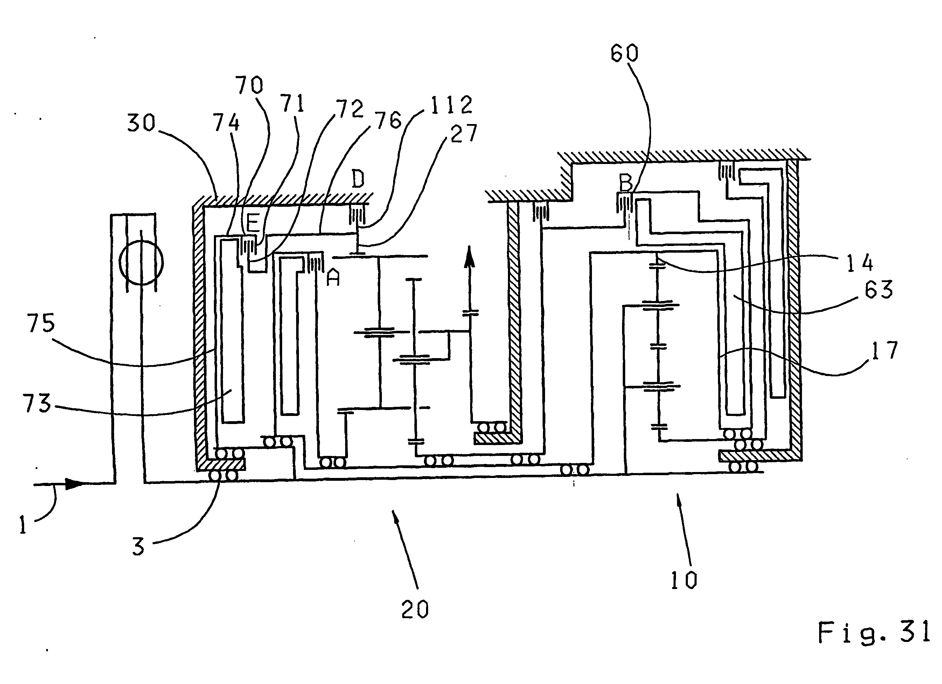

Fig. 31 zeigt eine zweiundzwanzigste beispielhafte Bauteil-Anordnungs-Variante eines Mehrstufengetriebes mit der ersten erfindungsgemäßen Vorschaltradsatz-Variante und vorzugsweise achsparallelem An- und Abtrieb, basierend auf die vorige Anordnung gemäß Fig. 30. Die Änderungen gegenüber der Anordnung gemäß Fig. 30 betreffen im wesentlichen die Ausgestaltung von Eingangs- und Ausgangselement der Kupplung E sowie die geometrische Ausgestaltung des Eingangselementes der Kupplung B und die räumliche Anordnung der Servo-Einrichtung 63 der Kupplung B. Es wird vorgeschlagen, das Eingangselement der Kupplung E als Außenlamellenträger 70 auszubilden. Ein zumindest überwiegend scheibenförmiger Abschnitt 75 dieses Eingangselementes der Kupplung E ist mit der Antriebswelle 3 verbunden, erstreckt sich parallel zur der Außenwand des Getriebegehäuses 30, die der Motorwelle 1 zugewandt ist, und ist im dargestellten Beispiel an dieser Außenwand gelagert. An dem größten Durchmesser des scheibenförmiger Abschnitt 75 schließt sich ein zylinderförmiger Abschnitt 74 des Eingangselementes der Kupplung E an und erstreckt sich axial in Richtung Haupt-Planetenradsatz 20 bis zu den Lamellen 71 der Kupplung E. Das Ausgangselement der Kupplung E ist entsprechend als Innenlamellenträger 72 ausgebildet und weist einen zumindest weitgehend zylinderförmigen Abschnitt 76 auf, der sich axial bis über das Hohlrad 27 des Haupt-Planetenradsatzes 20 erstreckt und mit diesem Hohlrad 27 verbunden ist. Das Ausgangselement der Kupplung E übergreift dabei die Kupplung A vollständig. In radialer Richtung über dem Hohlrad 27 ist die Bremse D angeordnet, deren Innenlamellenträger 112 sowohl mit dem zylinderförmigen Abschnitt 76 des Ausgangselementes der Kupplung E als auch mit dem Hohlrad 27 verbunden ist. Die Servo-Einrichtung 73 der Kupplung E grenzt an den scheibenförmigen Abschnitt 75 des Eingangselementes der Kupplung E axial in Richtung Haupt-Planetenradsatz 20 an und betätigt die Lamellen 71 der Kupplung E in Richtung Haupt-Planetenradsatz 20. Somit ist die Servo-Einrichtung 73 vollständig innerhalb des angetriebenen Außenlamellenträgers 70 der Kupplung E angeordnet und rotiert in vorteilhafter Weise stets mit Getriebe-Eingangsdrehzahl n_ein. Weitere Vorteile ergeben sich durch die Möglichkeit einer einfachen Vormontage der kompletten Kupplungen E und A als Baugruppe, ggf. zusätzlich zusammen mit dem Innenlamellenträger der Bremse D.

Hinsichtlich der Anordnung der Servo-Einrichtung 63 der Kupplung B wird vorgeschlagen, diese nunmehr überwiegend auf der dem Haupt-Planetenradsatz 20 gegenüberliegenden Seite des Vorschaltradsatzes 10 anzuordnen, wobei ein Betätigungselement der Servo-Einrichtung 63 das Hohlrad 14 des Vorschalt-Planetenradsatzes 10 übergreift und die Lamellen 61 der Kupplung B in Richtung Haupt-Planetenradsatz 20 betätigt. Die in Fig. 31 dargestellte Anordnung der Servo-Einrichtung 63, die hierzu zugeordnete geometrische Ausgestaltung des zylinderförmigen Außenlamellenträgers 60 der Kupplung B und die Anbindung des Außenlamellenträgers 60 über das scheibenförmige Abtriebselement 17 des Hohlrad 14 an den Vorschalt-Planetenradsatz 10 wurde bereits in der zweiten Bauteil-Anordnungs-Variante anhand Fig. 6 detailliert beschrieben.

Da die Antriebswelle 3 in den zuvor in Fig. 18 bis Fig. 31 beschriebenen beispielhaften neunten bis zweiundzwanzigsten Bauteil-Anordnungs-Varianten das gesamte Getriebe in axialer Richtung bis auf eine Außenwand des Getriebegehäuses 30 durchdringt, kann in verschiedenen anderen Ausbildungen der neunten bis zweiundzwanzigsten Bauteil-Anordnungs-Variante auch vorgesehen sein, daß die Motorwelle 1 und damit der Antriebsmotor des Mehrstufengetriebes auf der jeweils anderen Außenseite des Getriebegehäuses 30 angeordnet ist, also angrenzend an die Getriebgehäusewand 31, an die getriebeinnenraumseitig die Bremse F angrenzt.

Anhand Fig. 32 und Fig. 33 werden nun zwei weitere beispielhafte Bauteil-Anordnungs-Varianten eines Mehrstufengetriebes mit der ersten erfindungsgemäßen Vorschaltradsatz-Variante und vorzugsweise achsparallelem An- und Abtrieb beschrieben, bei denen Vorschalt-Planetenradsatz 10, Kupplung E und Bremse F zusammen angeordnet sind auf der Seite des Haupt-Planetenradsatzes 20, die der Motorwelle 1 und damit dem - nicht dargestellten - Antriebsmotor des Mehrstufengetriebes gegenüber liegt. Die Bremse F ist dabei unmittelbar benachbart zur Getriebegehäusewand 31, welche die der Motorwelle 1 gegenüberliegende Außenwand des Getriebegehäuses 30 bildet, angeordnet. Die Lamellen 81 der Bremse F sind innerhalb des Getriebegehäuses 30 baulängensparend auf möglichst großem Durchmesser angeordnet. Der Innenlamellenträger 82 der Bremse F ist als in Richtung Motorwelle 1 offener Zylinder ausgebildet und auf dem Vorsprung 33 der Getriebegehäusewand 31 gelagert und über die Sonnenwelle 85 des Vorschalt-Planetenradsatzes 10 mit dessen Sonnenrad 11 verbunden. Die Servo-Einrichtung 83 der Bremse F ist axial zwischen Getriebegehäusewand 31 und Innenlamellenträger 82 angeordnet und betätigt die Lamellen 81 der Bremse F in Richtung Motorwelle 1.

Axial in Richtung Motorwelle 1 grenzt das als Außenlamellenträger 70 ausgebildete Eingangselement der Kupplung E an den Innenlamellenträger 82 der Bremse F an. Dabei weist das Eingangselement der Kupplung E einen scheibenförmigen Abschnitt 75 auf, der unmittelbar an den Innenlamellenträger 82 der Bremse F angrenzt, auf der Sonnenwelle 85 des Vorschalt-Planetenradsatzes 10 gelagert ist und mit den gekoppelten Stegen 15, 16 des Vorschalt-Planetenradsatzes 10 auf dessen der Motorwelle 1 gegenüberliegenden Seite verbunden ist. Die gekoppelten Stege 15, 16 wiederum durchdringen den Vorschalt-Planetenradsatz 10 und sind auf dessen der Motorwelle 1 zugewandten Seite mit der Antriebswelle 1 verbunden. Im dargestellten Beispiel sind die gekoppelten Stege 15, 16 zusätzlich auf dem sich entsprechend axial über das Sonnenrad 11 des Vorschalt-Planetenradsatzes 10 hinaus erstreckenden Vorsprung 33 der Getriebegehäusewand 31 gelagert. Weiterhin weist das Eingangselement der Kupplung E einen zylinderförmigen Abschnitt 74 auf, der sich an den Außendurchmesser des scheibenförmigen Abschnitts 75 anschließt und sich axial in Richtung Motorwelle 1 über den Vorschalt-Planetenradsatz 10 hinweg erstreckt bis zu den Lamellen 71 der Kupplung E. Die Lamellen 71 sind zumindest teilweise axial neben dem Vorschalt-Planetenradsatz 10 angeordnet, auf dessen der Motorwelle 1 zugewandten Seite. Der Durchmesser der Lamellen 71 ist vorzugsweise nur wenig kleiner als der Durchmesser der Lamellen 81 der Bremse F und vorzugsweise deutlich größer als der Außendurchmesser des Hohlrades 14 des Vorschalt-Planetenradsatzes 10. Die Servo-Einrichtung 73 der Kupplung E ist innerhalb des Außenlamellenträgers 70 angeordnet, überwiegend axial zwischen dem scheibenförmigen Abschnitt 75 und dem Vorschalt-Planetenradsatz 10, wobei ein Betätigungselement der Servo-Einrichtung 73 über das Hohlrad 14 greift und die Lamellen 71 in Richtung Motorwelle 1 betätigt. Der Vorschalt-Planetenradsatz 10 ist also vollständig innerhalb des durch den Außenlamellenträger 70 gebildeten Kupplungsraumes der Kupplung E angeordnet. Das Ausgangselement der Kupplung E ist entsprechend als Innenlamellenträger 72 ausgebildet, mit einem zylinderförmigen Abschnitt 76, der sich axial von den Lamellen 71 in Richtung Motorwelle 1 erstreckt bis über das Hohlrad 27 des Haupt-Planetenradsatzes 20, mit dem er verbunden ist. Dabei ist die Bremse D oberhalb dieses Hohlrades 27 angeordnet und sowohl mit dem Hohlrad 27 als auch mit dem zylinderförmigen Abschnitt 76 verbunden. Die solchermaßen ausgeführte Anordnung der Servo-Einrichtung 73 der Kupplung E verhindert in vorteilhafter Weise ein Leerlaufen deren Kupplungsraums bzw. auch deren Druckausgleichsraums, wenn die Kupplung E nicht geschaltet ist, da die Servo-Einrichtung 73 stets mit der Getriebe-Eingangsdrehzahl n_ein rotiert. Hierdurch wird der Schaltkomfort beim Wiederzuschalten der Kupplung E verbessert, insbesondere nach längerer Verweilzeit im nichtgeschalteten Zustand.

In der dreiundzwanzigsten Bauteil-Anordnungs-Variante gemäß Fig. 32 wird zusätzlich vorgeschlagen, die Kupplung A räumlich zwischen Vorschalt- und Haupt-Planetenradsatz 10, 20 anzuordnen, in radialer Richtung unterhalb des zylinderförmigen Abschnitts 76 des Ausgangselementes der Kupplung E. Dabei ist das Eingangselement der Kupplung A als Außenlamellenträger 40 ausgebildet, in Form eines in Richtung Motorwelle 1 offenen Zylinders, und mit dem Hohlrad 14 des Vorschalt-Planetenradsatzes 10 verbunden. Ein scheibenförmiger Abschnitt 45 dieses Eingangselementes der Kupplung A erstreckt sich auf der dem Vorschalt-Planetenradsatz 10 zugewandten Seite der Lamellen 41 der Kupplung A zentrisch in Richtung Antriebswelle 3 und ist auf dieser gelagert. Dieser Lagerabschnitt des Außenlamellenträgers 40 ist mit der Zwischenwelle 8 verbunden, die unmittelbar oberhalb der Antriebswelle 3 axial in Richtung Motorwelle 1 bis zur motorseitigen Außenwand des Getriebegehäuses 30 verläuft und dabei den Haupt-Planetenradsatz 20 zentral durchdringt. Dabei bildet die Zwischenwelle 8 die drehmomentführende Wirkverbindung zwischen dem Ausgangselement des Vorschalt-Planetenradsatzes 10 und dem Eingangselement der Kupplung B. Der scheibenförmige Innenlamellenträger 42 der Kupplung A erstreckt sich zentrisch in Richtung Antriebswelle 3 bis zur Zwischenwelle 8, ist auf der Zwischenwelle 8 gelagert und mit dem ersten Eingangselement - in diesem Beispiel also mit dem großen Hohlrad 22 - des Haupt-Planetenradsatzes 20 verbunden. Der axial kurze Lagerabschnitt koaxial oberhalb der Antriebswelle 3 zwischen Innenlamellenträger 42 und Sonnenrad 22 kann als kurze erste Sonnenwelle 6 interpretiert werden. Die Servo-Einrichtung 43 der Kupplung A ist innerhalb des zylinderförmigen Außenlamellenträgers 40 angeordnet, axial zwischen dem scheibenförmigen Abschnitt 45 und dem Innenlamellenträger 42, und betätigt die Lamellen 41 in Richtung Motorwelle 1.

Wie in Fig. 32 dargestellt, ist die Kupplung B unmittelbar an der Seite des Getriebegehäuses 30 angeordnet, die der Motorwelle 1 zugewandt ist. Hierbei ist das Eingangselement der Kupplung B als Außenlamellenträger 60 ausgebildet, als in Richtung Haupt-Planetenradsatz 20 offener Zylinder. Ein scheibenförmiger Abschnitt 65 dieses Eingangselementes der Kupplung B ist mit der Zwischenwelle 8 verbunden und erstreckt sich parallel zur motornahen Außenwand des Getriebegehäuses 30 bis in den Bereich der Lamellen 61 der Kupplung B. Im dargestellten Beispiel ist der Außenlamellenträger 60 im Bereich der Verbindung zur Zwischenwelle 8 an der motornahen Außenwand des Getriebegehäuses 30 gelagert. Es kann aber auch vorgesehen sein, daß der Außenlamellenträger 60 nur oder auch zusätzlich über die Zwischenwelle 8 auf der Antriebswelle 3 gelagert ist. Die Servo-Einrichtung 63 der Kupplung B ist innerhalb des zylinderförmigen Außenlamellenträgers 60 angeordnet, grenzt axial unmittelbar an den scheibenförmigen Abschnitt 65 auf dessen der Motorwelle 1 gegenüberliegenden bzw. dem Haupt-Planetenradsatz 20 zugewandten Seite an und betätigt die Lamellen 61 der Kupplung B in Richtung Haupt-Planetenradsatz 20. In vorteilhafter Weise rotieren also die Servo-Einrichtungen 43, 63 beider Kupplungen A, B stets mit der Ausgangsdrehzahl n_vs des Vorschalt-Planetenradsatzes 10.

Die Lamellen 101 der Bremse C schließen sich axial in Richtung Haupt-Planetenradsatz 20 an die Lamellen 61 der Kupplung B an. Das Ausgangselement der Kupplung B ist als Innenlamellenträger 62 ausgebildet, mit einem kurzen zumindest weitgehend zylinderförmigen Abschnitt 66 und einem scheibenförmigen Abschnitt 67. Der zylinderförmige Abschnitt 66 erstreckt sich axial in Richtung Haupt-Planetenradsatz 20 bis in einen Bereich radial unterhalb der Lamellen 101 der Bremse C und ist dort mit dem Innenlamellenträger 102 der Bremse C verbunden. An den zylinderförmigen Abschnitt 66 schließt sich der scheibenförmige Abschnitt 67 an und erstreckt sich zentrisch in Richtung Antriebswelle 3 bis zur zweiten Sonnenwelle 7, die koaxial unmittelbar oberhalb der Zwischenwelle 8 verläuft. Diese zweite Sonnenwelle 7 ist einerseits mit dem scheibenförmigen Abschnitt 67 des Ausgangselementes der Kupplung B und andererseits mit dem zweiten Eingangselement - in diesem Beispiel also mit dem kleinen Sonnenrad 21 - des Haupt-Planetenradsatzes 20 verbunden. Dabei durchdringt die zweite Sonnenwelle 7 Lagerplatte 35 und Stirnrad 9, welche sich in dieser Reihenfolge axial in Richtung Haupt-Planetenradsatz 20 an den scheibenförmigen Abschnitt 67 des Ausgangselementes der Kupplung B anschließen, zentral. Das Stirnrad 9 ist dabei an der Lagerplatte'35 gelagert. Der Haupt-Planetenradsatz 20 grenzt unmittelbar an die motorabgewandte Seite des Stirnrades 9 an. Somit trennt die Lagerplatte 35 die Schaltelemente-Anordnung aus Kupplung B und Bremse C räumlich von dem Stirnrad 9 und dem benachbarten Haupt-Planetenradsatz 20.

In der vierundzwanzigsten Bauteil-Anordnungs-Variante gemäß Fig. 33 wird gegenüber der zuvor anhand Fig. 32 beschriebenen dreiundzwanzigsten Bauteil-Anordnungs-Variante vorgeschlagen, die Kupplung A nicht axial zwischen Haupt-und Vorschalt-Planetenradsatz 20 anzuordnen, sondern unmittelbar an der Seite des Getriebegehäuses 30, die der Motorwelle 1 zugewandt ist, in Richtung Motorwelle 1 gesehen also vor der Kupplung B. Zwischen der motornahen Außenwand des Getriebegehäuses 30 und der Lagerplatte 35 sind also nunmehr zwei Schaltelemente angeordnet, nämlich die Kupplungen A und B. Infolge dessen durchdringen nunmehr vier Wellen die Lagerplatte 36 zentral, nämlich Antriebswelle 3, Zwischenwelle 8, erste Sonnenwelle 6 und zweite Sonnenwelle 7, die in dieser Reihenfolge koaxial übereinander verlaufen. Da die Kupplung A auf der Seite der Kupplung B angeordnet ist, die dem Haupt-Planetenradsatz 20 abgewandt ist, verläuft also nunmehr die erste Sonnenwelle 6, welche das Ausgangselement der Kupplung A mit dem ersten Eingangselement des Haupt-Planetenradsatzes 20 verbindet, koaxial zwischen der Zwischenwelle 8, welche das Ausgangselement des Vorschalt-Planetenradsatzes 10 mit beiden Eingangselementen der Kupplungen A und B verbindet, und der zweiten Sonnenwelle 7, welche das Ausgangselement der Kupplung B mit dem zweiten Eingangselement des Haupt-Planetenradsatzes 20 verbindet.

Das Eingangselement der Kupplung A ist als Außenlamellenträger 40 ausgebildet, nunmehr als in motorabgewandter Richtung offener Zylinder. Ein scheibenförmiger Abschnitt 45 dieses Eingangselementes der Kupplung A ist mit der Zwischenwelle 8 verbunden und erstreckt sich parallel zur motornahen Außenwand des Getriebegehäuses 30. Auf einem Durchmesser, der annähernd so groß ist wie der Außendurchmesser der Lamellen 41 der Kupplung A, schließt sich ein zylindrischer Abschnitt 44 dieses Eingangselementes der Kupplung A an den scheibenförmigen Abschnitt 45 an und erstreckt sich in axialer Richtung bis in den Bereich der Lamellen 41 der Kupplung A. Der Außenlamellenträger 60 der neben der Kupplung A angeordneten Kupplung B ist mit dem Außenlamellenträger 40 der Kupplung A verbunden. Dabei kann vorgesehen sein, daß beide Außenlamellenträger 40, 60 einstückig ausgeführt sind und / oder für beide Kupplungen A, B gleiche Lamellen verwendet werden. Die Servo-Einrichtung 43 der Kupplung A ist innerhalb des zylinderförmigen Außenlamellenträgers 40 angeordnet und betätigt die Lamellen 41 in Richtung Haupt-Planetenradsatz 20. Der Innenlamellenträger 42 der Kupplung A als deren Ausgangselement ist beispielhaft weitgehend scheibenförmig ausgeführt und zentrumsnah mit der ersten Sonnenwelle 6 verbunden. Die Servo-Einrichtung 63 der Kupplung B ist in radialer Richtung unterhalb des Außenlamellenträgers 60 der Kupplung B angeordnet, grenzt axial an den scheibenförmigen Innenlamellenträger 42 der Kupplung A - auf dessen dem Haupt-Planetenradsatz 20 zugewandten Seite - an und betätigt die Lamellen 61 der Kupplung B in Richtung Haupt-Planetenradsatz 20.

Produktionstechnisch vorteilhaft ermöglicht die in Fig. 33 vorgeschlagene Anordnung einerseits den Einsatz von vielen Gleichteilen für die hinsichtlich Drehzahl und Drehmoment gleich belasteten Kupplungen A und B, andererseits auch eine sehr einfache Montage als Baugruppe bei Vormontage und Einbau in das Getriebegehäuse 30. Funktionstechnisch vorteilhaft rotiert die Servo-Einrichtung 43 der Kupplung A stets mit der Ausgangsdrehzahl n_vs des Vorschalt-Planetenradsatzes 10.

In einer anderen Ausgestaltung zu Fig. 33 kann vorgesehen sein, daß - bei unveränderter Anordnung - das Eingangselement der Kupplung B nicht als Außenlamellenträger, sondern als Innenlamellenträger ausgebildet ist, wobei die Servo-Einrichtung der Kupplung B die Lamellen der Kupplung B dann in Richtung Motorwelle betätigt, beispielsweise ähnlich wie Fig. 3. Funktionstechnisch vorteilhaft rotieren hierdurch die Servo-Einrichtungen beider Kupplungen A und B stets mit der Ausgangsdrehzahl n_vs des Vorschalt-Planetenradsatzes.

Wie zuvor schon am Beispiel der fünften Bauteil-Anordnungs-Variante gemäß Fig. 10 beschrieben, kann prinzipiell bei allen Bauteil-Anordnungs-Varianten, bei denen die Antriebswelle 3 das Getriebe vollständig axial durchdringt, der Antriebsmotor des Getriebes in einfacher Weise auf beiden Stirnseiten des Getriebegehäuses angeordnet sein. Auch in den anhand Fig. 11 bis Fig. 17 und Fig. 23 bis Fig. 31 vorgeschlagenen beispielhaften Bauteil-Anordnungs-Varianten durchdringt die Antriebswelle 3 das Getriebe jeweils vollständig axial. Beispielsweise kann also als jeweils andere Ausgestaltung der einzelnen in Fig. 11 bis Fig. 17 vorgeschlagenen Bauteil-Anordnungs-Varianten vorgesehen sein, daß die Motorwelle 1 nicht benachbart zum sechsten Schaltelement F angeordnet ist, sondern auf der Seite des Mehrstufengetriebes, an der Haupt-Planetenradsatz 20 und Kupplung E angeordnet sind, also auf der dem Vorschalt-Planetenradsatz 20 abgewandten Seite des Haupt-Planetenradsatzes 20, auf der dem Haupt-Planetenradsatz 20 abgewandten Seite der Kupplung E. Die akustischen Vorteile einer solchen Anordnung wurden zuvor bereits beschrieben. Selbstverständlich kann die Antriebswelle 3 dabei stets auch mehrstückig ausgeführt sein.

Wird bei den zuvor anhand Fig. 18 bis Fig. 22 beschriebenen neunten bis dreizehnten Bauteile-Anordnungs-Varianten jeweils die innerste Welle des Mehrstufengetriebes als Hohlwelle ausgeführt, so kann auch bei diesen Anordnungen die Motorwelle 1 - also der Antrieb des Getriebes - jeweils auf der zur Darstellung gegenüberliegenden Seite des Getriebes angeordnet sein.

Alle zuvor beschriebenen Bauteile-Anordnungs-Varianten beziehen sich auf die erste erfindungsgemäße Vorschalt-Planetenradsatz-Variante, bei der das Sonnenrad des Vorschalt-Planetenradsatzes schaltbar ist.

In Fig. 34 ist ein beispielhaftes Getriebeschema der zweiten Vorschalt-Planetenradsatz-Variante dargestellt, mit einem Vorschalt-Planetenradsatz, dessen gekoppelte Stege schaltbar sind. Bis auf die Anbindung der Bauelemente des Vorschalt-Planetenradsatzes 10 entspricht die Bauteil-Anordnung dieses Ausführungsbeispiels im wesentlichen der des zuvor in Fig. 3 beschriebenen Mehrstufengetriebes.

Erfindungsgemäß ist der Vorschalt-Planetenradsatz 10 als schaltbares Plus-Getriebe ausgebildet mit inneren und äußeren Planetenrädern 12 und 13, deren Stege 15, 16 fest miteinander verbunden sind, wobei das Sonnenrad 11 des Vorschalt-Planetenradsatzes 10 als dessen Eingangselement mit der Antriebswelle 3 verbunden ist, und wobei das Hohlrad 14 des Vorschalt-Planetenradsatzes 10 als dessen Ausgangselement mit jeweils dem Eingangselement des ersten und des zweiten Schaltelementes A, B verbunden ist, und wobei die gekoppelten Stege 15, 16 des Vorschalt-Planetenradsatzes 10 über das sechste als Bremse ausgebildete Schaltelement F an dem Getriebegehäuse 30 festsetzbar sind. Wie bei den vorigen Ausführungsbeispielen ist also die Ausgangsdrehzahl n_vs über die beiden als Kupplung ausgebildeten Schaltelemente A, B auf zwei nicht miteinander verbundene Eingangselemente (im dargestellten Beispiel das kleine und das große Sonnenrad 21, 22) des Haupt-Planetenradsatzes 20 übertragbar, die räumliche Anordnung der einzelnen daran beteiligten Bauelemente entspricht der Anordnung, die bereits in Fig. 3 erläutert wurde.

Die Bremse F ist räumlich zwischen der motorseitigen Getriebegehäusewand 31 und dem Vorschalt-Planetenradsatz 10 angeordnet. Getriebegehäusewand 31 und Bremse F sind also auf der Seite des Mehrstufengetriebes angeordnet, die der Motorwelle 1 bzw. dem Torsionsdämpfer 2 zugewandt ist. Der Innenlamellenträger 82 der Bremse F ist auf dem sich in Richtung Vorschalt-Planetenradsatz 10 erstreckenden Vorsprung 33 der Getriebegehäusewand 31 bzw. auf einer mit der Getriebegehäusewand 31 fest verbundenen Nabe gelagert. Erfindungsgemäß ist der Innenlamellenträger 82 der Bremse F nunmehr mit den gekoppelten Stegen 15, 16 des Vorschalt-Planetenradsatzes 10 verbunden. Die Lagerung des Außenlamellenträgers 40 der Kupplung A als deren Eingangselement ist - wie in Fig. 3 - in radialer Richtung oberhalb der Lagerung des Innenlamellenträgers 82 der Bremse F auf dem Vorsprung 33 bzw. der Nabe angeordnet und in axialer Richtung zwischen der Getriebegehäusewand 31 und dem Vorschalt-Planetenradsatz 10. Auf eine detaillierte Beschreibung der Ausgestaltung und Anordnung der anderen Bauelemente des Mehrstufengetriebes gemäß Fig. 34 kann an dieser Stelle verzichtet werden.

Die Vorteile aus der derartigen Anordnung der einzelnen Bauelemente relativ zueinander wurden bereits in Zusammenhang mit der Beschreibung der Fig. 3 erläutert.

Wie bei den Mehrstufengetrieben mit der ersten Vorschalt-Planetenradsatz-Variante, ist auch bei dem Mehrstufengetriebe gemäß Fig. 34 die Ausführung des Haupt-Planetenradsatzes und die Bauteil-Anordnungen als beispielhaft anzusehen. Selbstverständlich können auch andere Planetenradsatz-Kombinationen, bei denen die Ausgangsdrehzahl n_vs des Vorschalt-Planetenradsatzes über zwei Schaltelemente auf zwei freie Eingangselemente des Haupt-Planetenradsatzes und die Getriebe-Eingangsdrehzahl n_ein auf ein drittes freies Eingangselement des Haupt-Planetenradsatzes übertragbar ist, als Haupt-Planetenradsatzes mit dem Radsatz-Schema gemäß Fig. 34 kombiniert werden. Ebenso können auch sämtliche in Fig. 3 bis Fig. 33 vorgeschlagenen Bauteilanordnungen der Schaltelemente mit dem Radsatz-Konzept gemäß Fig. 34 kombiniert werden. Selbstverständlich können auch die in Fig. 9 bis Fig. 33 vorgeschlagenen Anordnungsvarianten eines Stirntriebs mit dem zweiten erfindungsgemäßen Radsatz-Konzept gemäß Fig. 34 kombiniert werden. Anstelle der koaxialen Anordnung von Antrieb, Vorschalt-Planetenradsatz und Haupt-Planetenradsatz kann auch eine Vorgelege-Bauweise oder eine winklige oder auch achsparallele Anbindung zwischen Vorschalt- und Haupt-Planetenradsgtz vorgesehen sein.

Wie bei den Mehrstufengetrieben mit der ersten Vorschalt-Planetenradsatz-Variante, wird auch bei dem erfindungsgemäßen Mehrstufengetriebe gemäß Fig. 34 die Eingangsdrehzahl n_ein der Antriebswelle 3 durch selektives Schließen der Schaltelemente A bis F derart auf die mit Abtriebsdrehzahl n_ab rotierende Abtriebswelle 4 übertragen, daß mindestens sechs Vorwärtsgänge ohne Gruppenschaltung schaltbar sind. In Fig. 35 ist eine entsprechende Schaltlogik des Mehrstufengetriebes gemäß Fig. 34 mit insgesamt sieben Vorwärtsgängen dargestellt, sowie die dazu gehörigen Übersetzungen, Gang-Stufungen und Gesamtspreizung. Ebenso dargestellt sind die Stand-Übersetzungen der einzelnen Radsätze RS1, RS2 und RS3, wobei mit RS1 der einzelne Planetenradsatz des Vorschalt-Planetenradsatzes 10 und mit RS2, RS3 die einzelnen Planetenradsätze des mehrgliedrigen Haupt-Planetenradsatzes 20 bezeichnet sind. Gegenüber den zuvor in Fig. 1 bis Fig. 33 beschriebenen Mehrstufengetrieben mit einem über das Sonnenrad schaltbaren Plus-Vorschalt-Planetenradsatz ermöglicht die vorgeschlagene zweite Vorschalt-Planetenradsatz-Variante mit schaltbaren gekoppelten Stegen eine nochmals deutlich vergrößerte Spreizung, bei unverändert günstiger Gangabstufung aller sieben Vorwärtsgänge. Durch einfaches Weglassen des Direktgangs ist auch ein Sechs-Gang-Getriebe darstellbar, ähnlich wie bei dem Mehrstufengetriebe mit der ersten erfindungsgemäßen Vorschalt-Planetenradsatz-Variante.

### Bezugszeichen

- A, B, C, D, E, F: Schaltelemente

- n_ein: Getriebe-Eingangsdrehzahl
- n_vs: Ausgangsdrehzahl des Vorschalt-Planetenradsatzes
- n_ab: Getriebe-Abtriebsdrehzahl

- 1: Motorwelle
- 2: Torsionsdämpfer
- 3: Antriebswelle
- 4: Abtriebswelle
- 5: dritte Welle
- 6: erste Sonnenwelle
- 7: zweite Sonnenwelle
- 8: Zwischenwelle
- 9: Stirnrad

- 10: Vorschalt-Planetenradsatz RS1
- 11: Sonnenrad des Vorschalt-Planetenradsatzes
- 12: inneres Planetenrad des Vorschalt-Planetenradsatzes
- 13: äußeres Planetenrad des Vorschalt-Planetenradsatzes
- 14: Hohlrad des Vorschalt-Planetenradsatzes
- 15: Steg der inneren Planetenräder des Vorschalt-Planetenradsatzes
- 16: Steg der äußeren Planetenräder des Vorschalt-Planetenradsatzes
- 17: scheibenförmiges Abtriebselement des Hohlrades des Vorschalt-Planetenradsatzes
- 18: zylinderförmiges Abtriebselement des Hohlrades des Vorschalt-Planetenradsatzes

- 20: Haupt-Planetenradsatz, bestehend aus RS2 und RS3
- 21: kleines Sonnenrad des Haupt-Planetenradsatzes
- 22: großes Sonnenrad des Haupt-Planetenradsatzes
- 23: erstes Planetenrad des Haupt-Planetenradsatzes
- 24: zweites Planetenrad des Haupt-Planetenradsatzes
- 25: Steg des ersten Planetenrades des Haupt-Planetenradsatzes
- 26: Steg des zweiten Planetenrades des Haupt-Planetenradsatzes
- 27: Hohlrad des Haupt-Planetenradsatzes
- 28: Ausgangswelle des Haupt-Planetenradsatzes

- 30: Getriebegehäuse
- 31: Getriebegehäusewand
- 32: Zwischenplatte
- 33: zylindrischer Vorsprung der Getriebegehäusewand bzw. der Zwischenplatte
- 34: Nabe
- 35: Lagerplatte
- 36: Deckel
- 37: zweite Lagerplatte
- 38: dritte Lagerplatte
- 39: Zylinder des Getriebegehäuses

- 40: Außenlamellenträger der Kupplung A
- 41: Lamellen der Kupplung A
- 42: Innenlamellenträger der Kupplung A
- 43: Servo-Einrichtung der Kupplung A
- 44: zylinderförmiger Abschnitt des Eingangselementes der Kupplung A
- 45: scheibenförmiger Abschnitt des Eingangselementes der Kupplung A
- 46: zylinderförmiger Abschnitt des Ausgangselementes der Kupplung A
- 47: scheibenförmiger Abschnitt des Ausgangselementes der Kupplung A
- 48: Kolben der Kupplung A
- 49: Rückstellfeder des Kolbens der Kupplung A
- 50: Stauscheibe der Kupplung A
- 51: Kolbenraum der Kupplung A
- 52: Druckausgleichsraum der Kupplung A

- 60: Außenlamellenträger der Kupplung B
- 61: Lamellen der Kupplung B
- 62: Innenlamellenträger der Kupplung B
- 63: Servo-Einrichtung der Kupplung B
- 64: zylinderförmiger Abschnitt des Eingangselementes der Kupplung B
- 65: scheibenförmiger Abschnitt des Eingangselementes der Kupplung B
- 66: zylinderförmiger Abschnitt des Ausgangselementes der Kupplung B
- 67: scheibenförmiger Abschnitt des Ausgangselementes der Kupplung B

- 70: Außenlamellenträger der Kupplung E
- 71: Lamellen der Kupplung E
- 72: Innenlamellenträger der Kupplung E
- 73: Servo-Einrichtung der Kupplung E
- 74: zylinderförmiger Abschnitt des Eingangselementes der Kupplung E
- 75: scheibenförmiger Abschnitt des Eingangselementes der Kupplung E
- 76: zylinderförmiger Abschnitt des Ausgangselementes der Kupplung E
- 77: scheibenförmiger Abschnitt des Ausgangselementes der Kupplung E

- 80: Außenlamellenträger der Bremse F
- 81: Lamellen der Bremse F
- 82: Innenlamellenträger der Bremse F
- 83: Servo-Einrichtung der Bremse F
- 84: scheibenförmiger Abschnitt des Innenlamellenträgers der Bremse F
- 85: Sonnenwelle des Vorschalt-Planetenradsatzes
- 86: Druckmittelkanal der Bremse F
- 87: Kolben der Bremse F
- 88: Rückstellfeder des Kolbens der Bremse F
- 89: Abstützbund der Nabe für Rückstellfeder der Bremse F
- 90: Kolbenraum der Bremse F

- 100: Außenlamellenträger der Bremse C
- 101: Lamellen der Bremse C
- 102: Innenlamellenträger der Bremse C
- 103: zylinderförmiger Abschnitt des Innenlamellenträgers der Bremse C
- 104: scheibenförmiger Abschnitt des Innenlamellenträgers der Bremse C
- 105: Servo-Einrichtung der Bremse C

- 111: Lamellen der Bremse D
- 112: Innenlamellenträger der Bremse D
- 113: zylinderförmiger Abschnitt des Innenlamellenträgers der Bremse D
- 114: scheibenförmiger Abschnitt des Innenlamellenträgers der Bremse D

## Patentansprüche

1. Mehrstufengetriebe, mit einer Antriebswelle (3), die mit einem Vorschalt-Planetenradsatz (10) verbunden ist, mit einer Abtriebswelle (4), die mit einem Haupt-Planeten-radsatz (20) verbunden ist, mit mehreren Schaltelementen (A bis F), durch deren selektives Schließen mindestens sechs Vorwärtsgänge schaltbar sind und eine Getriebe-Eingangsdrehzahl (n_ein) der Antriebswelle (3) derart auf die Abtriebswelle (4) übertragbar ist, daß zum Umschalten von einem Gang in den nächstfolgend höheren oder-nächstfolgend niedrigeren Gang von den gerade betätigten Schaltelementen jeweils nur ein Schaltelement geöffnet und ein weiteres Schaltelement geschlossen wird, wobei der Haupt-Planetenradsatz (20) drei nicht gekoppelte Eingangselemente aufweist, ein Ausgangselement des Vorschalt-Planetenradsatzes (10) über ein erstes Schaltelement (A) mit dem ersten Eingangselement des Haupt-Planetenradsatzes (20) und über ein zweites Schaltelement (B) mit dem zweiten Eingangselement des Haupt-Planetenradsatzes (20) verbindbar ist, die Antriebswelle (3) über ein fünftes Schaltelement (E) mit dem dritten Eingangselement des Haupt-Planetenradsatzes (20) verbindbar ist und ein Element des Vorschalt-Planetenradsatzes (10) über ein sechstes Schaltelement (F) festsetzbar ist, wobei das sechste Schaltelement (F) auf der dem Haupt-Planetenradsatz (20) abgewandten Seite des Vorschalt-Planetenradsatzes (10) angeordnet ist, **dadurch gekennzeichnet, daß** der Vorschalt-Planetenradsatz (10) als Plus-Getriebe ausgebildet ist mit inneren und äußeren Planetenrädern (12, 13), deren Stege (15, 16) miteinander verbunden sind.

2. Mehrstufengetriebe nach Anspruch 1, **dadurch gekennzeichnet, daß** die gekoppelten Stege (15, 16) des Vorschalt-Planetenradsatzes (10) mit der Antriebswelle (3) verbunden sind, daß ein Hohlrad (14) des Vorschalt-Planetenradsatzes (10) mit dem ersten und zweiten Eingangselement des Haupt-Planetenradsatzes (20) verbindbar ist, und daß ein Sonnenrad (11) des Vorschalt-Planetenradsatzes (10) über das sechste Schaltelement (F) festsetzbar ist.

3. Mehrstufengetriebe nach Anspruch 1, **dadurch gekennzeichnet, daß** ein Sonnenrad (11) des Vorschalt-Planetenradsatzes (10) mit der Antriebswelle (3) verbunden ist, daß ein Hohlrad (14) des Vorschalt-Planetenradsatzes (10) mit dem ersten und zweiten Eingangselement des Haupt-Planetenradsatzes (20) verbindbar ist, und daß die gekoppelten Stege (15, 16) des Vorschalt-Planetenradsatzes (10) über das sechste Schaltelement (F) festsetzbar sind.

4. Mehrstufengetriebe nach Anspruch 1, 2 oder 3, **dadurch gekennzeichnet, daß** das sechste Schaltelement (F) in axialer Richtung angrenzend an eine Getriebegehäusewand (31) angeordnet ist, auf einem Vorsprung (33) der Getriebegehäusewand (31) oder auf einer fest mit der Getriebegehäusewand (31) verbunden Nabe (34), wobei die Getriebegehäusewand (31) als Teil eines Getriebegehäuses (30) oder als eine mit dem Getriebegehäuse (30) fest verbundenen Zwischenplatte (32) ausgebildet ist.

5. Mehrstufengetriebe nach Anspruch 4, **dadurch gekennzeichnet, daß** mindestens ein Druckmittelkanal (86) für eine Druckmittelzufuhr zu einer Servo-Einrichtung (83) des sechsten Schaltelementes (F) in dem Vorsprung (33) der Getriebegehäusewand (31) bzw. in der Nabe (34) und/oder in der Getriebegehäusewand (31) bzw. in der Zwischenplatte (32) und/oder in dem Getriebegehäuse (30) in räumlicher Nähe zur Servo-Einrichtung (83) des sechsten Schaltelementes (F) angeordnet ist.

6. Mehrstufengetriebe nach Anspruch 4 oder 5, **dadurch gekennzeichnet, daß** die Getriebegehäusewand (31) an einer Seite des Getriebegehäuses (30) angeordnet ist, die einer Motorwelle (1) eines Antriebsmotors des Mehrstufengetriebes zugewandt ist.

7. Mehrstufengetriebe nach Anspruch 4 oder 5, **dadurch gekennzeichnet, daß** die Getriebegehäusewand (31) an einer Seite des Getriebegehäuses (30) angeordnet ist, die einer Motorwelle (1) eines Antriebsmotors des Mehrstufengetriebes gegenüber liegt.

8. Mehrstufengetriebe nach einem der Ansprüche 4 bis 7, **dadurch gekennzeichnet, daß** ein scheibenförmiger Abschnitt eines Innenlamellenträgers (82) des sechsten Schaltelementes (F) unmittelbar benachbart zur Getriebegehäusewand (31) bzw. Zwischenplatte (32) angeordnet ist.

9. Mehrstufengetriebe nach einem der Ansprüche 4 bis 8, **dadurch gekennzeichnet, daß** die Servo-Einrichtung (83) zur Betätigung des sechsten Schaltelementes (F) unmittelbar benachbart zur Getriebegehäusewand (31) bzw. Zwischenplatte (32) angeordnet oder in die Getriebegehäusewand (31) bzw. Zwischenplatte (32) integriert ist.

10. Mehrstufengetriebe nach einem der Ansprüche 4 bis 9, **dadurch gekennzeichnet, daß** die Servo-Einrichtung (83) des sechsten Schaltelementes (F) in axialer Richtung zwischen Getriebegehäusewand (31) bzw. Zwischenplatte (32) und Vorschalt-Planetenradsatz (10) angeordnet ist.

11. Mehrstufengetriebe nach einem der Ansprüche 4 bis 10, **dadurch gekennzeichnet, daß** die Servo-Einrichtung (83) des sechsten Schaltelementes (F) Lamellen (81) des sechsten Schaltelementes (F) in zur Getriebegehäusewand (31) bzw. Zwischenplatte (32) entgegengesetzter Richtung betätigt.

12. Mehrstufengetriebe nach einem der Ansprüche 4 bis 10, **dadurch gekennzeichnet, daß** die Servo-Einrichtung (83) des sechsten Schaltelementes (F) Lamellen (81) des sechsten Schaltelementes (F) in Richtung Getriebegehäusewand (31) bzw. Zwischenplatte (32) betätigt.

13. Mehrstufengetriebe nach einem der Ansprüche 4 bis 12, **dadurch gekennzeichnet, daß** die Servo-Einrichtung (83) des sechsten Schaltelementes (F) in axialer Richtung zwischen der Getriebegehäusewand (31) bzw. Zwischenplatte (32) und einer Servo-Einrichtung (43) zur Betätigung des ersten Schaltelementes (A) angeordnet ist, wobei insbesondere ein scheibenförmiger Abschnitt eines Innenlamellenträgers (82) des sechsten Schaltelementes (F) unmittelbar an die Getriebegehäusewand (31) bzw. Zwischenplatte (32) angrenzt.

14. Mehrstufengetriebe nach Anspruch 13, **dadurch gekennzeichnet, daß** die Servo-Einrichtung (43) und/oder Lamellen (41) des ersten Schaltelementes (A) zumindest teilweise auf der dem Haupt-Planetenradsatz (20) abgewandten Seite des Vorschalt-Planetenradsatzes (10) angeordnet ist.

15. Mehrstufengetriebe nach einem der Ansprüche 4 bis 14, **dadurch gekennzeichnet, daß** die Servo-Einrichtung (83) des sechsten Schaltelementes (F) in axialer Richtung zwischen der Getriebegehäusewand (31) bzw. Zwischenplatte (32) und einer Servo-Einrichtung (63) zur Betätigung des zweiten Schaltelementes (B) angeordnet ist.

16. Mehrstufengetriebe nach Anspruch 15, **dadurch gekennzeichnet, daß** eine Servo-Einrichtung (63) zur Betätigung des zweiten Schaltelementes (B) auf der dem Haupt-Planetenradsatz (20) abgewandten Seite des Vorschalt-Planetenradsatzes (10) angeordnet ist.

17. Mehrstufengetriebe nach einem der Ansprüche 1 bis 16, **dadurch gekennzeichnet, daß** Lamellen (81) des sechsten Schaltelementes (F) auf einem größeren Durchmesser angeordnet sind als das Hohlrad (14) des Vorschalt-Planetenradsatzes (10).

18. Mehrstufengetriebe nach einem der Ansprüche 1 bis 17, **dadurch gekennzeichnet, daß** das sechste Schaltelement (F) als Anfahr-Schaltelement des Mehrstufengetriebes ausgebildet ist.

19. Mehrstufengetriebe nach einem der Ansprüche 1 bis 18, **dadurch gekennzeichnet, daß** ein Ausgangselement des ersten Schaltelementes (A) das fünfte Schaltelement (E) in axialer Richtung zumindest teilweise übergreift, insbesondere die Lamellen (71) des fünften Schaltelementes (E).

20. Mehrstufengetriebe nach einem der Ansprüche 1 bis 19, **dadurch gekennzeichnet, daß** die Latnellen (41) des ersten Schaltelementes (A) zumindest teilweise radial oberhalb des Vorschalt-Planetenradsatzes (10) und/oder zumindest teilweise radial oberhalb der Lamellen (71) des fünften Schaltelementes (E) angeordnet sind.

21. Mehrstufengetriebe nach einem der Ansprüche 1 bis 20, **dadurch gekennzeichnet, daß** das Ausgangselement des ersten Schaltelementes (A) einen Kupplungsraum des zweiten Schaltelement (B) zumindest teilweise durchdringt.

22. Mehrstufengetriebe nach Anspruch 19, 20 oder 21, **dadurch gekennzeichnet, daß** das erste Schaltelement (A) näher an dem sechsten Schaltelement (F) angeordnet ist als das erste Schaltelement (B), insbesondere daß die Lamellen (41) und/oder die Servo-Einrichtung (43) des ersten Schaltementes (A) näher an der Servo-Einrichtung (83) des sechsten Schaltelementes (F) angeordnet sind als die Lamellen (61) des zweiten Schaltelementes (B).

23. Mehrstufengetriebe nach einem der Ansprüche 19 bis 22, **dadurch gekennzeichnet, daß** auf der dem Haupt-Planetenradsatz (20) zugewandten Seite des ersten Schaltelementes (A) das zweite Schaltelement (B) axial neben dem ersten Schaltelement (A) angeordnet ist, insbesondere daß auf der dem Haupt-Planetenradsatz (20) zugewandten Seite der Lamellen (41) des ersten Schaltelementes (A) die Lamellen (61) des zweiten Schaltelementes (B) axial neben den Lamellen (41) des ersten Schaltelementes (A) angeordnet sind.

24. Mehrstufengetriebe nach einem der Ansprüche 19 bis 23, **dadurch gekennzeichnet, daß** die Lamellen (41) und/oder die Servo-Einrichtung (43) des ersten Schaltelementes (A) zumindest teilweise radial unterhalb der Lamellen (81) des sechsten Schaltelementes (F) angeordnet sind.

25. Mehrstufengetriebe nach Anspruch 24, **dadurch gekennzeichnet, daß** die Servo-Einrichtung (43) des ersten Schaltelementes (A) axial neben dem Vorschalt-Planetenradsatz (10) angeordnet ist.

26. Mehrstufengetriebe nach einem der Ansprüche 19 bis 25, **dadurch gekennzeichnet, daß** das fünfte Schaltelement (E) zwischen Vorschalt- und Haupt-Planetenradsatz (10, 20) angeordnet ist, in axialer Richtung angrenzend an den Vorschalt-Planetenradsatz (10), wobei insbesondere die Lamellen (71) des fünften Schaltelementes (E) zumindest teilweise radial unterhalb der Lamellen (61) des zweiten Schaltelementes (B) angeordnet sind.

27. Mehrstufengetriebe nach einem der Ansprüche 1 bis 20, **dadurch gekennzeichnet, daß** ein Ausgangselement des zweiten Schaltelementes (B) das erste Schaltelement (A) in axialer Richtung zumindest teilweise radial übergreift, insbesondere die Lamellen (41) des ersten Schaltelementes (A).

28. Mehrstufengetriebe nach Anspruch 27, **dadurch gekennzeichnet, daß** das zweite Schaltelement (B) näher an dem sechsten Schaltelement (F) angeordnet ist als das erste Schaltelement (A), insbesondere daß die Lamellen (61) und/oder die Servo-Einrichtung (63) des zweiten Schaltementes (B) näher an der Servo-Einrichtung (83) des sechsten Schaltelementes (F) angeordnet sind als die Lamellen (41) des ersten Schaltelementes (A).

29. Mehrstufengetriebe nach Anspruch 27 oder 28, **dadurch gekennzeichnet, daß** auf der dem Haupt-Planetenradsatz (20) zugewandten Seite des zweiten Schaltelementes (B) das erste Schaltelement (A) axial neben dem zweiten Schaltelement (B) angeordnet ist, insbesondere daß auf der dem Haupt-Planetenradsatz (20) zugewandten Seite der Lamellen (61) des zweiten Schaltelementes (B) die Lamellen (41) des ersten Schaltelementes (A) axial neben den Lamellen (61) des zweiten Schaltelementes (B) angeordnet sind.

30. Mehrstufengetriebe nach Anspruch 27, 28 oder 29,
**dadurch gekennzeichnet, daß** die Lamellen (61) des zweiten Schaltelementes (B) zumindest teilweise radial oberhalb des Vorschalt-Planetenradsatzes (10) angeordnet sind.

31. Mehrstufengetriebe nach einem der Ansprüche 27 bis 30, **dadurch gekennzeichnet, daß** die Lamellen (61) und/öder die Servo-Einrichtung (63) des zweiten Schaltelementes (B) zumindest teilweise radial unterhalb der Lamellen (81) des sechsten Schaltelementes (F) angeordnet sind.

32. Mehrstufengetriebe nach Anspruch 27, 28 oder 29,
**dadurch gekennzeichnet, daß** die Lamellen (61) des zweiten Schaltelementes (B) zumindest teilweise radial oberhalb der Lamellen (71) des fünften Schaltelementes (E) angeordnet sind.

33. Mehrstufengetriebe nach Anspruch 31 oder 32, **dadurch gekennzeichnet, daß** die Servo-Einrichtung (63) des zweiten Schaltelementes (B) axial neben dem Vorschalt-Planetenradsatz (10) angeordnet ist.

34. Mehrstufengetriebe nach einem der Ansprüche 27 bis 33, **dadurch gekennzeichnet, daß** das fünfte Schaltelement (E) zwischen Vorschalt- und Haupt-Planetenradsatz (10, 20) angeordnet ist, in axialer Richtung angrenzend an den Vorschalt-Planetenradsatz (10), wobei insbesondere die Lamellen (71) des fünften Schaltelementes (E) zumindest teilweise radial unterhalb der Lamellen (41) des ersten Schaltelementes (A) angeordnet sind.

35. Mehrstufengetriebe nach einem der Ansprüche 1 bis 18, **dadurch gekennzeichnet, daß** ein Eingangselement des fünften Schaltelementes (E) das erste Schaltelement (A) in axialer Richtung zumindest teilweise radial übergreift, insbesondere die Lamellen (41) des ersten Schaltelementes (A).

36. Mehrstufengetriebe nach einem der Ansprüche 1 bis 18 oder 35, **dadurch gekennzeichnet, daß** das Eingangselement des fünften Schaltelementes (E) das zweite Schaltelement (B) in axialer Richtung zumindest teilweise radial übergreift, insbesondere die Lamellen (61) des zweiten Schaltelementes (B).

37. Mehrstufengetriebe nach Anspruch 35 oder 36, **dadurch gekennzeichnet, daß** das fünfte Schaltelement (E) axial zwischen Vorschalt- und Haupt-Planetenradsatz (10, 20) angeordnet ist, näher am Haupt-Planetenradsatz (20) als das erste und zweite Schaltelement (A, B).

38. Mehrstufengetriebe nach einem der Ansprüche 35 bis 37, **dadurch gekennzeichnet, daß** das fünfte Schaltelement (E) in axialer Richtung zwischen Vorschalt-Planetenradsatz (10) und Haupt-Planetenradsatz (20) angeordnet ist, angrenzend an den Vorschalt-Planetenradsatz (10).

39. Mehrstufengetriebe nach einem der Ansprüche 1 bis 18, **dadurch gekennzeichnet, daß** ein Ausgangselement des fünften Schaltelementes (E) das erste Schaltelement (A) in axialer Richtung zumindest teilweise radial übergreift, insbesondere die Lamellen (41) des ersten Schaltelementes (A).

40. Mehrstufengetriebe nach Anspruch 39, **dadurch gekennzeichnet, daß** das erste und das fünfte Schaltelement (A, E) auf der dem Vorschalt-Planetenradsatz (10) abgewandten Seite des Haupt-Planetenradsatzes (20) angeordnet sind, wobei das erste Schaltelement (A) - insbesondere dessen Lamellen (41) - axial zwischen dem fünften Schaltelement (E) und dem Haupt-Planetenradsatz (20) angeordnet ist.

41. Mehrstufengetriebe nach Anspruch 39, **dadurch gekennzeichnet, daß** das erste Schaltelement (A) zwischen Vorschalt- und Haupt-Planetenradsatz (10, 20) angeordnet ist, und daß das fünfte Schaltelement (E) auf der dem Haupt-Planetenradsatz (20) abgewandten Seite des ersten Schaltelementes (A) angeordnet ist.

42. Mehrstufengetriebe nach einem der Ansprüche 1 bis 41, **dadurch gekennzeichnet, daß** das fünfte Schaltelement (E) zumindest teilweise in radialer Richtung oberhalb des Vorschalt-Planetenradsatzes (10) angeordnet ist, insbesondere daß die Lamellen (71) des fünften Schaltelementes (E) zumindest teilweise oberhalb des Vorschalt-Planetenradsatzes (10) angeordnet sind.

43. Mehrstufengetriebe nach Anspruch 42, **dadurch gekennzeichnet, daß** eine Servo-Einrichtung (73) zur Betätigung des fünften Schaltelementes (E) auf der dem Haupt-Planetenradsatz (20) abgewandten Seite des Vorschalt-Planetenradsatzes (10) angeordnet ist, insbesondere angrenzend an den Vorschalt-Planetenradsatz (10).

44. Mehrstufengetriebe nach einem der Ansprüche 1 bis 33, **dadurch gekennzeichnet, daß** das erste Schaltelement (A) auf der dem Haupt-Planetenradsatz (20) abgewandten Seite des Vorschalt-Planetenradsatzes (10) angeordnet ist, und daß das fünfte Schaltelement (E) auf der dem Vorschalt-Planetenradsatz (10) abgewandten Seite des Haupt-Planetenradsatzes (20) angeordnet ist.

45. Mehrstufengetriebe nach einem der Ansprüche 1 bis 44, **dadurch gekennzeichnet, daß** die Lamellen (41) des ersten Schaltelementes (A) in axialer Richtung zwischen den Lamellen (71) des fünften Schaltelementes (E) und dem Haupt-Planetenradsatz (20) angeordnet sind, angrenzend an die Lamellen (71) des fünften Schaltelementes (E).

46. Mehrstufengetriebe nach Anspruch 45, **dadurch gekennzeichnet, daß** die Lamellen (41) des ersten Schaltelementes (A) in axialer Richtung an den Haupt-Planetenradsatz (20) angrenzen.

47. Mehrstufengetriebe nach einem der Ansprüche 1 bis 46, **dadurch gekennzeichnet, daß** das fünfte Schaltelement (E) auf der dem Vorschalt-Planetenradsatz (10) abgewandten Seite des Haupt-Planetenradsatzes (20) angeordnet ist.

48. Mehrstufengetriebe nach Anspruch 47, **dadurch gekennzeichnet, daß** die Antriebswelle (3) zentrisch durch den Haupt-Planetenradsatz (20) hindurch geführt ist.

49. Mehrstufengetriebe nach Anspruch 47 oder 48, **dadurch gekennzeichnet, daß** das fünfte Schaltelement (E) in axialer Richtung unmittelbar an den Haupt-Planetenradsatz (20) angrenzt.

50. Mehrstufengetriebe nach einem der Ansprüche 1 bis 49, **dadurch gekennzeichnet, daß** das dritte Eingangselement des Haupt-Planetentradsatzes (20) über eine dritte Welle (5) mit einem Ausgangselement des fünften Schaltelementes (E) verbunden ist, daß das erste Eingangselement des Haupt-Planetentradsatzes (20) über eine erste Sonnenwelle (6) mit einem Ausgangselement des ersten Schaltelementes (A) verbunden ist, und daß das zweite Eingangselement des Haupt-Planetenradsatzes (20) über eine zweite Sonnenwelle (7) mit einem Ausgangselement des zweiten Schaltelementes (B) verbunden ist, wobei die dritte Welle (5) zentrisch durch den Haupt-Planetenradsatz (20) hindurch geführt ist, und wobei die erste Sonnenwelle (6) zwischen Vorschalt- und Haupt-Planetenradsatz (10, 20) koaxial oberhalb der dritten Welle (5) verläuft und/oder auf dieser gelagert ist, und wobei die zweite Sonnenwelle (7) zwischen Vorschalt- und Haupt-Planetenradsatz (10, 20) koaxial oberhalb der ersten Sonnenwelle (6) verläuft und/oder auf dieser gelagert ist.

51. Mehrstufengetriebe nach einem der Ansprüche 1 bis 49, **dadurch gekennzeichnet, daß** die Antriebswelle (3) zentrisch durch Vorschalt-Planetenradsatz (10) und Haupt-Planetenradsatz (20) hindurch geführt ist, daß das Ausgangselement des ersten Schaltelementes (A) über eine erste Sonnenwelle (6) mit dem ersten Eingangselement des Haupt-Planetentradsatzes (20) verbunden ist, und daß das Ausgangselement des zweiten Schaltelementes (B) über eine zweite Sonnenwelle (7) mit dem zweiten Eingangselement des Haupt-Planetenradsatzes (20) verbunden ist, wobei die erste Sonnenwelle (6) zwischen Vorschalt- und Haupt-Planetenradsatz (10, 20) koaxial oberhalb der Antriebswelle (3) verläuft und/oder auf dieser gelagert ist, und wobei die zweite Sonnenwelle (7) zwischen Vorschalt- und Haupt-Planetenradsatz (10, 20) koaxial oberhalb der ersten Sonnenwelle (6) verläuft und/oder auf dieser gelagert ist.

52. Mehrstufengetriebe nach Anspruch 50 oder 51, **dadurch gekennzeichnet, daß** die zweite Sonnenwelle (7) über eine Lagerplatte (35), die mit dem Getriebegehäuse (30) fest verbunden oder als Teil des Getriebegehäuses (30) ausgebildet ist, gelagert ist.

53. Mehrstufengetriebe nach einem der Ansprüche 1 bis 49, **dadurch gekennzeichnet, daß** das dritte Eingangselement des Haupt-Planetentradsatzes (20) über eine dritte Welle (5) mit einem Ausgangselement des fünften Schaltelementes (E) verbunden ist, daß das erste Eingangselement des Haupt-Planetentradsatzes (20) über eine erste Sonnenwelle (6) mit einem Ausgangselement des ersten Schaltelementes (A) verbunden ist, und daß das zweite Eingangselement des Haupt-Planetenradsatzes (20) über eine zweite Sonnenwelle (7) mit einem Ausgangselement des zweiten Schaltelementes (B) verbunden ist, wobei die zweite Sonnenwelle (7) zentrisch durch den Haupt-Planetenradsatz (20) hindurch geführt ist, und wobei die erste Sonnenwelle (6) zwischen Vorschalt- und Haupt-Planetenradsatz (10, 20) koaxial oberhalb der zweiten Sonnenwelle (7) verläuft und/oder auf dieser gelagert ist, und wobei die dritte Welle (5) zwischen Vorschalt- und Haupt-Planetenradsatz (10, 20) koaxial oberhalb der ersten Sonnenwelle (6) verläuft und/oder auf dieser gelagert ist.

54. Mehrstufengetriebe nach Anspruch 53, **dadurch gekennzeichnet, daß** die dritten Welle (5) über eine Lagerplatte (35), die mit dem Getriebegehäuse (30) fest verbunden oder als Teil des Getriebegehäuses (30) ausgebildet ist, gelagert ist.

55. Mehrstufengetriebe nach Anspruch 53 oder 54, **dadurch gekennzeichnet, daß** das dritte Schaltelement (C), über welches das zweite Eingangselement des Haupt-Planetenradsatzes (20) festsetzbar ist, auf der dem Vorschalt-Planetenradsatz (10) abgewandten Seite des Haupt-Planetenradsatzes (20) angeordnet ist, insbesondere angrenzend an eine der Getriebegehäusewand (31) bzw. einem Antriebsmotor gegenüberliegenden Außenwand des Getriebegehäuses (30).

56. Mehrstufengetriebe nach einem der Ansprüche 1 bis 55, **dadurch gekennzeichnet, daß** der Haupt-Planetenradsatz (20) als Ravigneaux-Planetenradsatz ausgebildet ist, mit einem kleinen Sonnenrad (21) als erstes Eingangselement, mit einem großen Sonnenrad (22) als zweites Eingangselement, mit gekoppelten Stegen (25, 26) als drittes Eingangselement, sowie mit einem Hohlrad (27) als Ausgangselement des Haupt-Planetenradsatzes (20).

57. Mehrstufengetriebe nach einem der Ansprüche 2 bis 56, **dadurch gekennzeichnet, daß** das Hohlrad (14) des Vorschalt-Planetenradsatzes (10) mit einem Außenlamellenträger (40) des ersten Schaltelementes (A) und mit einem Außenlamellenträger (60) des zweiten Schaltelementes (B) verbunden ist.

58. Mehrstufengetriebe nach einem der Ansprüche 2 bis 56, **dadurch gekennzeichnet, daß** das Hohlrad (14) des Vorschalt-Planetenradsatzes (10) mit einem Außenlamellenträger (40) des ersten Schaltelementes (A) und mit einem Innenlamellenträger (52) des zweiten Schaltelementes (B) verbunden ist.

59. Mehrstufengetriebe nach einem der Ansprüche 2 bis 56, **dadurch gekennzeichnet, daß** das Hohlrad (14) des Vorschalt-Planetenradsatzes (10) mit einem Innenlamellenträger (42) des ersten Schaltelementes (A) und mit einem Außenlamellenträger (60) des zweiten Schaltelementes (B) verbunden ist.

60. Mehrstufengetriebe nach einem der Ansprüche 2 bis 56, **dadurch gekennzeichnet, daß** das Hohlrad (14) des Vorschalt-Planetenradsatzes (10) mit einem Innenlamellenträger (42) des ersten Schaltelementes (A) und mit einem Innenlamellenträger (52) des zweiten Schaltelementes (B) verbunden ist.

61. Mehrstufengetriebe nach einem der Ansprüche 1 bis 60, **dadurch gekennzeichnet, daß** Antriebswelle (3) und Abtriebswelle (4) koaxial zueinander verlaufen.

62. Mehrstufengetriebe nach einem der Ansprüche 1 bis 60, **dadurch gekennzeichnet, daß** Antriebswelle (3) und Abtriebswelle (4) zumindest annährend achsparallel zueinander verlaufen.

63. Mehrstufengetriebe nach einem der Ansprüche 1 bis 60, **dadurch gekennzeichnet, daß** Antriebswelle (3) und Abtriebswelle (4) zumindest annähernd rechtwinklig zueinander verlaufen.

64. Mehrstufengetriebe nach Anspruch 62 oder 63, **dadurch gekennzeichnet, daß** in Kraftflußrichtung zwischen dem Ausgangselement des Haupt-Planetenradsatzes (20) und der Abtriebswelle (4) mindestens ein Stirnrad (9) oder ein Kegelrad angeordnet ist.

65. Mehrstufengetriebe nach Anspruch 64, **dadurch gekennzeichnet, daß** das Stirnrad (9) bzw. Kegelrad auf der dem Vorschalt-Planetenradsatz (10) abgewandten Seite des Haupt-Planetenradsatzes (20) angeordnet ist.

66. Mehrstufengetriebe nach Anspruch 64, **dadurch gekennzeichnet, daß** das Stirnrad (9) bzw. Kegelrad zwischen Vorschalt- und Haupt-Planetenradsatz (10, 20) angeordnet ist.

67. Mehrstufengetriebe nach Anspruch 64, 65 oder 66, **dadurch gekennzeichnet, daß** das Stirnrad (9) bzw. Kegelrad in axialer Richtung unmittelbar an den Haupt-Planetenradsatz (20) angrenzt.

68. Mehrstufengetriebe nach Anspruch 64 oder 65, **dadurch gekennzeichnet, daß** das fünfte Schaltelement (E) axial zwischen dem Stirnrad (9) bzw. Kegelrad und dem Haupt-Planetenradsatz (20) angeordnet ist, wobei das Ausgangselement des Haupt-Planetenradsatzes (20) das fünfte Schaltelement (E) in axialer Richtung radial übergreift.

69. Mehrstufengetriebe nach einem der Ansprüche 64 bis 68, **dadurch gekennzeichnet, daß** das Stirnrad (9) bzw. Kegelrad über eine Lagerplatte (35, 37), die mit dem Getriebegehäuse (30) fest verbunden oder als Teil des Getriebegehäuses (30) ausgebildet ist und an das Stirnrad (9) bzw. Kegelrad in axialer Richtung angrenzt, gelagert ist, wobei die Lagerplatte (35, 37) auf der dem Haupt-Planetenradsatz (20) abgewandten Seite des Stirnrades (9) bzw. Kegelrades angeordnet ist, angrenzend an einen scheibenförmigen Abschnitt des Ausgangselementes des zweiten Schaltelementes (B), welcher mit der zweiten Sonnenwelle (7) verbunden ist, und/oder angrenzend an ein drittes Schaltelement (C), über welches das Ausgangselement des zweiten Schaltelementes (B) festsetzbar ist.

70. Mehrstufengetriebe nach einem der Ansprüche 64 bis 68, **dadurch gekennzeichnet, daß** das Stirnrad (9) bzw. Kegelrad über eine Lagerplatte (35), die mit dem Getriebegehäuse (30) fest verbunden oder als Teil des Getriebegehäuses (30) ausgebildet ist und an das Stirnrad (9) bzw. Kegelrad in axialer Richtung angrenzt, gelagert ist, wobei die Lagerplatte (35) auf der dem Haupt-Planetenradsatz (20) abgewandten Seite des Stirnrades (9) bzw. Kegelrades angeordnet ist, angrenzend an einen scheibenförmigen Abschnitt des Ausgangselementes des fünften Schaltelementes (E), welcher mit der dritten Welle (5) verbunden ist, und/oder angrenzend an ein viertes Schaltelement (D), über welches das Ausgangselement des fünften Schaltelementes (E) festsetzbar ist.

71. Mehrstufengetriebe nach einem der Ansprüche 63 bis 69, **dadurch gekennzeichnet, daß** das Stirnrad (9) bzw. Kegelrad über eine Lagerplatte (35), die mit dem Getriebegehäuse (30) fest verbunden oder als Teil des Getriebegehäuses (30) ausgebildet ist und an das Stirnrad (9) bzw. Kegelrad in axialer Richtung angrenzt, gelagert ist, wobei die Lagerplatte (35) axial zwischen dem Haupt-Planetenradsatz (20) und dem Stirnrad (9) bzw. Kegelrad angeordnet ist.

72. Mehrstufengetriebe nach einem der Ansprüche 63 bis 67, **dadurch gekennzeichnet, daß** das Stirnrad (9) bzw. Kegelrad über eine Lagerplatte (35, 37), die mit dem Getriebegehäuse (30) fest verbunden oder als Teil des Getriebegehäuses (30) ausgebildet ist und an das Stirnrad (9) bzw. Kegelrad in axialer Richtung angrenzt, gelagert ist, wobei die Lagerplatte (35, 37) auf der dem Haupt-Planetenradsatz (20) abgewandten Seite des Stirnrades (9) bzw. Kegelrades angeordnet ist und eine Außenwand des Getriebegehäuses (30) bildet.

## Claims

1. Multi-stage transmission, with an input shaft (3) connected to a front-mounted planetary gear set (10), with an output shaft (4) connected to a main planetary gear set (20) having a number of shifting elements (A to F), the selective closing of which enables at least six forward speeds to be shifted, and a transmission input speed (n_ein) of the input shaft (3) can be transmitted to the output shaft (4) in such a way that, in order to shift from one speed into the next highest or next lowest speed, only one shifting element respectively of the shifting elements just operated is opened and another shifting element is closed, in which the main planetary gear set (20) has three non-coupled input elements, one output element of the front-mounted planetary gear set (10) can be connected via a first shifting element (A) to the first input element of the main planetary gear set (20) and via a second shifting element (B) to the second input element of the main planetary gear set (20), the input shaft (3) can be connected via a fifth shifting element (E) to the third input element of the main planetary gear set (20) and one element of the front-mounted planetary gear set (10) can be fixed by means of a sixth shifting element (F), which sixth shifting element (F) is disposed on the side of the front-mounted planetary gear set (10) remote from the main planetary gear set (20), **characterised in that** the front-mounted planetary gear set (10) is provided in the form of a Plus gearing with inner and outer planetary gears (12, 13), the webs (15, 16) of which are interconnected.

2. Multi-stage transmission as claimed in claim 1, **characterised in that** the coupled webs (15, 16) of the front-mounted planetary gear set (10) are connected to the input shaft (3), an annular gear (14) of the front-mounted planetary gear set (10) can be connected to the first and second input element of the main planetary gear set (20) and a sun gear (11) of the front-mounted planetary gear set (10) can be fixed by means of the sixth shifting element (F).

3. Multi-stage transmission as claimed in claim 1, **characterised in that** a sun gear (11) of the front-mounted planetary gear set (10) is connected to the input shaft (3), an annular gear (14) of the front-mounted planetary gear set (10) can be connected to the first and second input element of the main planetary gear set (20) and the coupled webs (15, 16) of the front-mounted planetary gear set (10) can be fixed by means of the sixth shifting element (F),

4. Multi-stage transmission as claimed in claim 1, 2 or 3, **characterised in that** the sixth shifting element (F) is disposed adjacent to a transmission housing wall (31) in the axial direction, on a projection (33) of the transmission housing wall (31) or on a hub (34) fixedly connected to the transmission housing wall (31), which transmission housing wall (31) is provided as part of a transmission housing (30) or as an intermediate plate (32) fixedly connected to the transmission housing (30).

5. Multi-stage transmission as claimed in claim 4, **characterised in that** at least one pressurising medium passage (86) for delivering pressurising medium to a servo-unit (83) of the sixth shifting element (F) is provided in the projection (33) of the transmission housing wall (31) or in the hub (34) and/or in the transmission housing wall (31) or in the intermediate plate (32) and/or in the transmission housing (30) in the spatial vicinity of the servo-unit (83) of the sixth shifting element (F).

6. Multi-stage transmission as claimed in claim 4 or 5, **characterised in that** the transmission housing wall (31) is disposed on a side of the transmission housing (30) facing a motor shaft (1) of a drive motor of the multi-stage transmission.

7. Multi-stage transmission as claimed in claim 4 or 5, **characterised in that** the transmission housing wall (31) is disposed on a side of the transmission housing (30) lying opposite a motor shaft (1) of a drive motor of the multi-stage transmission.

8. Multi-stage transmission as claimed in one of claims 4 to 7, **characterised in that** a disc-shaped portion of an internal disc support (82) of the sixth shifting element (F) is disposed immediately adjacent to the transmission housing wall (31) or intermediate plate (32).

9. Multi-stage transmission as claimed in one of claims 4 to 8, **characterised in that** the servo-unit (83) for operating the sixth shifting element (F) is disposed immediately adjacent to the transmission housing wall (31) or intermediate plate (32) or is integrated in the transmission housing wall (31) or intermediate plate (32).

10. Multi-stage transmission as claimed in one of claims 4 to 9, **characterised in that** the servo-unit (83) of the sixth shifting element (F) is disposed in the axial direction between the transmission housing wall (31) or intermediate plate (32) and the front-mounted planetary gear set (10).

11. Multi-stage transmission as claimed in one of claims 4 to 10, **characterised in that** the servo-unit (83) of the sixth shifting element (F) operates discs (81) of the sixth shifting element (F) in the direction opposite the transmission housing wall (31) or intermediate plate (32).

12. Multi-stage transmission as claimed in one of claims 4 to 10, **characterised in that** the servo-unit (83) of the sixth shifting element (F) operates discs (81) of the sixth shifting element (F) in the direction towards the transmission housing wall (31) or intermediate plate (32).

13. Multi-stage transmission as claimed in one of claims 4 to 12, **characterised in that** the servo-unit (83) of the sixth shifting element (F) is disposed in the axial direction between the transmission housing wall (31) or intermediate plate (32) and a servo-unit (43) for operating the first shifting element (A), and a disc-shaped portion of an inner disc support (82) of the sixth shifting element (F) in particular directly adjoins the transmission housing wall (31) or intermediate plate (32).

14. Multi-stage transmission as claimed in claim 13, **characterised in that** the servo-unit (43) and/or discs (41) of the first shifting element (A) is disposed at least partially on the side of the front-mounted planetary gear set (10) remote from the main planetary gear set (20).

15. Multi-stage transmission as claimed in one of claims 4 to 14, **characterised in that** the servo-unit (83) of the sixth shifting element (F) is disposed in the axial direction between the transmission housing wall (31) or intermediate plate (32) and a servo-unit (63) for operating the second shifting element (B).

16. Multi-stage transmission as claimed in claim 15, **characterised in that** a servo-unit (63) for operating the second shifting element (B) is disposed on the side of the front-mounted planetary gear set (10) remote from the main planetary gear set (20).

17. Multi-stage transmission as claimed in one of claims 1 to 16, **characterised in that** discs (81) of the sixth shifting element (F) are disposed on a larger diameter than the annular gear (14) of the front-mounted planetary gear set (10).

18. Multi-stage transmission as claimed in one of claims 1 to 17, **characterised in that** the sixth shifting element (F) is provided in the form of a start-up shifting element of the multi-stage transmission.

19. , Multi-stage transmission as claimed in one of claims 1 to 18, **characterised in that** an output element of the first shifting element (A) at least partially engages over the fifth shifting element (E) in the axial direction, in particular the discs (71) of the fifth shifting element (E).

20. Multi-stage transmission as claimed in one of claims 1 to 19, **characterised in that** the discs (41) of the first shifting element (A) are disposed at least partially radially above the front-mounted planetary gear set (10) and/or at least partially radially above the discs (71) of the fifth shifting element (E).

21. Multi-stage transmission as claimed in one of claims 1 to 20, **characterised in that** the output element of the first shifting element (A) at least partially extends through a clutch space of the second shifting element (B).

22. , Multi-stage transmission as claimed in claim 19, 20 or 21, **characterised in that** the first shifting element (A) is disposed closer to the sixth shifting element (F) than the first shifting element (B), in particular the discs (41) and/or the servo-unit (43) of the first shifting element (A) are disposed closer to the servo-unit (83) of the sixth shifting element (F) than the discs (61) of the second shifting element (B).

23. Multi-stage transmission as claimed in one of claims 19 to 22, **characterised in that** the second shifting element (B) is disposed axially adjacent to the first shifting element (A) on the side of the first shifting element (A) facing the main planetary gear set (20), in particular the discs (61) of the second shifting element (B) are disposed axially adjacent to the discs (41) of the first shifting element (A) on the side of the discs (41) of the first shifting element (A) facing the main planetary gear set (20).

24. , Multi-stage transmission as claimed in one of claims 19 to 23, **characterised in that** the discs (41) and/or the servo-unit (43) of the first shifting element (A) are disposed at least partially radially underneath the discs (81) of the sixth shifting element (F).

25. Multi-stage transmission as claimed in claim 24, **characterised in that** the servo-unit (43) of the first shifting element (A) is disposed axially adjacent to the front-mounted planetary gear set (10).

26. Multi-stage transmission as claimed in one of claims 19 to 25, **characterised in that** the fifth shifting element (E) is disposed between the front-mounted and main planetary gear set (10, 20) adjoining the front-mounted planetary gear set (10) in the axial direction, in which case the discs (71) of the fifth shifting element (E) in particular are disposed at least partially radially underneath the discs (61) of the second shifting element (B).

27. Multi-stage transmission as claimed in one of claims 1 to 20, **characterised in that** an output element of the second shifting element (B) at least partially engages radially around the first shifting element (A) in the axial direction, in particular the discs (41) of the first shifting element (A).

28. Multi-stage transmission as claimed in claim 27, **characterised in that** the second shifting element (B) is disposed closer to the sixth shifting element (F) than the first shifting element (A), in particular the discs (61) and/or the servo-unit (63) of the second shifting element (B) is disposed closer to the servo-unit (83) of the sixth shifting element (F) than the discs (41) of the first shifting element (A).

29. Multi-stage transmission as claimed in claim 27 or 28, **characterised in that** the first shifting element (A) is disposed axially adjacent to the second shifting element (B) on the side of the second shifting element (B) facing the main planetary gear set (20), in particular the discs (41) of the first shifting element (A) are disposed axially adjacent to the discs (61) of the second shifting element (B) on the side of the discs (61) of the second shifting element (B) facing the main planetary gear set (20).

30. Multi-stage transmission as claimed in claim 27, 28 or 29, **characterised in that** the discs (61) of the second shifting element (B) are disposed at least partially radially above the front-mounted planetary gear set (10).

31. Multi-stage transmission as claimed in one of claims 27 to 30, **characterised in that** the discs (61) and/or the servo-unit (63) of the second shifting element (B) are disposed at least partially radially underneath the discs (81) of the sixth shifting element (F).

32. Multi-stage transmission as claimed in claim 27, 28 or 29, **characterised in that** the discs (61) of the second shifting element (B) are disposed at least partially radially above the discs (71) of the fifth shifting element (E).

33. Multi-stage transmission as claimed in claim 31 or 32, **characterised in that** the servo-unit (63) of the second shifting element (B) is disposed axially adjacent to the front-mounted planetary gear set (10).

34. Multi-stage transmission as claimed in one of claims 27 to 33, **characterised in that** the fifth shifting element (E) is disposed between the front-mounted and planetary gear set (10, 20) adjoining the front-mounted planetary gear set (10) in the axial direction, in which case the discs (71) of the fifth shifting element (E) in particular are disposed at least partially radially underneath the discs (41) of the first shifting element (A).

35. Multi-stage transmission as claimed in one of claims 1 to 18, **characterised in that** an input element of the fifth shifting element (E) engages at least partially radially around the first shifting element (A) in the axial direction, in particular the discs (41) of the first shifting element (A).

36. Multi-stage transmission as claimed in one of claims 1 to 18 or 35, **characterised in that** the input element of the fifth shifting element (E) engages at least partially radially around the second shifting element (B) in the axial direction, in particular the discs (61) of the second shifting element (B).

37. Multi-stage transmission as claimed in claim 35 or 36, **characterised in that** the fifth shifting element (E) is disposed axially between the front-mounted and main planetary gear set (10, 20), closer to the main planetary gear set (20) than the first and second shifting element (A, B).

38. Multi-stage transmission as claimed in one of claims 35 to 37, **characterised in that** the fifth shifting element (E) is disposed between the front-mounted planetary gear set (10) and main planetary gear set (20) in the axial direction adjoining the front-mounted planetary gear set (10).

39. Multi-stage transmission as claimed in one of claims 1 to 18, **characterised in that** an output element of the fifth shifting element (E) engages at least partially around the first shifting element (A) in the axial direction, in particular the discs (41) of the first shifting element (A).

40. Multi-stage transmission as claimed in claim 39, **characterised in that** the first and the fifth shifting element (A, E) are disposed on the side of the main planetary gear set (20) remote from the front-mounted planetary gear set (10), in which case the first shifting element (A) - in particular its discs (41) - is disposed axially between the fifth shifting element (E) and the main planetary gear set (20).

41. Multi-stage transmission as claimed in claim 39, **characterised in that** the first shifting element (A) is disposed between the front-mounted and main planetary gear set (10, 20), and the fifth shifting element (E) is disposed on the side of the first shifting element (A) remote from the main planetary gear set (20).

42. Multi-stage transmission as claimed in one of claims 1 to 41, **characterised in that** the fifth shifting element (E) is disposed at least partially in the radial direction above the front-mounted planetary gear set (10), in particular the discs (71) of the fifth shifting element (E) are disposed at least partially above the front-mounted planetary gear set (10).

43. Multi-stage transmission as claimed in claim 42, **characterised in that** a servo-unit (73) for operating the fifth shifting element (E) is disposed on the side of the front-mounted planetary gear set (10) remote from the main planetary gear set (20), in particular adjoining the front-mounted planetary gear set (10).

44. Multi-stage transmission as claimed in one of claims 1 to 33, **characterised in that** the first shifting element (A) is disposed on the side of the front-mounted planetary gear set (10) remote from the main planetary gear set (20) and the fifth shifting element (E) is disposed on the side of the main planetary gear set (20) remote from the front-mounted planetary gear set (10).

45. Multi-stage transmission as claimed in one of claims 1 to 44, **characterised in that** the discs (41) of the first shifting element (A) are disposed in the axial direction between the discs (71) of the fifth shifting element (E) and the main planetary gear set (20), adjoining the discs (71) of the fifth shifting element (E).

46. Multi-stage transmission as claimed in claim 45, **characterised in that** the discs (41) of the first shifting element (A) adjoin the main planetary gear set (20) in the axial direction.

47. Multi-stage transmission as claimed in one of claims 1 to 46, **characterised in that** the fifth shifting element (E) is disposed on the side of the main planetary gear set (20) remote from the front-mounted planetary gear set (10).

48. Multi-stage transmission as claimed in claim 47, **characterised in that** the input shaft (3) extends centrally through the main planetary gear set (20).

49. Multi-stage transmission as claimed in claim 47 or 48, **characterised in that** the fifth shifting element (E) directly adjoins the main planetary gear set (20) in the axial direction.

50. Multi-stage transmission as claimed in one of claims 1 to 49, **characterised in that** the third input element of the main planetary gear set (20) is connected via a third shaft (5) to an output element of the fifth shifting element (E), the first input element of the main planetary gear set (20) is connected via a first sun shaft (6) to an output element of the first shifting element (A), and the second input element of the main planetary gear set (20) is connected via a second sun shaft (7) to an output element of the second shifting element (B), whereby the third shaft (5) extends centrally through the main planetary gear set (20) and whereby the first sun shaft (6) extends between the front-mounted and main planetary gear set (10, 20) coaxially above the third shaft (5) and/or is mounted on the latter, and whereby the second sun shaft (7) extends between the front-mounted and main planetary gear set (10, 20) coaxially above the first sun shaft (6) and/or is mounted on the latter.

51. Multi-stage transmission as claimed in one of claims 1 to 49, **characterised in that** the input shaft (3) extends centrally through the front-mounted planetary gear set (10) and main planetary gear set (20), the output element of the first shifting element (A) is connected via a first sun shaft (6) to the first input element of the main planetary gear set (20), and the output element of the second shifting element (B) is connected via a second sun shaft (7) to the second input element of the main planetary gear set (20), whereby the first sun shaft (6) extends between the front-mounted and main planetary gear set (10, 20) coaxially above the input shaft (3) and/or is mounted on the latter, and whereby the second sun shaft (7) extends between the front-mounted and main planetary gear set (10, 20) coaxially above the first sun shaft (6) and/or is mounted on the latter.

52. Multi-stage transmission as claimed in claim 50 or 51, **characterised in that** the second sun shaft (7) is mounted by means of a bearing plate (35) which is fixedly connected to the transmission housing (30) or is provided as part of the transmission housing (30).

53. Multi-stage transmission as claimed in one of claims 1 to 49, **characterised in that** the third input element of the main planetary gear set (20) is connected via a third shaft (5) to an output element of the fifth shifting element (E), the first input element of the main planetary gear set (20) is connected via a first sun shaft (6) to an output element of the first shifting element (A), and the second input element of the main planetary gear set (20) is connected via a second sun shaft (7) to an output element of the second shifting element (B), whereby the second sun shaft (7) extends centrally through the main planetary gear set (20), and whereby the first sun shaft (6) extends between the front-mounted and main planetary gear set (10, 20) coaxially above the second sun shaft (7) and/or is mounted on the latter, and whereby the third shaft (5) extends between the front-mounted and main planetary gear set (10, 20) coaxially above the first sun shaft (6) and/or is mounted on the latter.

54. Multi-stage transmission as claimed in claim 53, **characterised in that** the third shaft (5) is mounted by means of a bearing plate (35) which is fixedly connected to the transmission housing (30) or is provided as part of the transmission housing (30).

55. Multi-stage transmission as claimed in claim 53 or 54, **characterised in that** the third shifting element (C) by means of which the second input element of the main planetary gear set (20) can be fixed, is disposed on the side of the main planetary gear set (20) remote from the front-mounted planetary gear set (10), in particular adjoining an external wall of the transmission housing (30) lying opposite the transmission housing wall (31) and a drive motor.

56. Multi-stage transmission as claimed in one of claims 1 to 55, **characterised in that** the main planetary gear set (20) is provided in the form of a Ravigneaux planetary gear set, with a small sun gear (21) as a first input element, with a large sun gear (22) as a second input element, with coupled webs (25, 26) as a third input element, and with an annular gear (27) as an output element of the main planetary gear set (20).

57. Multi-stage transmission as claimed in one of claims 2 to 56, **characterised in that** the annular gear (14) of the front-mounted planetary gear set (10) is connected to an outer disc support (40) of the first shifting element (A) and to an outer disc support (60) of the second shifting element (B).

58. Multi-stage transmission as claimed in one of claims 2 to 56, **characterised in that** the annular gear (14) of the front-mounted planetary gear set (10) is connected to an outer disc support (40) of the first shifting element (A) and to an inner disc support (52) of the second shifting element (B).

59. Multi-stage transmission as claimed in one of claims 2 to 56, **characterised in that** the annular gear (14) of the front-mounted planetary gear set (10) is connected to an inner disc support (42) of the first shifting element (A) and to an outer disc support (60) of the second shifting element (B).

60. Multi-stage transmission as claimed in one of claims 2 to 56, **characterised in that** the annular gear (14) of the front-mounted planetary gear set (10) is connected to an inner disc support (42) of the first shifting element (A) and to an inner disc support (52) of the second shifting element (B).

61. Multi-stage transmission as claimed in one of claims 1 to 60, **characterised in that** the input shaft (3) and output shaft (4) extend coaxially with one another.

62. Multi-stage transmission as claimed in one of claims 1 to 60, **characterised in that** the input shaft (3) and output shaft (4) extend at least approximately axially parallel with one another.

63. Multi-stage transmission as claimed in one of claims 1 to 60, **characterised in that** the input shaft (3) and output shaft (4) extend at least approximately at a right angle to one another.

64. Multi-stage transmission as claimed in claim 62 or 63, **characterised in that** at least one spur gear (9) or bevel gear is disposed in the force-flow direction between the output element of the main planetary gear set (20) and the output shaft (4).

65. Multi-stage transmission as claimed in claim 64, **characterised in that** the spur gear (9) or bevel gear is disposed on the side of the main planetary gear set (20) remote from the front-mounted gear set (10).

66. Multi-stage transmission as claimed in claim 64, **characterised in that** the spur gear (9) or bevel gear is disposed between the front-mounted and main planetary gear set (10, 20).

67. Multi-stage transmission as claimed in claim 64, 65 or 66, **characterised in that** the spur gear (9) or bevel gear directly adjoins the main planetary gear set (20) in the axial direction.

68. Multi-stage transmission as claimed in claim 64 or 65, **characterised in that** the fifth shifting element (E) is disposed axially between the spur gear (9) or bevel gear and the main planetary gear set (20), and the output element of the main planetary gear set (20) engages radially around the fifth shifting element (E) in the axial direction.

69. Multi-stage transmission as claimed in one of claims 64 to 68, **characterised in that** the spur gear (9) or bevel gear is mounted by means of a bearing plate (35, 37) which is fixedly connected to the transmission housing (30) or is provided as part of the transmission housing (30) and adjoins the spur gear (9) or bevel gear in the axial direction, which bearing plate (35, 37) is disposed on the side of the spur gear (9) or bevel gear remote from the main planetary gear set (20), adjoining a disc-shaped portion of the output element of the second shifting element (B), which is connected to the second sun shaft (7), and/or adjoining a third shifting element (C) by means of which the output element of the second shifting element (B) can be fixed.

70. Multi-stage transmission as claimed in one of claims 64 to 68, **characterised in that** the spur gear (9) or bevel gear is mounted by means of a bearing plate (35) which is fixedly connected to the transmission housing (30) or is provided as part of the transmission housing (30) and adjoins the spur gear (9) or bevel gear in the axial direction, which bearing plate (35) is disposed on the side of the spur gear (9) or bevel gear remote from the main planetary gear set (20) adjoining a disc-shaped portion of the output element of the fifth shifting element (E), which is connected to the third shaft (5), and/or adjoining a fourth shifting element (D) by means of which the output element of the fifth shifting element (E) can be fixed.

71. Multi-stage transmission as claimed in one of claims 63 to 69, **characterised in that** the spur gear (9) or bevel gear is mounted by means of a bearing plate (35) which is fixedly connected to the transmission housing (30) or is provided as part of the transmission housing (30) and adjoins the spur gear (9) or bevel gear in the axial direction, which bearing plate (35) is disposed axially between the main planetary gear set (20) and the spur gear (9) or bevel gear.

72. Multi-stage transmission as claimed in one of claims 63 to 67, **characterised in that** the spur gear (9) or bevel gear is mounted by means of a bearing plate (35, 37) which is fixedly connected to the transmission housing (30) or is provided as part of the transmission housing (30) and adjoins the spur gear (9) or bevel gear in the axial direction, which bearing plate (35, 37) is disposed on the side of the spur gear (9) or bevel gear remote from the main planetary gear set (20) and forms an external wall of the transmission housing (30).

## Revendications

1. Boîte de vitesses à plusieurs étages comprenant un arbre d'entrée (3) qui est relié à un train épicycloïdal amont (10), un arbre de sortie (4) qui est relié à un train épicycloïdal principal (20), plusieurs éléments de commande (A à F) par la fermeture sélective desquels on peut passer au moins six vitesses de marche avant et une vitesse de rotation d'entrée de la boîte de vitesses (n_ein) de l'arbre d'entrée (3) qui peut être transmise à l'arbre de sortie (4), dans un mode où, pour passer d'une vitesse à la vitesse immédiatement supérieure ou à la vitesse immédiatement inférieure, un seul élément de commande parmi les éléments de commande qui sont actionnés à ce moment est ouvert et un autre élément de commande est fermé, le train épicycloïdal principal (20) comportant trois éléments d'entrée non accouplés, un élément de sortie du train épicycloïdal amont (10) pouvant être relié au premier élément d'entrée du train épicycloïdal principal (20) par l'intermédiaire d'un premier élément de commande (A) et au deuxième élément d'entrée du train épicycloïdal principal (20) par l'intermédiaire d'un deuxième élément de commande (B), l'arbre d'entrée (3) pouvant être relié au troisième élément d'entrée du train épicycloïdal principal (20) par l'intermédiaire d'un cinquième élément de commande (E) et un élément du train épicycloïdal amont (10) pouvant être immobilisé par l'intermédiaire d'un sixième élément de commande (F), le sixième élément de commande (F) étant disposé sur le côté du train épicycloïdal amont (10) qui est éloigné du train épicycloïdal principal (20), ca ractérisée en ce que le train épicycloïdal amont (10) constitue un mécanisme multiplicateur, qui comprend des roues satellites intérieures et extérieures (12, 13) dont les porte-satellites (15, 16) sont reliés entre eux.

2. Boîte de vitesses à plusieurs étages selon la revendication 1, **caractérisée en ce que** les porte-satellites accouplés (15, 16) du train épicycloïdal amont (10) sont reliés à l'arbre d'entrée (3), **en ce qu'**une couronne à denture intérieure (14) du train épicycloïdal amont (10) peut être reliée aux premier et deuxième éléments d'entrée du train épicycloïdal principal (20), et **en ce qu'**une roue planétaire (11) du train épicycloïdal amont (10) peut être immobilisée par l'intermédiaire du sixième élément de commande (F).

3. Boîte de vitesses à plusieurs étages selon la revendication 1, **caractérisée en ce qu'**une roue planétaire (11) du train épicycloïdal amont (10) est reliée à l'arbre d'entrée (3), **en ce qu'**une couronne à denture intérieure (14) du train épicycloïdal amont (10) peut être reliée aux premier et deuxième éléments d'entrée du train épicycloïdal principal (20), et **en ce que** les porte-satellites accouplés (15, 16) du train épicycloïdal amont (10) peuvent être immobilisés par l'intermédiaire du sixième élément de commande (F).

4. Boîte de vitesses à plusieurs étages selon la revendication 1, 2 ou 3, **caractérisée en ce que** le sixième élément de commande (F) est disposé adjacent à une paroi (31) du carter de la boîte de vitesses dans la direction axiale, sur une saillie (33) de la paroi (31) du carter de la boîte de vitesses ou sur un moyeu (34) relié rigidement à la paroi (31) du carter de la boîte de vitesses, la paroi (31) du carter de la boîte de vitesses étant constituée par une partie du carter (30) de la boîte de vitesses ou par une plaque intermédiaire (32) reliée rigidement au carter (30) de la boîte de vitesses.

5. Boîte de vitesses à plusieurs étages selon la revendication 4, **caractérisée en ce qu'**au moins un conduit de milieu de pression (86) prévu pour une amenée de milieu de pression à un servodispositif (83) du sixième élément de commande (F) est disposé dans la saillie (33) de la paroi (31) du carter de la boîte de vitesses, ou dans le moyeu (34), et/ou dans la paroi (31) du carter de la boîte de vitesses, ou dans la plaque intermédiaire (32), et/ou dans le carter (30) de la boîte de vitesses, à proximité dans l'espace du servodispositif (83) du sixième élément de commande (F).

6. Boîte de vitesses à plusieurs étages selon la revendication 4 ou 5, **caractérisée en ce que** la paroi (31) du carter de la boîte de vitesses est disposée d'un côté du carter (30) de la boîte de vitesses qui est dirigé vers un arbre de moteur (1) appartenant à un moteur d'entraînement de la boîte de vitesses à plusieurs étages.

7. Boîte de vitesses à plusieurs étages selon la revendication 4 ou 5, **caractérisée en ce que** la paroi (31) du carter de la boîte de vitesses est disposée d'un côté du carter (30) de la boîte de vitesses qui fait face à un arbre de moteur (1) appartenant à un moteur d'entraînement de la boîte de vitesses à plusieurs étages.

8. Boîte de vitesses à plusieurs étages selon une des revendications 4 à 7, **caractérisée en ce qu'**un segment en forme de disque d'un support de disques intérieurs (82) du sixième élément de commande (F) est immédiatement adjacent à la paroi (31) du carter de la boîte de vitesses ou à la plaque intermédiaire (32).

9. Boîte de vitesses à plusieurs étages selon une des revendications 4 à 8, **caractérisée en ce que** le servodispositif (83) prévu pour l'actionnement du sixième élément de commande (F) est immédiatement adjacent à la paroi (31) du carter de la boîte de vitesses ou à la plaque intermédiaire (32), ou est intégré dans la paroi (31) du carter de la boîte de vitesses ou dans la plaque intermédiaire (32).

10. Boîte de vitesses à plusieurs étages selon l'une des revendications 4 à 9, **caractérisée en ce que**, dans la direction axiale, le servodispositif (83) du sixième élément de commande (F) est disposé entre la paroi (31) du carter de la boîte de vitesses, ou la plaque intermédiaire (32), et le train épicycloïdal amont (10).

11. Boîte de vitesses à plusieurs étages selon l'une des revendications 4 à 10, **caractérisée en ce que** le servodispositif (83) du sixième élément de commande (F) actionne des disques (81) du sixième élément de commande (F) dans la direction qui est à l'opposé de la paroi (31) du carter de la boîte de vitesses ou de la plaque intermédiaire (32).

12. Boîte de vitesses à plusieurs étages selon l'une des revendications 4 à 10, **caractérisée en ce que** le servodispositif (83) du sixième élément de commande (F) actionne des disques (81) du sixième élément de commande (F) en direction de la paroi (31) du carter de la boîte de vitesses ou de la plaque intermédiaire (32).

13. Boîte de vitesses à plusieurs étages selon l'une des revendications 4 à 12, **caractérisée en ce que**, dans la direction axiale, le servodispositif (83) du sixième élément de commande (F) est disposé entre la paroi (31) du carter de la boîte de vitesses, ou la plaque intermédiaire (32), et un servodispositif (43) prévu pour l'actionnement du premier élément de commande (A), un segment en forme de disque d'un support de disques intérieurs (82) du sixième élément de commande (F) étant en particulier immédiatement adjacent à la paroi (31) du carter de la boîte de vitesses ou à la plaque intermédiaire (32).

14. Boîte de vitesses à plusieurs étages selon la revendication 13, **caractérisée en ce que** le servodispositif (43) et/ou les disques (41) du premier élément de commande (A) est ou sont disposés au moins en partie sur le côté du train épicycloïdal amont (10) qui est éloigné du train épicycloïdal principal (20).

15. Boîte de vitesses à plusieurs étages selon l'une des revendications 4 à 14, **caractérisée en ce que**, dans la direction axiale, le servodispositif (83) du sixième élément de commande (F) est disposé entre la paroi (31) du carter de la boîte de vitesses, ou la plaque intermédiaire (32), et un servodispositif (63) prévu pour l'actionnement du deuxième élément de commande (B).

16. Boîte de vitesses à plusieurs étages selon la revendication 15, **caractérisée en ce qu'**un servodispositif (63) prévu pour l'actionnement du deuxième élément de commande (B) est disposé sur le côté du train épicycloïdal amont (10) qui est éloigné du train épicycloïdal principal (20).

17. Boîte de vitesses à plusieurs étages selon l'une des revendications 1 à 16, **caractérisée en ce que** des disques (81) du sixième élément de commande (F) sont disposés sur un plus grand diamètre que la couronne à denture intérieure (14) du train épicycloïdal amont (10).

18. Boîte de vitesses à plusieurs étages selon l'une des revendications 1 à 17, **caractérisée en ce que** le sixième élément de commande (F) est constitué par un élément de commande de démarrage de la boîte de vitesses à plusieurs étages.

19. Boîte de vitesses à plusieurs étages selon l'une des revendications 1 à 18, **caractérisée en ce qu'**un élément de sortie du premier élément de commande (A) recouvre le cinquième élément de commande (E), au moins en partie dans la direction axiale, en particulier les disques (71) du cinquième élément de commande (E).

20. Boîte de vitesses à plusieurs étages selon l'une des revendications 1 à 19, **caractérisée en ce que** les disques (41) du premier élément de commande (A) sont disposés au moins en partie radialement au-dessus du train épicycloïdal amont (10) et/ou au moins en partie radialement au-dessus des disques (71) du cinquième élément de commande (E).

21. Boîte de vitesses à plusieurs étages selon l'une des revendications 1 à 20, **caractérisée en ce que** l'élément de sortie du premier élément de commande (A) traverse au moins en partie un espace d'embrayage du deuxième élément de commande (B).

22. Boîte de vitesses à plusieurs étages selon la revendication 19, 20 ou 21, **caractérisée en ce que** le premier élément de commande (A) est disposé plus prés du sixième élément de commande (F) que le premier élément de commande (B), en particulier **en ce que** les disques (41) et/ou le servodispositif (43) du premier élément de commande (A) sont disposés plus près du servodispositif (83) du sixième élément de commande (F) que les disques (61) du deuxième élément de commande (B).

23. Boîte de vitesses à plusieurs étages selon l'une des revendications 19 à 22, **caractérisée en ce que**, sur le côté du premier élément de commande (A) qui est dirigé vers le train épicycloïdal principal (20), le deuxième élément de commande (B) est disposé axialement à côté du premier élément de commande (A), en particulier **en ce que**, sur le côté des disques (41) du premier élément de commande (A) qui est dirigé vers le train épicycloïdal principal (20), les disques (61) du deuxième élément de commande (B) sont disposés axialement à côté des disques (41) du premier élément de commande (A).

24. Boîte de vitesses à plusieurs étages selon l'une des revendications 19 à 23, **caractérisée en ce que** les disques (41) et/ou le servodispositif (43) du premier élément de commande (A) sont disposés au moins en partie radialement au-dessous des disques (81) du sixième élément de commande (F).

25. Boîte de vitesses à plusieurs étages selon la revendication 24, **caractérisée en ce que** le servodispositif (43) du premier élément de commande (A) est disposé axialement à côté du train épicycloïdal amont (10).

26. Boîte de vitesses à plusieurs étages selon l'une des revendications 19 à 25, **caractérisée en ce que** le cinquième élément de commande (E) est disposé entre les trains épicycloïdaux amont et principal (10, 20), en position adjacente au train épicycloïdal amont (10) dans la direction axiale, les disques (71) du cinquième élément de commande (E) étant en particulier disposés au moins en partie radialement au-dessous des disques (61) du deuxième élément de commande (B).

27. Boîte de vitesses à plusieurs étages selon l'une des revendications 1 à 20, **caractérisée en ce qu'**un élément de sortie du deuxième élément de commande (B) recouvre radialement le premier élément de commande (A), au moins en partie dans la direction axiale, en particulier les disques (41) du premier élément de commande (A).

28. Boîte de vitesses à plusieurs étages selon la revendication 27, **caractérisée en ce que** le deuxième élément de commande (B) est disposé plus près du sixième élément de commande (F) que le premier élément de commande (A), en particulier **en ce que** les disques (61) et/ou le servodispositif (63) du deuxième élément de commande (B) sont disposés plus près du servodispositif (83) du sixième élément de commande (F) que les disques (41) du premier élément de commande (A).

29. Boîte de vitesses à plusieurs étages selon la revendication 27 ou 28, **caractérisée en ce que**, sur le côté du deuxième élément de commande (B) dirigé vers le train épicycloïdal principal (20), le premier élément de commande (A) est disposé axialement à côté du deuxième élément de commande (B), en particulier **en ce que**, sur le côté des disques (61) du deuxième élément de commande (B) qui est dirigé vers le train épicycloïdal principal (20), les disques (41) du premier élément de commande (A) sont disposés axialement à côté des disques (61) du deuxième élément de commande (B).

30. Boîte de vitesses à plusieurs étages selon la revendication 27, 28 ou 29, **caractérisée en ce que** les disques (61) du deuxième élément de commande (B) sont disposés au moins en partie radialement au-dessus du train épicycloïdal amont (10).

31. Boîte de vitesses à plusieurs étages selon l'une des revendications 27 à 30, **caractérisée en ce que** les disques (61) et/ou le servodispositif (63) du deuxième élément de commande (B) sont disposés au moins en partie radialement au-dessous des disques (81) du sixième élément de commande (F).

32. Boîte de vitesses à plusieurs étages selon la revendication 27, 28 ou 29, **caractérisée en ce que** les disques (61) du deuxième élément de commande (B) sont disposés au moins en partie radialement au-dessus des disques (71) du cinquième élément de commande (E).

33. Boîte de vitesses à plusieurs étages selon la revendication 31 ou 32, **caractérisée en ce que** le servodispositif (63) du deuxième élément de commande (B) est disposé axialement à côté du train épicycloïdal amont (10).

34. Boîte de vitesses à plusieurs étages selon l'une des revendications 27 à 33, **caractérisée en ce que** le cinquième élément de commande (E) est disposé entre les trains épicycloïdaux amont et principal (10, 20), en position adjacente au train épicycloïdal amont (10) dans la direction axiale, les disques (71) du cinquième élément de commande (E) étant en particulier disposés au moins en partie radialement au-dessous des disques (41) du premier élément de commande (A).

35. Boîte de vitesses à plusieurs étages selon l'une des revendications 1 à 18, **caractérisée en ce qu'**un élément d'entrée du cinquième élément de commande (E) recouvre radialement le premier élément de commande (A), au moins en partie dans la direction axiale, en particulier les disques (41) du premier élément de commande (A).

36. Boîte de vitesses à plusieurs étages selon l'une des revendications 1 à 18 ou 35, **caractérisée en ce que** l'élément d'entrée du cinquième élément de commande (E) recouvre radialement le deuxième élément de commande (B), au moins en partie dans la direction axiale, en particulier les disques (61) du deuxième élément de commande (B).

37. Boîte de vitesses à plusieurs étages selon la revendication 35 ou 36, **caractérisée en ce que** le cinquième élément de commande (E) est disposé axialement entre les trains épicycloïdaux amont et principal (10, 20), plus près du train épicycloïdal principal (20) que les premier et deuxième éléments de commande (A, B).

38. Boîte de vitesses à plusieurs étages selon l'une des revendications 35 à 37, **caractérisée en ce que** le cinquième élément de commande (E) est disposé entre le train épicycloïdal amont (10) et le train épicycloïdal principal (20) dans la direction axiale, en position adjacente au train épicycloïdal amont (10).

39. Boîte de vitesses à plusieurs étages selon l'une des revendications 1 à 18, **caractérisée en ce qu'**un élément de sortie du cinquième élément de commande (E) recouvre radialement le premier élément de commande (A), au moins en partie dans la direction axiale, en particulier les disques (41) du premier élément de commande (A).

40. Boîte de vitesses à plusieurs étages selon la revendication 39, **caractérisée en ce que** les premier et cinquième éléments de commande (A, E) sont disposés sur le côté du train épicycloïdal principal (20) qui est éloigné du train épicycloïdal amont (10), le premier élément de commande (A), en particulier ses disques (41), étant disposé axialement entre le cinquième élément de commande (E) et le train épicycloïdal principal (20).

41. Boîte de vitesses à plusieurs étages selon la revendication 39, **caractérisée en ce que** le premier élément de commande (A) est disposé entre les trains épicycloïdaux amont et principal (10, 20), et **en ce que** le cinquième élément de commande (E) est disposé sur le côté du premier élément de commande (A) qui est éloigné du train épicycloïdal principal (20).

42. Boîte de vitesses à plusieurs étages selon l'une des revendications 1 à 41, **caractérisée en ce que** le cinquième élément de commande (E) est disposé au moins en partie au-dessus du train épicycloïdal amont (10) dans la direction radiale, en particulier **en ce que** les disques (71) du cinquième élément de commande (E) sont disposés au moins en partie au-dessus du train épicycloïdal amont (10).

43. Boîte de vitesses à plusieurs étages selon la revendication 42, **caractérisée en ce qu'**un servodispositif (73) prévu pour l'actionnement du cinquième élément de commande (E) est disposé sur le côté du train épicycloïdal amont (10) qui est éloigné du train épicycloïdal principal (20), en particulier en position adjacente au train épicycloïdal amont (10).

44. Boîte de vitesses à plusieurs étages selon l'une des revendications 1 à 33, **caractérisée en ce que** le premier élément de commande (A) est disposé sur le côté du train épicycloïdal amont (10) qui est éloigné du train épicycloïdal principal (20), et **en ce que** le cinquième élément de commande (E) est disposé sur le côté du train épicycloïdal principal (20) qui est éloigné du train épicycloïdal amont (10).

45. Boîte de vitesses à plusieurs étages selon l'une des revendications 1 à 44, **caractérisée en ce que** les disques (41) du premier élément de commande (A) sont disposés entre les disques (71) du cinquième élément de commande (E) et le train épicycloïdal principal (20) dans la direction axiale, en position adjacente aux disques (71) du cinquième élément de commande (E).

46. Boîte de vitesses à plusieurs étages selon la revendication 45, **caractérisée en ce que** les disques (41) du premier élément de commande (A) sont adjacents au train épicycloïdal principal (20) dans la direction axiale.

47. Boîte de vitesses à plusieurs étages selon l'une des revendications 1 à 46, **caractérisée en ce que** le cinquième élément de commande (E) est disposé sur le côté du train épicycloïdal principal (20) qui est éloigné du train épicycloïdal amont (10).

48. Boîte de vitesses à plusieurs étages selon la revendication 47, **caractérisée en ce que** l'arbre d'entrée (3) est enfilé en position centrale à travers le train épicycloïdal principal (20).

49. Boîte de vitesses à plusieurs étages selon la revendication 47 ou 48, **caractérisée en ce que** le cinquième élément de commande (E) est immédiatement adjacent au train épicycloïdal principal (20) dans la direction axiale.

50. Boîte de vitesses à plusieurs étages selon l'une des revendications 1 à 49, **caractérisée en ce que** le troisième élément d'entrée du train épicycloïdal principal (20) est relié à un élément de sortie du cinquième élément de commande (E) par l'intermédiaire d'un troisième arbre (5), **en ce que** le premier élément d'entrée du train épicycloïdal principal (20) est relié à un élément de sortie du premier élément de commande (A) par l'intermédiaire d'un premier arbre planétaire (6), et **en ce que** le deuxième élément d'entrée du train épicycloïdal principal (20) est relié à un élément de sortie du deuxième élément de commande (B) par l'intermédiaire d'un deuxième arbre planétaire (7), le troisième arbre (5) étant enfilé en position centrale à travers le train épicycloïdal principal (20) et le premier arbre planétaire (6) s'étendant entre les trains épicycloïdaux amont et principal (10, 20) coaxialement au-dessus du troisième arbre (5) et/ou monté rotatif sur ce dernier, et le deuxième arbre planétaire (7) s'étendant entre les trains épicycloïdaux amont et principal (10, 20) coaxialement au-dessus du premier arbre planétaire (6) et/ou étant monté rotatif sur ce dernier.

51. Boîte de vitesses à plusieurs étages selon l'une des revendications 1 à 49, **caractérisée en ce que** l'arbre d'entrée (3) est enfilé en position centrale à travers le train épicycloïdal amont (10) et le train épicycloïdal principal (20), **en ce que** l'élément de sortie du premier élément de commande (A) est relié au premier élément d'entrée du train épicycloïdal principal (20) par l'intermédiaire d'un premier arbre planétaire (6), et **en ce que** l'élément de sortie du deuxième élément de commande (B) est relié au deuxième élément d'entrée du train épicycloïdal principal (20) par l'intermédiaire d'un deuxième arbre planétaire (7), le premier arbre planétaire (6) s'étendant entre les trains épicycloïdaux amont et principal (10, 20) coaxialement au-dessus de l'arbre d'entrée (3) et/ou étant monté rotatif sur ce dernier, et le deuxième arbre planétaire (7) s'étendant entre les trains épicycloïdaux amont et principal (10, 20) coaxialement au-dessus du premier arbre planétaire (6) et/ou étant monté rotatif sur ce dernier.

52. Boîte de vitesses à plusieurs étages selon la revendication 50 ou 51, **caractérisée en ce que** le deuxième arbre planétaire (7) est monté rotatif, par l'intermédiaire d'un flasque palier (35) qui est relié rigidement au carter (30) de la boîte de vitesses, ou est constitué par une partie du carter (30) de la boîte de vitesses.

53. Boîte de vitesses à plusieurs étages selon l'une des revendications 1 à 49, **caractérisée en ce que** le troisième élément d'entrée du train épicycloïdal principal (20) est relié à un élément de sortie du cinquième élément de commande (E) par l'intermédiaire d'un troisième arbre (5), **en ce que** le premier élément d'entrée du train épicycloïdal principal (20) est relié à un élément de sortie du premier élément de commande (A) par l'intermédiaire d'un premier arbre planétaire (6), et **en ce que** le deuxième élément d'entrée du train épicycloïdal principal (20) est relié à un élément de sortie du deuxième élément de commande (B) par l'intermédiaire d'un deuxième arbre planétaire (7), le deuxième arbre planétaire (7) étant enfilé en position centrale à travers le train épicycloïdal principal (20) et le premier arbre planétaire (6) s'étendant entre les trains épicycloïdaux amont et principal (10, 20) coaxialement au-dessus du deuxième arbre planétaire (7) et/ou étant monté rotatif sur ce dernier, et le troisième arbre (5) s'étendant entre les trains épicycloïdaux amont et principal (10, 20) coaxialement au-dessus du premier arbre planétaire (6) et/ou étant monté rotatif sur ce dernier.

54. Boîte de vitesses à plusieurs étages selon la revendication 53, **caractérisée en ce que** le troisième arbre (5) est monté rotatif, par l'intermédiaire d'un flasque palier (35) qui est relié rigidement au carter (30) de la boîte de vitesses, ou qui est constitué par une partie du carter (30) de la boîte de vitesses.

55. Boîte de vitesses à plusieurs étages selon la revendication 53 ou 54, **caractérisée en ce que** le troisième élément de commande (C), par l'intermédiaire duquel le deuxième élément d'entrée du train épicycloïdal principal (20) peut être immobilisé, est disposé sur le côté du train épicycloïdal principal (20) qui est éloigné du train épicycloïdal amont (10), en particulier en une position adjacente à une paroi extérieure du carter (30) de la boîte de vitesses qui fait face à la paroi (31) du carter de la boîte de vitesses, ou à un moteur d'entraînement.

56. Boîte de vitesses à plusieurs étages selon l'une des revendications 1 à 55, **caractérisée en ce que** le train épicycloïdal principal (20) est constitué par un train épicycloïdal de Ravigneaux comprenant une petite roue planétaire (21) comme premier élément d'entrée, une grande roue planétaire (22) comme deuxième élément d'entrée, des porte-satellites accouplés (25, 26) comme troisième élément d'entrée ainsi qu'une couronne à denture intérieure (27) comme élément de sortie du train épicycloïdal principal (20).

57. Boîte de vitesses à plusieurs étages selon l'une des revendications 2 à 56, **caractérisée en ce que** la couronne à denture intérieure (14) du train épicycloïdal amont (10) est reliée à un support de disques extérieurs (40) du premier élément de commande (A) et à un support de disques extérieurs (60) du deuxième élément de commande (B).

58. Boîte de vitesses à plusieurs étages selon l'une des revendications 2 à 56, **caractérisée en ce que** la couronne à denture intérieure (14) du train épicycloïdal amont (10) est reliée à un support de disques extérieurs (40) du premier élément de commande (A) et à un support de disques intérieurs (52) du deuxième élément de commande (B).

59. Boîte de vitesses à plusieurs étages selon l'une des revendications 2 à 56, **caractérisée en ce que** la couronne à denture intérieure (14) du train épicycloïdal amont (10) est reliée à un support de disques intérieurs (42) du premier élément de commande (A) et à un support de disques extérieurs (60) du deuxième élément de commande (B).

60. Boîte de vitesses à plusieurs étages selon l'une des revendications 2 à 56, **caractérisée en ce que** la couronne à denture intérieure (14) du train épicycloïdal amont (10) est reliée à un support de disques intérieurs (42) du premier élément de commande (A) et à un support de disques intérieurs (52) du deuxième élément de commande (B).

61. Boîte de vitesses à plusieurs étages selon l'une des revendications 1 à 60, **caractérisée en ce que** l'arbre d'entrée (3) et l'arbre de sortie (4) s'étendent coaxialement entre eux.

62. Boîte de vitesses à plusieurs étages selon l'une des revendications 1 à 60, **caractérisée en ce que** l'arbre d'entrée (3) et l'arbre de sortie (4) s'étendent au moins approximativement selon des axes parallèles.

63. Boîte de vitesses à plusieurs étages selon l'une des revendications 1 à 60, **caractérisée en ce que** l'arbre d'entrée (3) et l'arbre de sortie (4) s'étendent au moins à peu près perpendiculairement entre eux.

64. Boîte de vitesses à plusieurs étages selon la revendication 62 ou 63, **caractérisée en ce qu'**au moins une roue droite (9) ou une roue conique est disposée entre l'élément de sortie du train épicycloïdal principal (20) et l'arbre de sortie (4) dans la direction du flux de force.

65. Boîte de vitesses à plusieurs étages selon la revendication 64, **caractérisée en ce que** la roue droite (9) ou la roue conique est disposée sur le côté du train épicycloïdal principal (20) qui est éloigné du train épicycloïdal amont (10).

66. Boîte de vitesses à plusieurs étages selon la revendication 64, **caractérisée en ce que** la roue droite (9) ou la roue conique est disposée entre les trains épicycloïdaux amont et principal (10, 20).

67. Boîte de vitesses à plusieurs étages selon la revendication 64, 65 ou 66, **caractérisée en ce que** la roue droite (9) ou la roue conique est immédiatement adjacente au train épicycloïdal principal (20) dans la direction axiale.

68. Boîte de vitesses à plusieurs étages selon la revendication 64 ou 65, **caractérisée en ce que** le cinquième élément de commande (E) est disposé axialement entre la roue droite (9) ou la roue conique et le train épicycloïdal principal (20), l'élément de sortie du train épicycloïdal principal (20) recouvrant radialement le cinquième élément de commande (E) dans la direction axiale.

69. Boîte de vitesses à plusieurs étages selon l'une des revendications 64 à 68, **caractérisée en ce que** la roue droite (9) ou la roue conique est montée rotative par l'intermédiaire d'un flasque palier (35, 37) qui est relié rigidement au carter (30) de la boîte de vitesses ou qui constitue une partie du carter (30) de la boîte de vitesses, et est adjacent à la roue droite (9) ou à la roue conique dans la direction axiale, le flasque palier (35, 37) étant disposé sur le côté de la roue droite (9) ou de la roue conique qui est éloigné du train épicycloïdal principal (20) en étant adjacent à un segment en forme de disque de l'élément de sortie du deuxième élément de commande (B) qui est relié au deuxième arbre planétaire (7) et/ou adjacent à un troisième élément de commande (C) par l'intermédiaire duquel l'élément de sortie du deuxième élément de commande (B) peut être immobilisé.

70. Boîte de vitesses à plusieurs étages selon l'une des revendications 64 à 68, c**caractérisée en ce que** la roue droite (9) ou la roue conique est montée rotative par l'intermédiaire d'un flasque palier (35), qui est relié rigidement au carter (30) de la boîte de vitesses ou qui constitue une partie du carter (30) de la boîte de vitesses, et qui est adjacent à la roue droite (9) ou à la roue conique dans la direction axiale, le flasque palier (35) étant disposé sur le côté de la roue droite (9) ou de la roue conique qui est éloigné du train épicycloïdal principal (20) en étant adjacent à un segment en forme de disque de l'élément de sortie du cinquième élément de commande (E) qui est relié au troisième arbre (5) et/ou adjacent à un quatrième élément de commande (D) par l'intermédiaire duquel l'élément de sortie du cinquième élément de commande (E) peut être immobilisé.

71. Boîte de vitesses à plusieurs étages selon l'une des revendications 63 à 69, **caractérisée en ce que** la roue droite (9) ou la roue conique est montée rotative par l'intermédiaire d'un flasque palier (35) qui est relié rigidement au carter (30) de la boîte de vitesses ou qui constitue une partie du carter (30) de la boîte de vitesses et est adjacent à la roue droite (9) ou à la roue conique dans la direction axiale, le flasque palier (35) étant disposé axialement entre le train épicycloïdal principal (20) et la roue droite (9) ou la roue conique.

72. Boîte de vitesses à plusieurs étages selon l'une des revendications 63 à 67, **caractérisée en ce que** la roue droite (9) ou la roue conique est montée rotative par l'intermédiaire d'un flasque palier (35, 37) qui est relié rigidement au carter (30) de la boîte de vitesses ou qui constitue une partie du carter (30) de la boîte de vitesses et est adjacent à la roue droite (9) ou à la roue conique dans la direction axiale, le flasque palier (35, 37) étant disposé sur le côté de la roue droite (9) ou de la roue conique qui est éloigné du train épicycloïdal principal (20) et formant une paroi extérieure du carter (30) de la boîte de vitesses.
